# EUROPEAN PATENT SPECIFICATION

(11) **EP 3 395 647 B1**
(45) Date of publication and mention of the grant of the patent: **21.10.2020**
(21) Application number: 17747535.7
(22) Date of filing: 02.02.2017
(51) Int. Cl.: B62D 1/184, B62D 1/19

(54) **STEERING APPARATUS**
LENKVORRICHTUNG
APPAREIL DE DIRECTION

(30) Priority: 04.02.2016 JP 2016020278; 12.08.2016 JP 2016158415; 24.10.2016 JP 2016207912
(43) Date of publication of application: 31.10.2018
(73) Proprietor: NSK Ltd., Tokyo 141-8560 (JP)
(72) Inventor: KUROKAWA, Yoshifumi, Maebashi-shi Gunma 371-8527 (JP)
(74) Representative: Mewburn Ellis LLP
(86) International application number: PCT/JP2017/003839
(87) International publication number: WO 2017/135384

(56) References cited:
- EP-A1- 0 559 523
- EP-A1- 2 085 291
- EP-A2- 2 505 456
- WO-A1-2014/163112
- FR-A1- 2 714 647
- JP-A- 2005 225 298
- JP-A- 2009 149 303
- JP-A- 2011 148 487
- JP-A- 2014 058 200
- JP-A- 2014 111 451
- JP-A- 2014 184 960
- JP-A- 2014 223 855
- JP-A- 2015 140 021
- US-A1- 2006 028 010
- US-B1- 6 357 318

## Description

### TECHNICAL FIELD

The present invention relates to improvements on a steering device for applying a steering angle to steered wheels of a vehicle such as an automobile.

### RELATED ART

As disclosed in Patent Document 1, for example, a steering device for automobile has been known. As shown in FIG. 52, the steering device is configured to transmit rotation of a steering wheel 1 to an input shaft 3 of a steering gear unit 2, and to push and pull a pair of left and right tie-rods 4, 4 in association with rotation of the input shaft 3, thereby applying a steering angle to wheels (front wheels).

The steering wheel 1 is supported and fixed to a rear end portion of a steering shaft 5. The steering shaft 5 is rotatably supported to a cylindrical steering column 6 with being inserted in the steering column 6 in an axial direction. Also, a front end portion of the steering shaft 5 is connected to a rear end portion of an intermediate shaft 8 via a universal joint 7. A front end portion of the intermediate shaft 8 is connected to the input shaft 3 via a separate universal joint 9. Also, in the shown example, an electric assist device 30 configured to reduce a force, which is necessary to operate the steering wheel 1, by using an electric motor 10 as an auxiliary power source is also incorporated.

Meanwhile, in the specification and the claims, the front and rear direction, the width direction (right and left direction) and the vertical direction indicate the front and rear direction, the width direction (right and left direction) and the vertical direction of a vehicle, unless otherwise specified.

The shown steering device includes a tilt mechanism for adjusting a vertical position of the steering wheel 1 and a telescopic mechanism for adjusting a position in a front and rear position, in correspondence to a physique and a driving posture of a driver. In order to configure the tilt mechanism, the steering column 6 is supported to a vehicle body 11 so that it can be swingably displaced about a pivot 11 arranged in a width direction. Also, in order to configure the telescopic mechanism, the steering column 6 has such a structure that a rear outer column 13 and a front inner column 14 are combined to be expanded and contracted in a telescopic shape. Also, the steering shaft 5 has such a structure that a rear outer shaft 15 and a front inner shaft 16 are combined by spline engagement or the like so as to transmit torque and to be expanded and contracted. Also, a distance bracket 17 fixed to a part near a rear end of the outer column 13 is supported to a support bracket 18 supported and fixed to the vehicle body 11 so that it can be displaced in the vertical direction and in the front and rear direction relative.

In the case of the steering device configured to adjust a position of the steering wheel, it has been considered to switch the steering device by using a clamp mechanism between a state in which a position of the steering wheel can be adjusted and a state in which the steering wheel can be kept at an adjusted position. A specific structure of the clamp mechanism is described with reference to FIG. 53 disclosed in Patent Document 2.

In the shown structure, a lower surface of the outer column 13 is formed with a slit 19, and the distance bracket 17 is provided at a part at which the slit 19 is sandwiched from both sides in the width direction. Also, a pair of side plate parts 20a, 20b configuring the distance bracket 17 is formed with a pair of long holes 21, 21 for telescopic adjustment, which is long in the front and rear direction. In the meantime, a pair of support plate parts 22a, 22b, which is arranged at both sides of both the side plate parts 20a, 20b in the width direction, of the support bracket 18 supported and fixed to the vehicle body is formed with long holes 23, 23 for tilt adjustment, which are long in the vertical direction. An adjustment rod 24 is inserted in the long holes 23, 23 for tilt adjustment and the long holes 21, 21 for telescopic adjustment in the width direction.

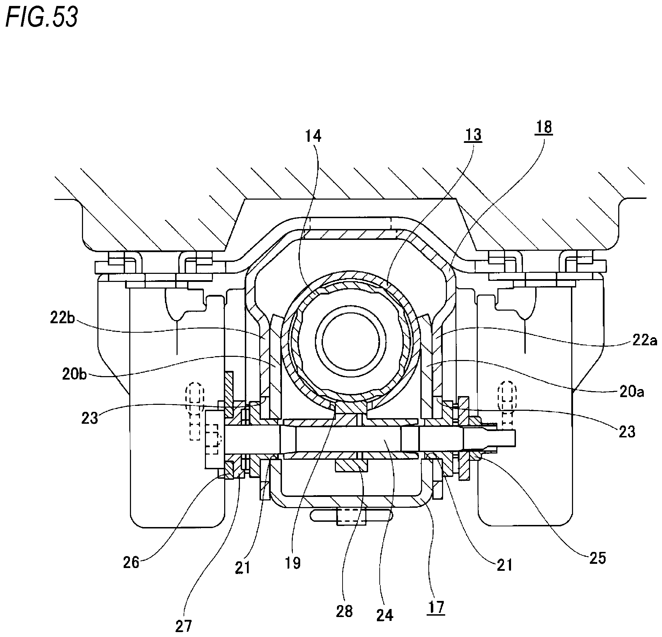

Also, a nut 25 is screwed to a leading end portion of the adjustment rod 24, which protrudes from an outer surface of one (right, in FIG. 53) support plate part 22a of the pair of support plate parts 22a, 22b in the width direction. In contrast, an adjustment lever 26 is fixed to a base end portion of the adjustment rod 24, which protrudes an outer surface of the other (left, in FIG. 53) support plate part 22b of the pair of support plate parts 22a, 22b in the width direction. Also, a cam device 27 is provided between the adjustment lever 26 and the outer surface of the other support plate part 22b in the width direction. Based on an operation of the adjustment lever 26, a dimension of the cam device 27 in the width direction can be expanded and contracted.

Also, an eccentric cam 28 is externally fitted and fixed around an intermediate part of the adjustment rod 24 so as not to be relatively rotatable. The eccentric cam 28 is introduced into the outer column 13 through the slit 19.

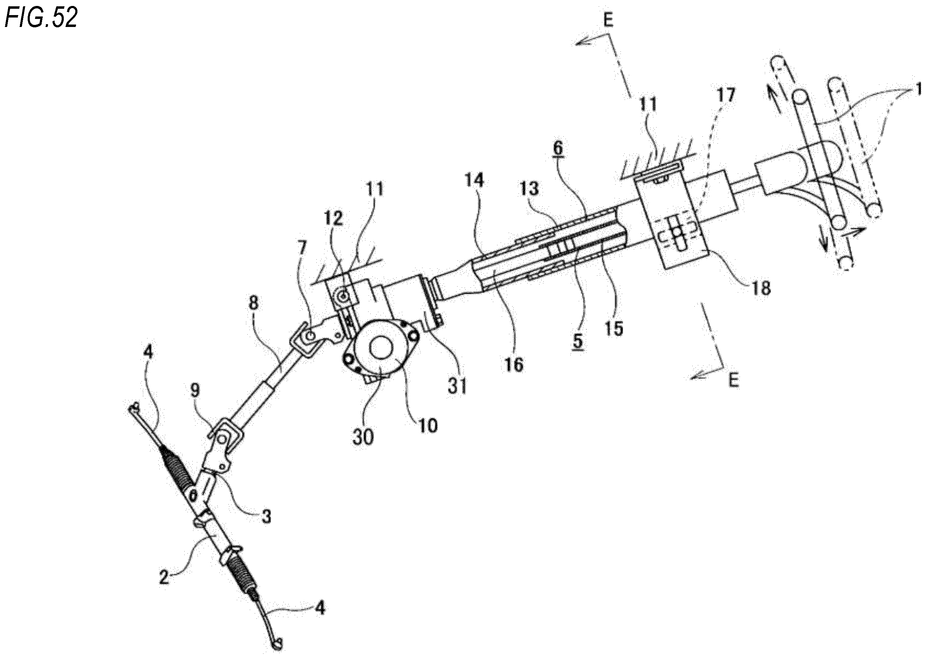

When adjusting a position of the steering wheel 1 (refer to FIG. 52) in the vertical direction or in the front and rear direction, the adjustment lever 26 is rotated in a predetermined direction to contract the dimension of the cam device 27 in the width direction. Thereby, a frictional force that is applied between inner surfaces of both the support plate parts 22a, 22b in the width direction and the outer surfaces of both the side plate parts 20a, 20b in the width direction is reduced. Also, a gap is interposed between an outer peripheral surface of the eccentric cam 28 and an outer peripheral surface of the inner column 14. As a result, a position of the steering wheel 1 can be adjusted within a range in which the adjustment rod 24 can be displaced in the long holes 23, 23 for tilt adjustment and the long holes 21, 21 for telescopic adjustment.

In contrast, after adjusting the position of the steering wheel 1, the adjustment lever 26 is rotated in an opposite direction to the predetermined direction to expand the dimension of the cam device 27 in the width direction. Thereby, the frictional force that is applied between the inner surfaces of the support plate parts 22a, 22b in the width direction and the outer surfaces of the side plate parts 20a, 20b in the width direction is increased. Also, the outer peripheral surface of the eccentric cam 28 is pressed toward the outer peripheral surface of the inner column 14, so that the outer peripheral surface of the inner column 14 and an inner peripheral surface of the outer column 13 are frictionally engaged. As a result, the steering wheel 1 is kept at the adjusted position.

According to the steering device as described above, the distance bracket 17 is kept to the support bracket 18 only by the frictional force that is applied between the inner surfaces in the width direction of both the support plate parts 22a, 22b to be elastically deformed inward in the width direction and the outer surfaces of both the side plate parts 20a, 20b in the width direction. For this reason, there are rooms for improvement on the force of holding the distance bracket 17 by the support bracket 18.

EP 2 505 456 A discloses a steering device which includes: an inner column; an outer column that includes a left-right pair of outer column half bodies having holding surface portions formed on respective inner surface sides thereof. The two holding surface portions together constitute a holding inner peripheral surface for holding an outer peripheral surface of the inner column. The steering device also includes a pivot bracket, a fixing bracket and a clamping tool. EP 2 505 456 discloses the features of the preamble of claim 1.

### Citation List

### Patent Documents

Patent Document 1: JP-A-2014-104786
Patent Document 2: JP-A-2010-30579

### SUMMARY OF THE INVENTION

### Problems To Be Solved By the Invention

The present invention has been made in view of the above situations, and is to implement a structure capable of improving a force of holding a distance bracket by a support bracket.

### Means for Solving Problems

A steering device of the present invention is as set out in claim 1. The steering device includes a steering column, a support bracket, a distance bracket, an adjustment rod, a pair of pressing parts, and an expansion/contraction device.

The steering column has a hollow tube shape such as a circular cylinder shape, a square tube or the like, and is configured to rotatably support therein a steering shaft.

The support bracket is supported and fixed to a vehicle body, and has a pair of support plate parts arranged at both sides of the steering column in a width direction.

The distance bracket has a pair of side plate parts arranged between an outer peripheral surface of the steering column and inner surfaces of the pair of support plate parts in the width direction.

The adjustment rod is provided with being inserted in a first through-hole provided in at least one of the pair of support plate parts and is provided with being inserted in a second through-hole provided in at least one of the pair of side plate parts.

The pair of pressing parts is provided at both end portions of the adjustment rod, and protrudes from outer surfaces of the pair of support plate parts.

The expansion/contraction device is configured to expand and contract an interval between the pair of pressing parts.

Particularly, the steering device of the present invention includes a column-pressing part configured to press the steering column in a direction of getting away from the adjustment rod with respect to a vertical direction, in association with rotation of the adjustment rod.

Also, at least one of the pair of side plate parts is provided with a widened part which protrudes inward in the width direction and which is at an opposite side to the adjustment rod (the column-pressing part) in the vertical direction with a central axis of the steering column being interposed between the widened part and the adjustment rod. An inner surface of the widened part in the width direction is inclined linearly or curvedly toward an inner side in the width direction as being farther from the adjustment rod in the vertical direction. The widened part is pushed and enlarged outward in the width direction by the steering column configured to be displaced in the direction of getting away from the adjustment rod.

Also, when implementing the steering device of the present invention, for example, the steering column may include an outer column and an inner column fitted to an inner diameter-side of the outer column to be axially displaceable, the distance bracket may be provided integrally with a part of the outer column, and the inner column may be sandwiched between the pair of side plate parts in the width direction.

Also, when implementing the steering device of the present invention, for example, the distance bracket may be provided with an upper slit and a lower slit between the pair of side plate parts, and the upper and lower slips are open upper and lower parts of the inner column between the pair of side plate parts.

Also, when implementing the steering device of the present invention, for example, axial lengths of the upper and lower slits may be made longer than axial lengths of the pair of support plate parts of the support bracket.

Also, when implementing the steering device of the present invention, for example, an elasticity continuity part is formed to be elastically deformable in the width direction and to connect end portions of the pair of side plate parts with being displaceable in the vertical direction and in the width direction, and the end portions are opposite to the adjustment rod in the vertical direction with respect to the central axis of the steering column.

Also, when implementing the steering device of the present invention, for example, the pair of side plate parts is provided with the widened part, respectively. An interval between inner surfaces of the widened parts in the width direction is smaller as being farther from the adjustment rod.

When implementing the present invention, for example, inclination angles of the inner surfaces of the widened parts may be different from each other or the same in the width direction based on a virtual plane perpendicular to a central axis of the adjustment rod.

When implementing the steering device of the present invention, for example, the column-pressing part may be provided below the central axis of the steering column with respect to the vertical direction, and the widened part may be provided above the central axis of the steering column with respect to the vertical direction.

Also, when implementing the steering device of the present invention, for example, a part (for example, a part in alignment with the central axis of the steering column in the vertical direction), which is adjacent to the adjustment rod-side of the widened part in the vertical direction, of the inner surface of the side plate part in the width direction may be provided with a concave part which is concave outward in the width direction and is in non-contact with the outer peripheral surface of the steering column.

Also, the column-pressing part is provided to at least one of the pair of side plate parts configuring the distance bracket.

Specifically, the column-pressing part protrudes inward in the width direction at a part (for example, a part adjacent to the steering column-side of a part having the second through-hole formed therein in the vertical direction), which is located between the central axis of the steering column and the second through-hole in the vertical direction, of the side plate part.

In this case, an inner surface of the column-pressing part in the width direction is inclined linearly or curvedly toward an outer side in the width direction as being farther from the adjustment rod in the vertical direction.

When implementing the present invention, for example, the pair of side plate parts may be provided with the column-pressing part, respectively. In this case, an interval between the inner surfaces of both the column-pressing parts in the width direction is greater as being farther from the adjustment rod in the vertical direction.

Also, when implementing the present invention, for example, inclination angles of the inner surfaces of both the column-pressing parts are different from each other or the same in the width direction based on the virtual plane perpendicular to the central axis of the adjustment rod.

Also, an inclination angle of the inner surface of the widened part in the width direction is different from an inclination angle of the inner surface of the column-pressing part in the width direction, based on the virtual plane perpendicular to the central axis of the adjustment rod.

For example, the inclination angle of the inner surface of the widened part in the width direction may be smaller than the inclination angle of the inner surface of the column-pressing part in the width direction. To the contrary, the inclination angle of the inner surface of the widened part in the width direction may be greater than the inclination angle of the inner surface of the column-pressing part in the width direction.

Also, when implementing the steering device of the present invention, for example, the column-pressing part may be configured by an eccentric cam which is provided (for example, integrally or supported so as not to be relatively rotatable) around the adjustment rod and a distance from a center thereof to an outer peripheral surface changes in accordance with a circumferential position.

In the meantime, when implementing the present invention, for example, the column-pressing part which is to be provided to the side plate part and the column-pressing part (the eccentric cam) that is to be provided to the adjustment rod may be provided to only one part or to both the parts.

Also, when implementing the steering device of the present invention, for example, the inner column may be formed to have a polygonal tube shape (for example, 6, 8, 10, 12, 14 angled tube shapes may be adopted and the present invention is not limited to a regular polygonal tube shape). When adopting this configuration, the inner surface of the widened part in the width direction or the inner surface of the column-pressing part in the width direction may be configured as a flat surface shape, respectively, so that the inner surface of the widened part in the width direction or the inner surface of the column-pressing part in the width direction and an outer peripheral surface (outer periphery side surface) of the inner column in the width direction are surface-contacted to each other.

Alternatively, the inner column may be formed to have a circular cylinder shape.

Also, when implementing the steering device of the present invention, for example, the outer column may be arranged at a front side (lower side), the inner column may be arranged at a rear side (upper side) and the distance bracket may be integrally provided at a rear end portion of the outer column.

In this case, for example, the outer column may be formed integrally with a gear housing configuring an electric assistant device arranged in front of the outer column.

Also, when implementing the present invention, for example, the outer column may be provided with a pair of column side plates spaced in the width direction and extending in a front and rear direction, and a front end portion of each column side plate may be coupled to the gear housing and each side plate part may be integrally provided at a rear end portion of each column side plate.

Also, when implementing the present invention, for example, the rear end portions of the pair of side plate parts (the column side plates) may be coupled in the width direction by a coupling part arranged to span the inner column.

Alternatively, the rear end portions of the pair of side plate parts (the column side plates) may be spaced from each other without being coupled in the width direction.

Also, when implementing the steering device of the present invention, for example, the inner column may be arranged at a front side (lower side), the outer column may be arranged at a rear side (upper side) and the distance bracket may be integrally provided at a front end portion of the outer column.

Also, when implementing the steering device of the present invention, for example, the support bracket is provided with a pair of attachment plate parts bent outward in the width direction at upper end portions of the pair of support plate parts. A reinforcement rib may be provided to bridge (bent parts, corner parts) between at least one of the pair of attachment plate parts and the corresponding support plate part hanging down (for example, bent at a substantial right angle) from an inner end portion of the one attachment plate part in the width direction.

In other words, the reinforcement rib may be provided to at least one of the bent part between one attachment plate part arranged at one side in the width direction and the support plate part and the bent part between the other attachment plate part arranged at the other side in the width direction and the support plate part.

When the reinforcement rib as described above is provided, the reinforcement rib may be provided integrally with the support bracket or may be fixed to the support bracket as a separate member by welding or the like. For example, when the support bracket is made by subjecting a light alloy material such as aluminum-based alloy to extrusion, drawing, die-casting or the like, the reinforcement rib may be made integrally with the support bracket. In contrast, when the support bracket is made by press working (punching, bending or the like) a metal plate, the reinforcement rib may be fixed to the support bracket, as a separate member.

When the reinforcement rib is provided, a shape of the reinforcement rib is not particularly limited. For example, a flat plate shape, a triangular prism shape (for example, a right-angled triangular prism shape), a circular cylinder shape (for example, a quarter-circular cylinder shape), a prismatic column shape or the like may be adopted.

Also, the reinforcement rib may be made to have a hollow structure of which both sides in the front and rear direction are opened.

Alternatively, the reinforcement rib may be made to have a solid structure.

Also, the reinforcement rib may be provided with a thinned part of which only an upper part (or only a lower part) is opened.

Also, a formation range of the reinforcement rib is not particularly limited. For example, the reinforcement rib may be formed at a part (a range in alignment with the first through-hole in the front and rear direction), which is immediately above the first through-hole formed in the support plate part, of the bent part between the attachment plate part and the support plate part. Also, the reinforcement rib may be provided continuously or intermittently over an entire length of the bent part in the front and rear direction or may be provided at a part of the bent part in the front and rear direction.

Also, the reinforcement rib and the widened part may be provided at positions in alignment with each other in the vertical direction (overlapping with each other in the width direction).

Also, when implementing the steering device of the present invention, for example, one support plate part of both the support plate parts may be made to further hang down than the other support plate part and only the one support plate part may be formed with the first through-hole. In this case, a lower end portion of the other support plate part may be located at a position higher than the adjustment rod.

Also, when implementing the present invention, for example, one side plate part of both the side plate parts may be made to further hang down than the other side plate part and only the one side plate part may be formed with the second through-hole. In this case, a lower end portion of the other side plate part may be located at a position higher than the adjustment rod.

Also, when implementing the steering device of the present invention, for example, a spacer member may be arranged between facing surfaces of the pair of support plate parts and the pair of side plate parts of the distance bracket and/or between facing surfaces of the steering column and the pair of side plate parts.

### Effects of the Invention

According to the steering device of the present invention configured as described above, it is possible to improve a force of holding the distance bracket by the support bracket.

That is, according to the present invention, when keeping the steering wheel at an adjusted position, the steering column is pressed and displaced in the direction of getting away from the adjustment rod with respect to the vertical direction by the column-pressing part. The widened part provided at the side plate part configuring the distance bracket is pushed and enlarged outward in the width direction by the steering column. Thereby, the widened part is sandwiched between the inner surface in the width direction of the support plate part configuring the support bracket and the outer peripheral surface of the steering column. Here, since the inner surface of the widened part in the width direction is inclined inward in the width direction toward the displacement direction of the steering column (the direction of getting away from the adjustment rod), it is possible to firmly sandwich the widened part between the inner surface of the support plate part in the width direction and the outer peripheral surface of the steering column by a wedge effect. Therefore, according to the present invention, it is possible to improve the force of holding the distance bracket by the support bracket.

### BRIEF DESCRIPTION OF THE DRAWINGS

FIG. 1 is a perspective view of a steering device, depicting a first (reference) arrangement outside the scope of the present invention.
FIG. 2 is a perspective view depicting the first (reference) arrangement, in which a support bracket of FIG. 1 is omitted.
FIG. 3 is a perspective view depicting the first (reference) arrangement, in which an outer column having a distance bracket and a gear housing integrally provided thereto is taken out.
FIG. 4 is a side view depicting the first (reference) arrangement.
FIG. 5 is a sectional view taken along a line A-A of FIG. 1, depicting the first (reference) arrangement.
FIG. 6 is a view equivalent to FIG. 5, depicting a modified embodiment of the first (reference) arrangement.
FIG. 7 is a view equivalent to FIG. 3, depicting a second (reference) arrangement outside the scope of the present invention.
FIG. 8 is a perspective view depicting a third (reference) arrangement outside the scope of the present invention, in which an outer column having a distance bracket integrally provided thereto is taken out.
FIG. 9 is a view equivalent to FIG. 5, depicting a fourth (embodiment) arrangement of the present invention.
FIGS. 10A and 10B are views equivalent to FIG. 5, depicting a fifth (reference) arrangement outside the scope of the present invention.
FIG. 11 is a view equivalent to FIG. 5, depicting a sixth (embodiment) arrangement of the present invention.
FIG. 12 is a view equivalent to FIG. 5, depicting a seventh (embodiment) arrangement of the present invention.
FIG. 13 is a view equivalent to FIG. 5, depicting an eighth (embodiment) arrangement of the present invention.
FIG. 14 is a view equivalent to FIG. 5, depicting a ninth (embodiment) arrangement of the present invention.
FIG. 15 is a view equivalent to FIG. 5, depicting a tenth (reference) arrangement outside the scope of the present invention.
FIG. 16 is a view equivalent to FIG. 5, depicting an eleventh (embodiment) arrangement of the present invention.
FIG. 17 is a view equivalent to FIG. 5, depicting a twelfth (embodiment) arrangement of the present invention.
FIG. 18 is a view equivalent to FIG. 5, depicting a thirteenth (embodiment) arrangement of the present invention.
FIG. 19 is a view equivalent to FIG. 5, depicting a fourteenth (embodiment) arrangement of the present invention.
FIG. 20 is a view equivalent to FIG. 5, depicting a fifteenth (embodiment) arrangement of the present invention.
FIG. 21 is a view equivalent to FIG. 5, depicting a sixteenth (embodiment) arrangement of the present invention.
FIG. 22 is a view equivalent to FIG. 5, depicting a seventeenth (embodiment) arrangement of the present invention.
FIG. 23 is a view equivalent to FIG. 5, depicting an eighteenth (embodiment) arrangement of the present invention.
FIG. 24 is a view equivalent to FIG. 5, depicting a nineteenth (embodiment) arrangement of the present invention.
FIG. 25 is a view equivalent to FIG. 5, depicting a twentieth (embodiment) arrangement of the present invention.
FIG. 26 is a view equivalent to FIG. 5, depicting a twenty first (embodiment) arrangement of the present invention.
FIG. 27 is a view equivalent to FIG. 5, depicting a twenty second (embodiment) arrangement of the present invention.
FIG. 28 is a pictorial sectional view taken along a line B-B of FIG. 27, depicting the twenty second (embodiment) arrangement.
FIG. 29 is a view equivalent to FIG. 5, depicting a twenty third (reference) arrangement outside the scope of the present invention.
FIG. 30 is a view equivalent to FIG. 5, depicting a twenty fourth (reference) arrangement outside the scope of the present invention.
FIG. 31 is a view equivalent to FIG. 5, depicting a modified (reference) arrangement of the twenty fourth (reference) arrangement.
FIG. 32 is a view equivalent to FIG. 5, depicting a twenty fifth (reference) arrangement outside the scope of the present invention.
FIG. 33 is a view equivalent to FIG. 5, depicting a twenty sixth (reference) arrangement outside the scope of the present invention.
FIG. 34 depicts an inclined state of the distance bracket, in the twenty sixth (reference) arrangement.
FIG. 35A depicts a first modified embodiment of the twenty sixth embodiment, and FIG. 35B depicts a second modified (reference) arrangement of the twenty sixth (reference) arrangement.
FIG. 36 is a view equivalent to FIG. 5, depicting a twenty seventh (reference) arrangement outside the scope of the present invention.
FIG. 37 is a perspective view depicting an attached state of other spacer member, in the twenty seventh (reference) arrangement.
FIG. 38 is an enlarged perspective view depicting the attached state of the other spacer member, in the twenty seventh (reference) arrangement.
FIG. 39 is a view equivalent to FIG. 5, depicting a twenty eighth (reference) arrangement outside the scope of the present invention.
FIG. 40 is a perspective view depicting an attached state of other spacer member, in the twenty eighth (reference) arrangement.
FIG. 41 is an enlarged perspective view depicting the attached state of the other spacer member, in the twenty eighth (reference) arrangement.
FIG. 42 is a view equivalent to FIG. 41, depicting a modified (reference) arrangement of the twenty eighth (reference) arrangement.
FIG. 43 is a perspective view depicting a steering device of a twenty ninth (embodiment) arrangement of the present invention.
FIG. 44 is a side view depicting the twenty ninth (embodiment) arrangement.
FIG. 45 is a side view depicting the twenty ninth (embodiment) arrangement, in which a steering shaft, a steering column, and a distance bracket are taken out.
FIG. 46 is a sectional view taken along a line C-C of FIG. 44, depicting the twenty ninth (embodiment) arrangement.
FIG. 47 is an enlarged view of a D part of FIG. 46, depicting the twenty ninth (embodiment) arrangement.
FIG. 48 is a view seen from the right of FIG. 44, depicting a steering device of a thirtieth (embodiment) arrangement of the present invention.
FIG. 49 is a view equivalent to a right half part of FIG. 46, depicting a steering device of a thirty first (embodiment) arrangement of the present invention.
FIG. 50 is a view similar to FIG. 46, depicting a thirty second (embodiment) arrangement.
FIG. 51A is a side view depicting a structure of a steering device of a thirty third (embodiment) arrangement, and FIG. 51B is a side view depicting a structure of the steering device of the twenty ninth to thirty second (embodiment) arrangements.
FIG. 52 is a partially cut side view depicting an example of a steering device of the related art.
FIG. 53 is a sectional view taken along a line E-E of FIG. 52, depicting a clamp mechanism of the related art.

### DETAILED DESCRIPTION OF EMBODIMENTS

### [First (reference) arrangement]

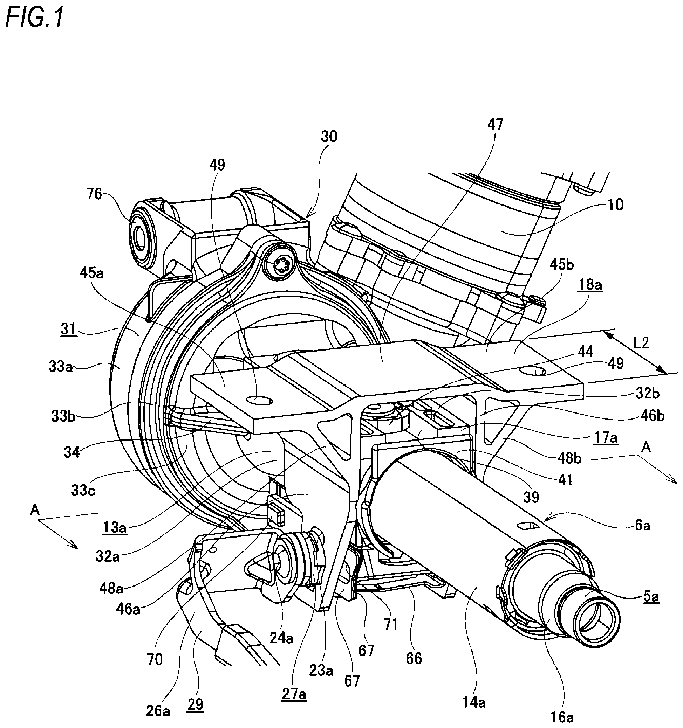

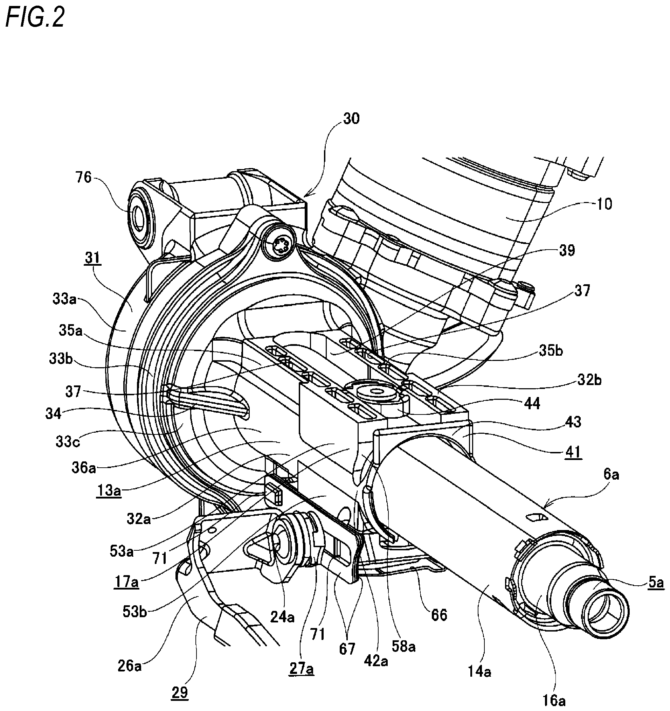

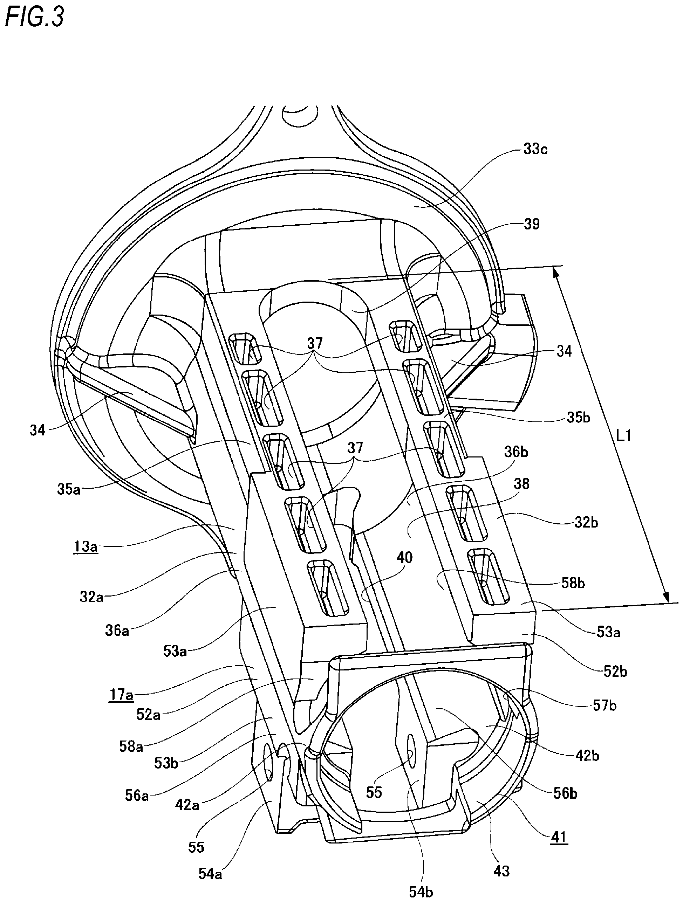

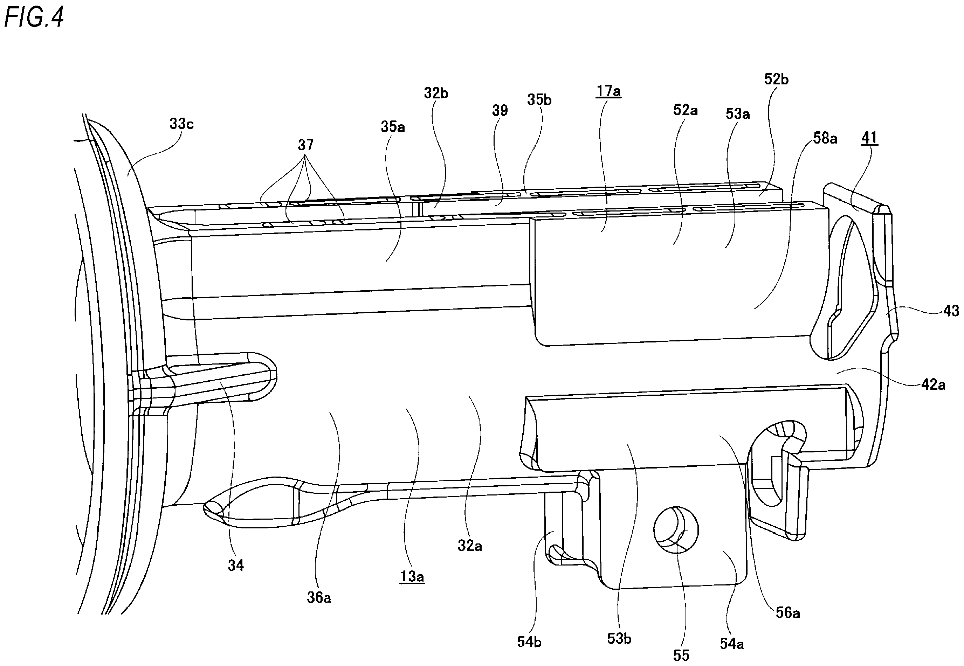

A first (reference) arrangement, outside the scope of the present invention is described with reference to FIGS. 1 to 5. A steering device for automobile of the first (reference) arrangement is to adjust a position of a steering wheel 1 (refer to FIG. 52) in a front and rear direction and in a vertical direction, and includes a steering column 6a, a steering shaft 5a, a support bracket 18a, a distance bracket 17a, and a clamp mechanism 29 including an adjustment rod 24a and the like.

The steering column 6a is configured to expand and contract an entire length thereof by fitting a front part of an inner column 14a arranged at a rear side (upper side) to an inner diameter-side of a rear part of an outer column 13a arranged at a front side (lower side) so as to be relatively displaceable in an axial direction.

The outer column 13a is made by die-casting light alloy such as aluminum-based alloy and magnesium-based alloy, for example, and is provided integrally with a gear housing 31 (a rear housing element 33c) configuring an electric assistant device 30 arranged at the front and a distance bracket 17a arranged around a rear end portion.

In the first (reference) arrangement, the outer column 13a is configured by a pair of column side plates 32a, 32b spaced in a width direction and extending in a front and rear direction. The column side plates 32a, 32b are configured by upright wall parts 35a, 35b provided at upper parts thereof and having a substantially rectangular flat plate shape, and partially cylindrical parts 36a, 36b provided within a range from lower to intermediate parts and having a substantially partially circular arc shape, which is a sectional shape with respect to a virtual plane perpendicular to a central axis of the outer column 13a. In other words, each of the upright wall parts 35a, 35b is provided to be upright from an upper end portion of each of the partially cylindrical parts 36a, 36b.

An upper surface of each of the upright wall parts 35a, 35b is formed with a plurality of (five, in the shown example) thinned parts (concave parts) 37, 37 having a rectangular section and spaced in the front and rear direction. Also, an inner surface of each of the partially cylindrical parts 36a, 36b in the width direction is provided with a holding concave part 38 having a concave circular arc shape and a radius of curvature slightly greater than a radius of curvature of an outer peripheral surface of the inner column 14a.

A front end portion of each of the column side plates 32a, 32b configured as described above is coupled to a circular disc-shaped rear housing element (cover) 33c of front, intermediate and rear housing elements 33a, 33b, 33c configuring the gear housing 31. Thereby, the column side plates 32a, 32b are provided integrally with the rear housing element 33c. In other words, each of the column side plates 32a, 32b is supported to the rear housing element 33c in a cantilever manner. Also, reinforcement parts 34, 34 having a substantially triangular plate shape are provided between parts, which are aligned with the central axis of the outer column 13a in the vertical direction, of outer surfaces in the width direction of the front end portions of the column side plates 32a, 32b and a rear surface of the rear housing element 33c.

Also, a part of which three directions are surrounded by the upright wall parts 35a, 35b (the upper end portions of the partially cylindrical parts 36a, 36b) and the rear housing element 33c is provided with an upper slit 39 extending in the front and rear direction. Likewise, a part of which three directions are surrounded by lower end portions of the partially cylindrical parts 36a, 36b and the rear housing element 33c is provided with a lower slit 40 extending in the front and rear direction. A rear end portion of each of the upper and lower slits 39, 40 opens rearward.

An axial length L1 of the upper and lower slits 39, 40 is set to be longer than an axial length L2 (refer to FIG. 1) of support plate parts 46a, 46b of the support bracket 18a, which will be described later.

Also, rear end portions of the column side plates 32a, 32b (side plate parts 52a, 52b, which will be described later) are coupled to each other in the width direction by an annular coupling part 41. The annular coupling part 41 has a pair of arm parts 42a, 42b and an annular part 43. Front end portions of the arm parts 42a, 42b are coupled to parts, which are aligned with the central axis of the outer column 13a in the vertical direction, of rear end faces of the column side plates 32a, 32b (side plate parts 52a, 52b). Also, rear end portions of the arm parts 42a, 42b are coupled to both end portions of the annular part 43 in the width direction. In this state, a central axis of the annular part 43 is made to coincide with the central axis of the outer column 13a. An inner peripheral surface of the annular part 43 has a partially cylindrical surface shape and the inner column 14a can be inserted therein. For this reason, an upper half part of the annular part 43 is arranged to span above the inner column 14a in the width direction, and a lower half part of the annular part 43 is arranged to span below the inner column 14a in the width direction. In the meantime, any one of the upper half part and the lower half part of the annular part 43 may be omitted.

A front end portion of the gear housing 31 (front housing element 33a) provided integrally with the outer column 13a is provided with a support pipe 76, and the outer column 13a and the gear housing 31 are supported to a vehicle body 11 (refer to FIG. 52) to be only swingably displaced in the vertical direction by the pivot 12 inserted in the support pipe 76 in the width direction. For this reason, the outer column 13a is supported to the vehicle body 11 to be only swingably displaced in the vertical direction with a position thereof in the front and rear direction being restrained.

In contrast, the inner column 14a is entirely formed to have a simple circular cylinder tube such as an electric resistance welded tube or a drawn tube by iron-based alloy or light alloy such as aluminum-based alloy and magnesium-based alloy. Also, an upper surface of a front part of the inner column 14a is provided with a guide part 44 having a substantially circular tube shape or circular cylinder. In a state where the front part of the inner column 14a is internally fitted to an inner side of a rear part of the outer column 13a, the guide part 44 is introduced in the upper slit 39 so as not to be displaceable in the width direction and so as to be displaceable in the front and rear direction. For this reason, the inner column 14a is internally fitted to the outer column 13a so as not to be relatively rotatable and so as to be relatively displaceable in the front and rear direction.

The steering shaft 5a has such a configuration that female spline teeth formed on an inner peripheral surface of an outer shaft 15a arranged at a front side and male spline teeth formed on an outer peripheral surface of an inner shaft 16a arranged at a rear side are spline-engaged to each other so as to expand and contract an entire length thereof and to transmit torque. The steering shaft 5a configured in this way is rotatably supported to an inner side of the steering column 6a. Specifically, a part near a rear end of an intermediate part of the inner shaft 16a is supported to an inner side of a rear end portion of the inner column 14a so as to be only rotatable by a rolling bearing capable of bearing a radial load and an axial load, such as a ball bearing of a single-row deep groove ball type. For this reason, the inner shaft 16a is configured to axially move in synchronization with the inner column 14a and the steering shaft 5a is accordingly expanded and contracted. In a state where the steering shaft 5a is rotatably supported to the inner side of the steering column 6a, a rear end portion of the steering shaft protrudes rearward from a rear end opening of the steering column 6a. The steering wheel 1 (refer to FIG. 52) is supported to the part protruding rearward.

The support bracket 18a is integrally made by subjecting light alloy such as aluminum alloy to extrusion (or drawing), and is arranged around an intermediate part (a rear end-side part of the outer column 13a) of the steering column 6a. In the first embodiment, the support bracket 18a has a pair of attachment plate parts 45a, 45b for supporting and fixing the same to the vehicle body, a pair of support plate parts 46a, 46b configured to sandwich the distance bracket 17a from both sides in the width direction, a bridge part 47, and a pair of reinforcement ribs 48a, 48b.

The attachment plate parts 45a, 45b are provided at both sides in the width direction of an upper part of the support bracket 18a, have such a shape that a part near an inner end in the width direction is bent obliquely upward, and are arranged in a horizontal direction. Also, in order to support and fix the support bracket 18a to the vehicle body 11 so as not to separate, substantially central portions of both the attachment plate parts 45a, 45b are formed with attachment holes 49, 49 penetrated in the vertical direction and provided to insert therein bolts or studs (not shown).

The support plate parts 46a, 46b are arranged in parallel with being spaced from each other in the width direction, are bent at right angle from inner end portions of the attachment plate parts 45a, 45b in the width direction, and are provided with hanging down. Also, the support plate parts 46a, 46b are arranged at both sides of the steering column 6a in the width direction. Long holes 23a, 23a for tilt adjustment corresponding to the first through-hole defined in the claims are formed at positions of the support plate parts 46a, 46b, which are aligned with each other. The long holes 23a, 23a for tilt adjustment have a partially circular arc shape of which a center is the pivot 12, respectively.

The bridge part 47 is provided at a central part in the width direction of the upper part of the support bracket 18a, and has a substantially flat plate-shaped section, and inner end portions of the attachment plate parts 45a, 45b in the width direction (the upper end portions of the support plate parts 46a, 46b) are made to be continuous in the width direction by the bridge part.

The reinforcement ribs 48a, 48b are provided at two corner parts (bent parts) between lower surfaces of the attachment plate parts 45a, 45b and outer surfaces of the support plate parts 46a, 46b in the width direction so as to be continuous over entire lengths of the respective corner parts in the front and rear direction. Each of the reinforcement ribs 48a, 48b is preferably provided at a part (a range in alignment with each of the long hole 23a for tilt adjustment in the front and rear direction) immediately above at least each of the long holes 23a, 23a for tilt adjustment. In the first embodiment, both the reinforcement ribs 48a, 48b have a substantially right-angled triangular prism shape, and are formed therein with spaces 50, 50 opening toward both sides in the front and rear direction and having a substantially isosceles triangular shape (a harpoon shape), so that each has a hollow structure as a whole. As a result, solid parts 51, 51 (parts except the spaces 50, 50) of the reinforcement ribs 48a, 48b have a flat plate shape, respectively, are inclined outward in the width direction toward the upper, and are bridged between the lower surfaces of intermediate parts in the width direction of the attachment plate parts 45a, 45b and the outer surfaces in the width direction of parts near upper ends of the support plate parts 46a, 46b.

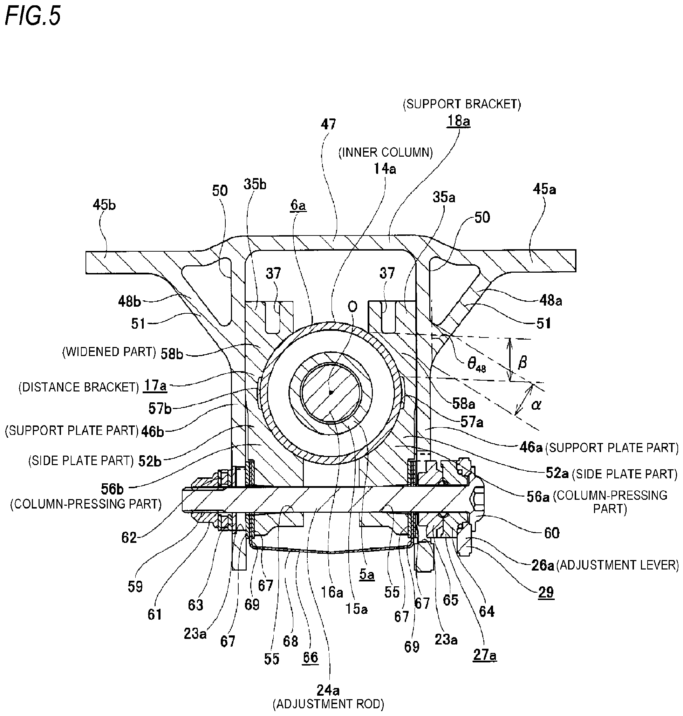

Also, in the first embodiment, a plate thickness of the solid parts 51, 51 of the reinforcement ribs 48a, 48b is made to be substantially the same as a plate thickness of the support plate parts 46a, 46b. Also, an inclination angle θ₄₈ (an inclination angle based on a virtual plane perpendicular to a central axis of the adjustment rod 24a) of the solid parts 51, 51 of the reinforcement ribs 48a, 48b is set to 40°. In the meantime, the inclination angle θ₄₈ can be arbitrarily set. For example, a range α (refer to FIG. 5) in the vertical direction of a coupling part between each of the reinforcement ribs 48a, 48b and each of the support plate parts 46a, 46b may be determined to overlap with a part of a range β, within which widened parts 58a, 58b are to be pressed outward in the width direction as the inner column 14a is displaced upward, with respect to an entire moving range of the steering wheel 1 in the vertical direction (tilt direction). Also, the inclination angle θ₄₈ is preferably made to be greater from a standpoint of improving the stiffness but may be determined, considering interference with other members.

The distance bracket 17a is provided integrally with the outer column 13a at the rear end portion (a rear half part) of the outer column 13a by die-casting light alloy such as aluminum-based alloy and magnesium-based alloy, and has a pair of side plate parts 52a, 52b.

The side plate parts 52a, 52b are arranged (sandwiched) between the inner surfaces in the width direction of the pair of support plate parts 46a, 46b configuring the support bracket 18a and the outer peripheral surface of the inner column 14a, respectively. The side plate parts 52a, 52b are respectively configured by providing upper and lower sides of outer surfaces in the width direction of the rear end portions of both the column side plates 32a, 32b with thickened parts 53a, 53b of which an outer surface in the width direction has a flat surface shape, respectively, and providing lower end portions thereof with hanging down plate parts 54a, 54b hanging down and having a rectangular flat plate shape, respectively. Also, in the first (reference) arrangement, the outer surfaces of both the side plate parts 52a, 52b in the width direction are offset inward in the width direction in order of a part configured by the upper thickened part 53a located at the most outward side in the width direction, a part configured by the lower thickened part 53b and a part configured by each of the hanging down plate parts 54a, 54b. The side plate parts 52a, 52b are formed with insertion holes 55, 55, column-pressing parts 56a, 56b, concave parts 57a, 57b, and widened parts 58a, 58b in order from below.

Each of the insertion holes 55, 55 corresponds to the second through-hole defined in the claims, and is formed to penetrate a portion (a central portion of each of the hanging down plate parts 54a, 54b) near a lower end of each of the side plate parts 52a, 52b in the width direction. Also, in the first embodiment, each of the insertion holes 55, 55 is a simple circular hole.

The respective column-pressing parts 56a, 56b are provided to protrude in a direction coming close to each other (inward in the width direction) at portions, which are located between a central axis O (refer to FIG. 5) of the inner column 14a and the respective insertion holes 55, 55 in the vertical direction, of both the side plate parts 52a, 52b, and in the first embodiment, are configured by lower half parts of the partially cylindrical parts 36a, 36b of the column side plates 32a, 32b. For this reason, an inner surface (pressing surface) of each of the column-pressing parts 56a, 56b in the width direction is configured to have a concave circular arc shape (partially cylindrical surface shape) having a radius of curvature slightly greater than the radius of curvature of the outer peripheral surface of the inner column 14a, and is inclined curvedly outward in the width direction toward the upper (as being farther from the adjustment rod 24a). Therefore, an interval between the inner surfaces of the column-pressing parts 56a, 56b in the width direction increases toward the upper.

The respective widened parts 58a, 58b are provided at parts near the upper ends of the respective side plate parts 52a, 52b, which are located at an opposite side to the adjustment rod 24a with the central axis O of the inner column 14a being interposed therebetween with respect to the vertical direction, and in the first embodiment, are configured by upper half parts of the partially cylindrical parts 36a, 36b of the column side plates 32a, 32b. For this reason, an inner surface of each of the widened parts 58a, 58b in the width direction is configured to have a concave circular arc shape (partially cylindrical surface shape) having a radius of curvature slightly greater than the radius of curvature of the outer peripheral surface of the inner column 14a, and is inclined curvedly inward in the width direction toward the upper (as being farther from the adjustment rod 24a). Therefore, an interval between the inner surfaces of the widened parts 58a, 58b in the width direction decreases toward the upper. Also, in the first embodiment, the widened parts 58a, 58b are provided at positions at which the widened parts are aligned (are overlapped) with the reinforcement ribs 48a, 48b in the vertical direction.

The respective concave parts 57a, 57b are provided with being concave outward in the width direction at portions (particularly, in the first embodiment, portions in alignment with the central axis O of the inner column 14a in the vertical direction), which are adjacent to lower sides of the respective widened parts 58a, 58b, of the inner surfaces of the respective side plate parts 52a, 52b in the width direction. Also, in the shown example, the respective concave parts 57a, 57b are formed to have a substantially oblong section of which a dimension in the vertical direction is greater than a dimension in the width direction, and are in non-contact with the outer peripheral surface of the inner column 14a.

The clamp mechanism 29 is to switch the steering wheel 1 between a state in which a position of the steering wheel can be adjusted and a state in which the steering wheel can be kept at an adjusted position, and has an adjustment rod 24a, an adjustment lever 26a, and a cam device 27a. In the meantime, the adjustment lever 26a and the cam device 27a configure the expansion/contraction device defined in the claims.

The adjustment rod 24a is a rod-shaped member made of iron, and is inserted in both the long holes 23a, 23a for tilt adjustment and both the insertion holes 55, 55 in the width direction. Also, a leading end portion of the adjustment rod 24a is formed with a male screw portion 59, and a base end portion thereof is provided with a head part 60. A nut 61 is screwed onto the male screw portion 59, and a thrust bearing 62 and a pressing plate 63 are provided in order from an outer side in the width direction between the nut 61 and the outer surface in the width direction of the other support plate part 46b in the width direction. Also, an engaging piece (not shown) provided on an inner surface of the pressing plate 63 is engaged with the long hole 23a for tilt adjustment formed in the other support plate part 46b in the width direction so as to be only displaceable along the long hole 23a for tilt adjustment (with rotation being restrained).

Also, a base end portion of the adjustment lever 26a is joined and fixed to the base end portion of the adjustment rod 24a, which protrudes from the outer surface in the width direction of one support plate part 46a in the width direction. The cam device 27a is provided between the adjustment lever 26a and the outer surface in the width direction of one support plate part 46a in the width direction. The cam device 27a is configured to expand and contract a dimension in the width direction based on relative rotation of a drive-side cam 64 and a non-drive-side cam 65, and causes the non-drive-side cam 65 to be engaged with the long hole 23a for tilt adjustment formed in one support plate part 46a in the width direction so as to be only displaceable along the long hole 23a for tilt adjustment (with rotation being restrained). In the meantime, the drive-side cam 64 is configured to be rotatable together with the adjustment rod 24a by the adjustment lever 26a.

The clamp mechanism 29 configured as described above can expand and contract a dimension of the cam device 27a in the width direction based on an operation of the adjustment lever 26a, thereby expanding and contracting an interval between the inner surface of the pressing plate 63 in the width direction and the inner surface of the non-drive-side cam 65 in the width direction, which are the pair of pressing parts. Meanwhile, in the first embodiment, the pressing plate 63 and the non-drive-side cam 65 correspond to the pair of pressing parts defined in the claims.

Also, in the first (reference) arrangement, in order to stably keep the steering wheel 1 at the adjusted position, a first friction plate 66, and a plurality of (four, in the shown example) second friction plates 67, 67 are provided. The first friction plate 66 has a substantial U-shape, and has a bottom plate part 68 and a pair of friction plate main bodies 69, 69 bent upward at right angle from both end portions of the bottom plate part 68 in the width direction. The first friction plate 66 is arranged so as to cover the distance bracket 17a (the side plate parts 52a, 52b) from below and from an outer side in the width direction. Also, the second friction plates 67, 67 have a rectangular plate shape, respectively, and are arranged to sandwich the friction plate main bodies 69, 69 from both sides in the width direction. That is, the second friction plates 67, 67 are respectively arranged between inner surfaces of the friction plate main bodies 69, 69 in the width direction and the outer surfaces of the side plate parts 52a, 52b (the hanging down plate parts 54a, 54b) in the width direction and between outer surfaces of the friction plate main bodies 69, 69 in the width direction and the inner surfaces of the support plate parts 46a, 46b in the width direction. Also, the second friction plates 67, 67 arranged in this way are fixed to the inner column 14a via support members 70. Also, the adjustment rod 24a is inserted in circular holes formed to penetrate the friction plate main bodies 69, 69 in the width direction and in long holes 71, 71 long in the front and rear direction and formed to penetrate the second friction plates 67, 67 in the width direction.

Subsequently, operations of the respective parts that are performed when keeping the steering wheel 1 at an adjusted position are described in detail.

First, when the adjustment lever 26a is rotated upward (lock direction) from a state in which a position of the steering wheel 1 can be adjusted, a distance between the drive-side cam 64 and the non-drive-side cam 65 increases, so that the dimension of the cam device 27a in the width direction increases. Thereby, a distance in the width direction between the inner surface of the non-drive-side cam 65 in the width direction and the inner surface of the pressing plate 63 in the width direction is reduced.

Then, the pair of support plate parts 46a, 46b configuring the support bracket 18a is elastically deformed inward in the width direction so that the lower end portions thereof come close to each other. Also, the pair of side plate parts 52a, 52b configuring the distance bracket 17a is pressed inward in the width direction by both the support plate parts 46a, 46b. Then, both the side plate parts 52a, 52b are elastically deformed inward in the width direction so that the lower end portions thereof come close to each other.

When the side plate parts 52a, 52b are elastically deformed, as described above, the column-pressing parts 56a, 56b are displaced inward in the width direction so as to come close to each other. Then, the inner surfaces of the column-pressing parts 56a, 56b in the width direction press upward (push up) the inner column 14a. That is, as described above, since the inner surfaces of the column-pressing parts 56a, 56b in the width direction are inclined outward in the width direction toward the upper, it is possible to convert the inward displacement (inward force in the width direction) of the column-pressing parts 56a, 56b in the width direction into a force of pressing upward the inner column 14a.

Then, the widened parts 58a, 58b are pushed and enlarged (pressed) outward in the width direction by the inner column 14a being displaced upward. That is, as described above, since the inner surfaces of the widened parts 58a, 58b in the width direction are inclined inward in the width direction toward the upper, it is possible to convert the upward displacement (upward force) of the inner column 14a into a force of pushing and enlarging the widened parts 58a, 58b outward in the width direction. Also, when the column-pressing parts 56a, 56b are pushed downward by a reactive force from the outer column 13d, the widened parts 58a, 58b are pressed downward. Also, in the first embodiment, since the parts, which are adjacent to the lower sides of the widened parts 58a, 58b, of the side plate parts 52a, 52b are provided with the concave parts (thinned parts) 57a, 57b, it is possible to push and enlarge the widened parts 58a, 58b with light force. Thereby, the widened parts 58a, 58b are sandwiched between the inner surfaces of the support plate parts 46a, 46b in the width direction and the outer peripheral surface of the inner column 14a.

Also, in this state, the inner column 14a is applied at two positions of the upper half part spaced in the circumferential direction with the pressing force from the widened parts 58a, 58b and is also applied at two positions of the lower half part spaced in the circumferential direction with the pressing force from the column-pressing parts 56a, 56b.

In the first (reference) arrangement, in this way, the steering wheel 1 is kept at an adjusted position.

Also, in the first (reference) arrangement, the support plate parts 46a, 46b are elastically deformed, so that the friction plate main bodies 69, 69 configuring the first friction plate 66 are sandwiched (frictionally contacted) from both sides in the width direction by the second friction plates 67, 67. Thereby, it is possible to make it difficult for the inner column 14a to be displaced relative to the distance bracket 17a (outer column 13a) in the front and rear direction.

In contrast, when adjusting the position of the steering wheel 1, the adjustment lever 26a is rotated downward (unlock direction) from the state where the position of the steering wheel 1 is kept. Then, the dimension of the cam device 27a in the width direction is reduced to increase the distance in the width direction between the inner surface of the pressing plate 63 in the width direction and the inner surface of the non-drive-side cam 65 in the width direction. Thereby, the support plate parts 46a, 46b and the side plate parts 52a, 52b return to the free state from the elastically deformed state.

Particularly, in the first (reference) arrangement, upon the return of the side plate parts 52a, 52b to the free state, it is possible to use an elastic restoring force of the annular part 43 configuring the annular coupling part 41. That is, when the side plate parts 52a, 52b are elastically deformed inward in the width direction, the arm parts 42a, 42b configuring the annular coupling part 41 are displaced in a direction of coming close to each other with respect to the width direction, so that the annular part 43 is elastically deformed in the width direction as if it were pushed and crushed. For this reason, when the dimension of the cam device 27a in the width direction is reduced, the annular part 43 is elastically restored. Therefore, it is possible to appropriately return the side plate parts 52a, 52b to the free state by using the elastic restoring force. Also, in the state where the dimension of the cam device 27a in the width direction is reduced, the engagement between the first friction plate 66 (the friction plate main bodies 69, 69) and each of the second friction plates 67, 67 is released.

Also, when the column-pressing parts 56a, 56b are displaced outward in the width direction as the side plate parts 52a, 52b are elastically restored, the force by which the column-pressing parts 56a, 56b press upward the inner column 14a is released, so that the inner column 14a is displaced downward (retreated). Then, the force by which the widened parts 58a, 58b are pushed and enlarged outward in the width direction is also released. Thereby, the state in which the widened parts 58a, 58b are strongly sandwiched between the outer peripheral surface of the inner column 14a and the inner surfaces of the support plate parts 46a, 46b in the width direction is resolved. Also, the pressing force (holding force) that is applied from the widened parts 58a, 58b and the column-pressing parts 56a, 56b to the inner column 14a is also lost. As a result, the steering wheel 1 is in a state where the position of the steering wheel can be adjusted in the front and rear direction and in the vertical direction.

According to the steering device of the first (reference) arrangement configured as described above, it is possible to improve the force of holding the distance bracket 17a by the support bracket 18a.

That is, when keeping the steering wheel 1 at the adjusted position, the interval between the inner surfaces of the widened parts 58a, 58b in the width direction, which are sandwiched between the inner surfaces of the support plate parts 46a, 46b in the width direction and the outer peripheral surface of the inner column 14a, is decreased toward the displacement direction (upward) of the inner column 14a. For this reason, it is possible to firmly sandwich the widened parts 58a, 58b between the inner surfaces of the support plate parts 46a, 46b in the width direction and the outer peripheral surface of the inner column 14a by a wedge effect. Also, in the first (reference) arrangement, the widened parts 58a, 58b are pressed to parts near the upper ends, which are the coupling parts with the attachment plate parts 45a, 45b and thus have the high stiffness in the width direction, of the support plate parts 46a, 46b and the reinforcement ribs 48a, 48b are provided at the outer sides of the parts (the parts near the upper ends to which both the widened parts 58a, 58b are pressed) in the width direction. Therefore, the support plate parts 46a, 46b are effectively prevented from being elastically deformed outward in the width direction, based on the pressing force of the widened parts 58a, 58b. For this reason, it is possible to sufficiently increase surface pressures between both side surfaces of the widened parts 58a, 58b in the width direction and the inner surfaces of the support plate parts 46a, 46b in the width direction and outer peripheral surface of the inner column 14a. Therefore, according to the first (reference) arrangement, it is possible to improve the force of holding the distance bracket 17a by the support bracket 18a.

Also, in the first (reference) arrangement, since the outer column 13a is provided integrally with the gear housing 31 (the rear housing element 33c) configuring the electric assistant device 30, it is possible to improve the stiffness of the steering column 6a including the outer column 13a in the width direction. Also, the reinforcement ribs 48a, 48b (the solid parts 51, 51) are bridged between the lower surfaces of the attachment plate parts 45a, 45b and the outer surfaces of the support plate parts 46a, 46b in the width direction. For this reason, it is possible to improve the stiffness of the support plate parts 46a, 46b in the width direction. Therefore, according to the first (reference) arrangement, it is possible to improve the support stiffness of the steering column 6a in the width direction.

Also, in the first (reference) arrangement, since the outer column 13a, the distance bracket 17a and the rear housing element 33c are integrally configured, it is possible to reduce the total number of components of the steering device.

Also, the distance bracket 17a is provided with the upper slit 39 and the lower slit 40 for opening the upper and the lower of the inner column 14a between the pair of side plate parts 52a, 52b. Therefore, it is possible to relatively move the side plate parts 52a, 52b of the distance bracket 17a upon clamping.

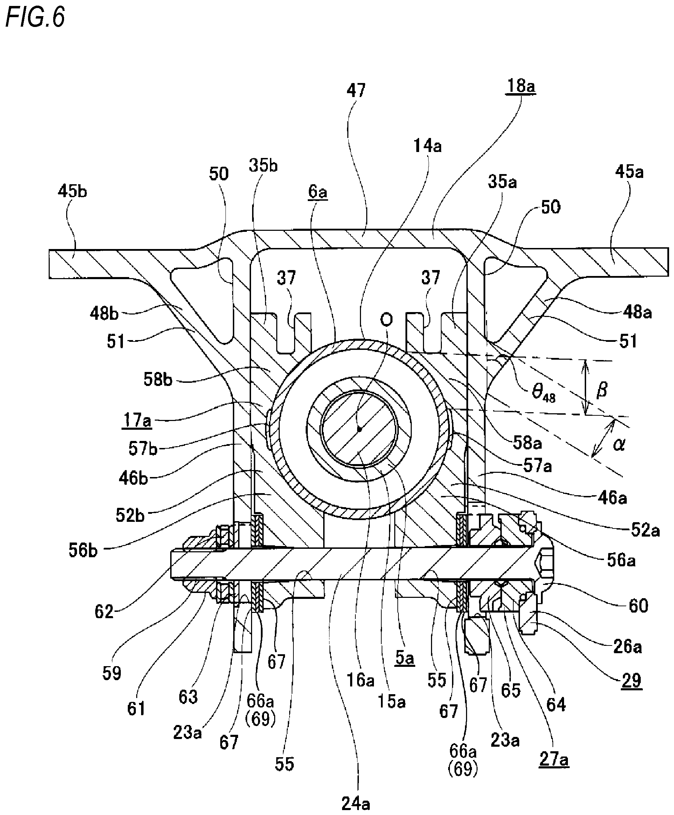

In the meantime, as a modified arrangement of the first (reference) arrangement, as shown in FIG. 6, a pair of first friction plates 66a, 66a configuring the pair of friction plate main bodies 69, 69 may be sandwiched from both sides in the width direction by the second friction plates 67, 67. That is, the first friction plates 66a, 66a may not have the bottom plate part 68, unlike the first (reference) arrangement. In this case, the first friction plate 66a and the second friction plates 67, 67 are respectively arranged between the outer surface of each of the side plate parts 52a, 52b (the hanging down plate parts 54a, 54b) in the width direction and the inner surface of each of the support plate parts 46a, 46b in the width direction.

### [Second (reference) arrangement]

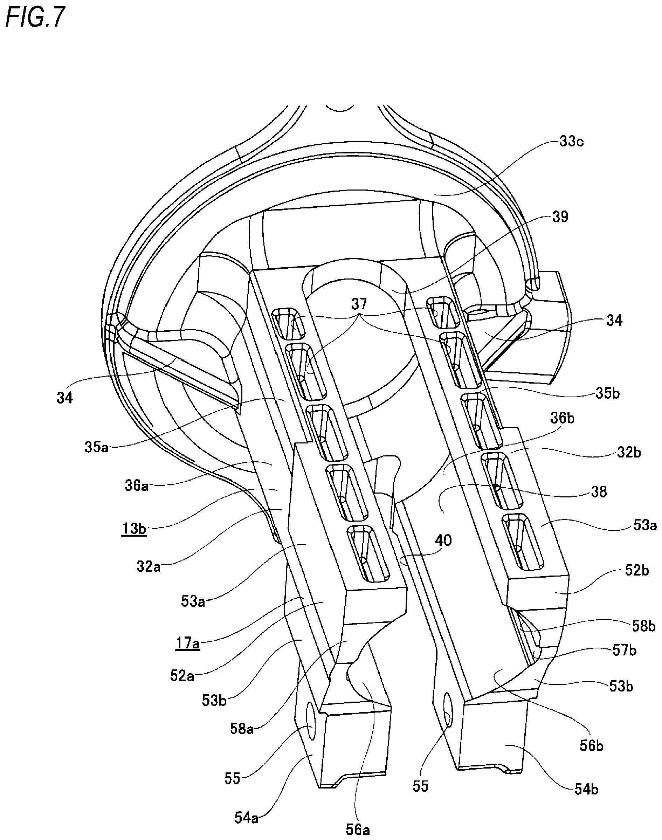

A second (reference) arrangement, outside the scope of the present invention is described with reference to FIG. 7. A steering device of the second (reference) arrangement is different from the structure of the first (reference) arrangement, in terms of a structure of an outer column 13b.

In the second (reference) arrangement, the rear end portions of the pair of column side plates 32a, 32b configuring the outer column 13b are not coupled in the width direction, and the annular coupling part 41 (refer to FIGS. 1 to 4) provided in the structure of the first (reference) arrangement is not provided.

In the second (reference) arrangement configured as described above, since it is possible to simplify the structure of the outer column 13b, it is possible to save the manufacturing cost.

The other configurations and operational effects are similar to the first (reference) arrangement.

### [Third (reference) arrangement]

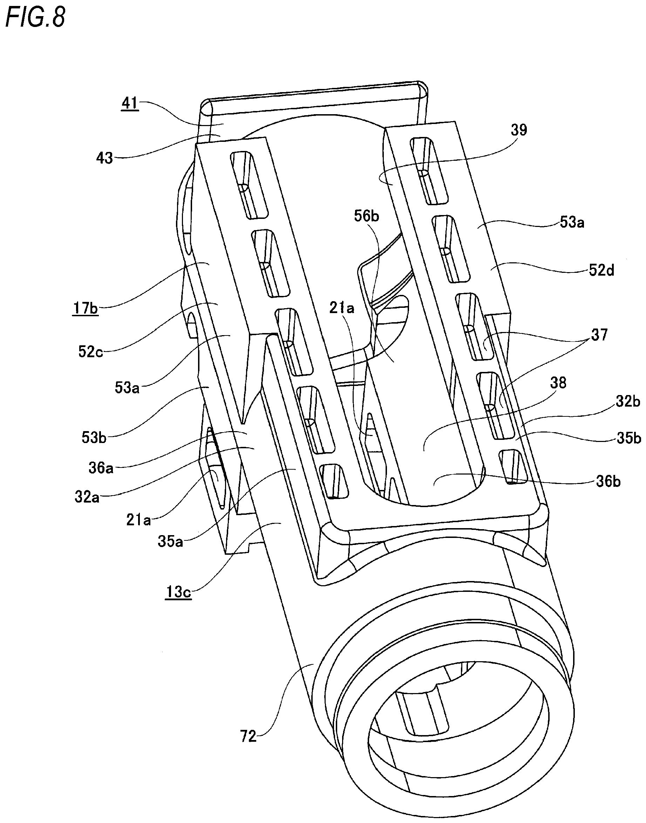

A third (reference) arrangement, outside the scope of the present invention is described with reference to FIG. 8. In the case of a steering device of the third (reference) arrangement, an outer column 13c is arranged at the rear side (upper side) and the inner column 14a (refer to FIG. 1 and the like) is arranged at the front side (lower side). For this reason, in the third (reference) arrangement, the outer column 13c is arranged in the opposite direction to the first (reference) arrangement with respect to the front and rear direction, a rear end portion thereof is provided with a cylindrical part 72, and the pair of column side plates 32a, 32b is provided in front of the cylindrical part 72. Also, a front end portion of the outer column 13c is integrally provided with a distance bracket 17b, instead of the gear housing 31 (refer to FIG. 1 and the like) configuring the electric assistant device 30. Also, lower end portions of a pair of side plate parts 52c, 52d configuring the distance bracket 17b are formed with long holes 21a, 21a for telescopic adjustment, which are long in the front and rear direction and correspond to the second through-hole defined in the claims.

Also in the third (reference) arrangement configured as described above, like the first (reference) arrangement, it is possible to improve the force of holding the distance bracket 17b by the support bracket 18a (refer to FIG. 1 and the like). In the meantime, when the outer column 13c is arranged at the rear side, like the third (reference) arrangement, the support bracket 18a may be supported to the vehicle body 11 (refer to FIG. 52) so as to be separable forward by using a capsule and the like, for example.

The other configurations and operational effects are similar to the first (reference) arrangement.

### [Fourth (embodiment) arrangement]

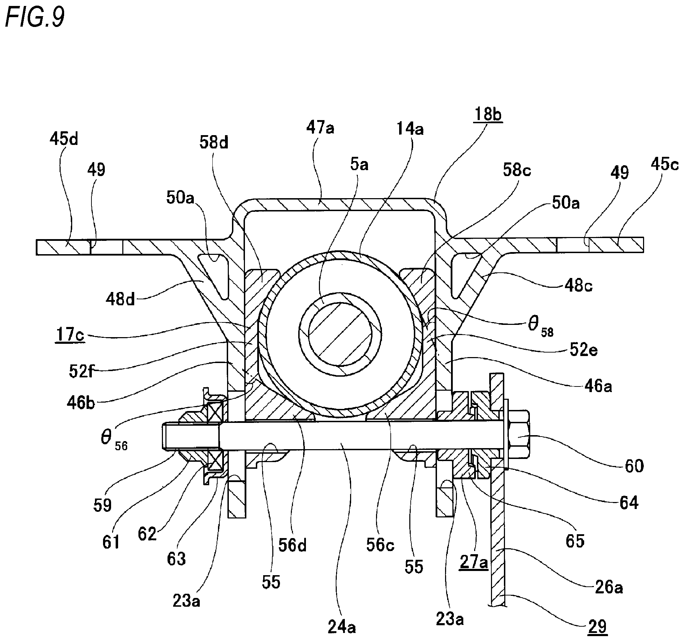

A fourth (embodiment) arrangement of the present invention is described with reference to FIG. 9. In the case of a steering device of the fourth embodiment, structures of a distance bracket 17c and a support bracket 18b are different from the first (reference) arrangement.

In the fourth (embodiment) arrangement, column-pressing parts 56c, 56d are provided with protruding in a direction of coming close to each other (for example, inward in the width direction) at parts, which are adjacent to upper sides of the insertion holes 55, 55, of a pair of side plate parts 52e, 52f configuring the distance bracket 17c. For this reason, lower surfaces of the respective column-pressing parts 56c, 56d configure portions of the respective insertion holes 55, 55. Also, the column-pressing parts 56c, 56d are introduced between the outer peripheral surface of the inner column 14a (both sides of the lower surface in the width direction) and the adjustment rod 24a in the vertical direction. Also, each of the column-pressing parts 56c, 56d has a substantially right-angled triangular section (wedge shape), and an inner surface (pressing surface) in the width direction, which is an inclined side, is inclined linearly outward in the width direction toward the upper. For this reason, an interval between inner surfaces of both the column-pressing parts 56c, 56d in the width direction increases toward the upper. In the shown example, an inclination angle θ₅₆ (an inclination angle based on a virtual plane perpendicular to the central axis of the adjustment rod 24a) of the inner surface of each of the column-pressing parts 56c, 56d in the width direction is set to 60°. In the meantime, the inclination angle θ₅₆ can be arbitrarily set, for example, within a range of 15°≤θ₅₆≤85°.

Also, in the fourth (embodiment) arrangement, upper end portions of the side plate parts 52e, 52f, which are located at the opposite side to the adjustment rod 24a with the central axis of the inner column 14a being interposed with respect to the vertical direction, are provided with widened parts 58c, 58d. Also, an inner surface of each of the widened parts 58c, 58d in the width direction is inclined so that a width dimension (plate thickness) increases toward the upper. Specifically, the inner surface of each of the widened parts 58c, 58d in the width direction is inclined linearly inward in the width direction toward the upper, so that a sectional shape thereof is configured as a wedge shape (right-angled triangular shape). For this reason, an interval between the inner surfaces of both the widened parts 58c, 58d in the width direction decreases toward the upper. In the shown example, an inclination angle θ₅₈ (an inclination angle based on the virtual plane perpendicular to the central axis of the adjustment rod 24a) of the inner surface of each of the widened parts 58c, 58d in the width direction is set to 30°. In the meantime, the inclination angle θ₅₈ can be arbitrarily set, for example, within a range of 1°≤θ₅₈≤45°.

Also, a pair of attachment plate parts 45c, 45d configuring the support bracket 18b is respectively configured to have a rectangular flat plate shape, and a bridge part 47a provided between both the attachment plate parts 45c, 45d is formed to have a substantially U-shaped section. Reinforcement ribs 48c, 48d provided at corner parts between lower surfaces of both the attachment plate parts 45c, 45d and the outer surfaces of the support plate parts 46a, 46b in the width direction have a hollow structure in which spaces 50a, 50a having a right-angled triangular section open toward both sides in the front and rear direction.

In the fourth (embodiment) arrangement configured as described above, each of the column-pressing parts 56c, 56d and each of the widened parts 58c, 58d are respectively configured to have a wedge shape, and the inner surfaces in the width direction of each of the column-pressing parts 56c, 56d and each of the widened parts 58c, 58d are respectively configured to have a flat surface shape. For this reason, it is possible to smoothly displace each of the column-pressing parts 56c, 56d and each of the widened parts 58c, 58d relative to the inner column 14a. Also, in the fourth (embodiment) arrangement, since the inclination angle θ₅₈ of the inner surface of each of the widened parts 58c, 58d in the width direction is set smaller than the inclination angle θ₅₆ of the inner surface of each of the column-pressing parts 56c, 56d in the width direction, it is possible to increase the force of pushing and enlarging both the widened parts 58c, 58d outward in the width direction.

The other configurations and operational effects are similar to the first (reference) arrangement.

### [Fifth (reference) arrangement]

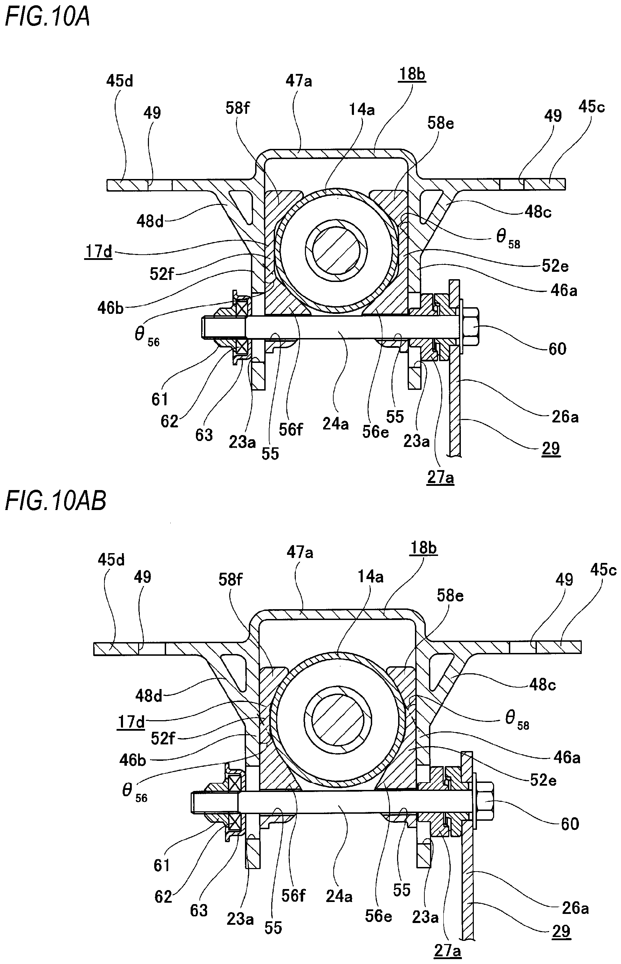

A fifth (reference) arrangement, outside the scope of the present invention is described with reference to FIG. 10. In the case of a steering device of the fifth (reference) arrangement, the inclination angle θ₅₆ of an inner surface in the width direction of each of column-pressing parts 56e, 56f configuring a distance bracket 17d and the inclination angle θ₅₈ of an inner surface of each of widened parts 58e, 58f in the width direction are different from the structure of the fourth (embodiment) arrangement.

In the fifth (reference) arrangement, the inclination angle θ₅₆ of the inner surface of each of the column-pressing parts 56e, 56f in the width direction and the inclination angle θ₅₈ of the inner surface of each of the widened parts 58e, 58f in the width direction are made to be the same (θ₅₆=θ₅₈). In the structure shown in FIG. 10A, the inclination angle θ₅₆ of the inner surface of each of the column-pressing parts 56e, 56f in the width direction is set to 45°, and the inclination angle θ₅₈ of the inner surface of each of the widened parts 58e, 58f in the width direction is also set to 45°. In contrast, in the structure shown in FIG. 10B, the inclination angle θ₅₆ of the inner surface of each of the column-pressing parts 56e, 56f in the width direction is set to 30°, and the inclination angle θ₅₈ of the inner surface of each of the widened parts 58e, 58f in the width direction is also set to 30°.

Also in the fifth (reference) arrangement configured as described above, like the first embodiment, it is possible to improve the force of holding the distance bracket 17d by the support bracket 18b. Also, as compared to the structure shown in FIG. 10A, the structure shown in FIG. 10B can increase the force of pushing and enlarging both the widened parts 58e, 58f outward in the width direction.

The other configurations and operational effects are similar to the first (reference) arrangement and fourth (embodiment) arrangement.

### [Sixth (embodiment) arrangement]

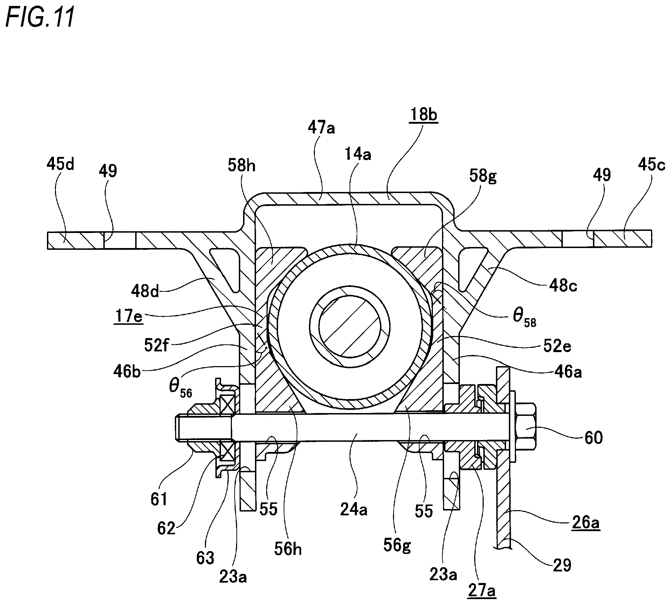

A sixth (embodiment) arrangement of the present invention is described with reference to FIG. 11. In the case of a steering device of the sixth (embodiment) arrangement, the inclination angle θ₅₆ of an inner surface in the width direction of each of column-pressing parts 56g, 56h configuring a distance bracket 17e and the inclination angle θ₅₈ of an inner surface of each of widened parts 58g, 58h in the width direction are different from the structure of the fourth (embodiment) arrangement and fifth (reference) arrangement.

In the sixth (embodiment) arrangement, the inclination angle θ₅₆ of the inner surface of each of the column-pressing parts 56g, 56h in the width direction is set to 30°, and the inclination angle θ₅₈ of the inner surface of each of the widened parts 58g, 58h in the width direction is set to 45°. That is, the inclination angle θ₅₆ of the inner surface of each of the column-pressing parts 56g, 56h in the width direction is set smaller than the inclination angle θ₅₈ of the inner surface of each of the widened parts 58g, 58h in the width direction.

Also in the sixth (embodiment) arrangement configured as described above, like the first (reference) arrangement, it is possible to improve the force of holding the distance bracket 17e by the support bracket 18b.

The other configurations and operational effects are similar to the first (reference) arrangement and fourth (embodiment) arrangement.

### [Seventh (embodiment) arrangement]

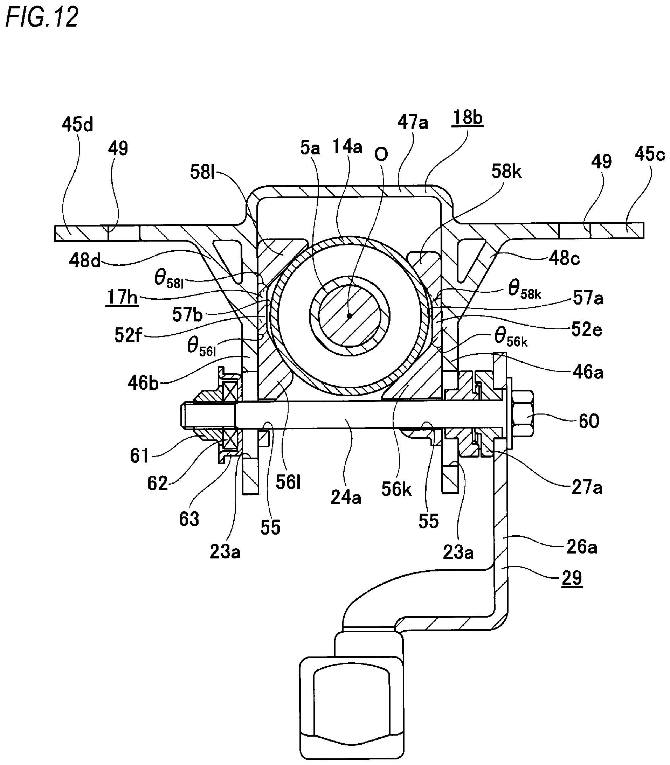

A seventh (embodiment) arrangement of the present invention is described with reference to FIG. 12. In the case of a steering device of the seventh embodiment, inclination angles θ₅₆ₖ, θ₅₆ₗ of inner surfaces in the width direction of a pair of column-pressing parts 56k, 561 configuring a distance bracket 17h are made to be different from each other (θ₅₆ₖ≠θ₅₆ₗ), and inclination angles θ₅₈ₖ, θ₅₈ₗ of inner surfaces of a pair of widened parts 58k, 581 in the width direction are also made to be different from each other (θ₅₈ₖ≠θ₅₈ₗ).

More specifically, the inclination angle θ₅₆ₖ of one column-pressing part 56k in the width direction is set to 40°, and the inclination angle θ₅₆ₗ of the other column-pressing part 561 in the width direction is set to 30°. Also, the inclination angle θ₅₈ₖ of one widened part 58k in the width direction is set to 30°, and the inclination angle θ₅₈ₗ of the other widened part 581 in the width direction is set to 40°. In this way, in the seventh (embodiment) arrangement, the inclination angles of the pair of column-pressing parts 56k, 561 are made to be different from each other and the inclination angles of the pair of widened part 58k, 581 made to be different from each other. However, the inclination angles of the column-pressing part 56k and the widened part 581, which face each other with the central axis O of the inner column 14a being interposed therebetween, are made to be the same and the inclination angles of the column-pressing part 561 and the widened part 58k, which face each other with the central axis O of the inner column 14a being interposed therebetween, are made to be the same.

In the seventh (embodiment) arrangement configured as described above, the forces of pressing the outer peripheral surface of the inner column 14a are different between the pair of column-pressing parts 56k, 561 but the inclination angles of the column-pressing part 56k and the widened part 581 and the inclination angles of the column-pressing part 561 and the widened part 58k, which respectively face each other with the central axis O of the inner column 14a being interposed therebetween, are made to be the same. Therefore, it is possible to efficiently transmit the forces, which are applied from the pair of column-pressing parts 56k, 561 to the inner column 14a, to the pair of widened parts 58k, 581. For this reason, also in the seventh (embodiment) arrangement, it is possible to improve the force of holding the distance bracket 17h by the support bracket 18b.

The other configurations and operational effects are similar to the first (reference) arrangement and fourth (embodiment) arrangement.

### [Eighth (embodiment) arrangement]

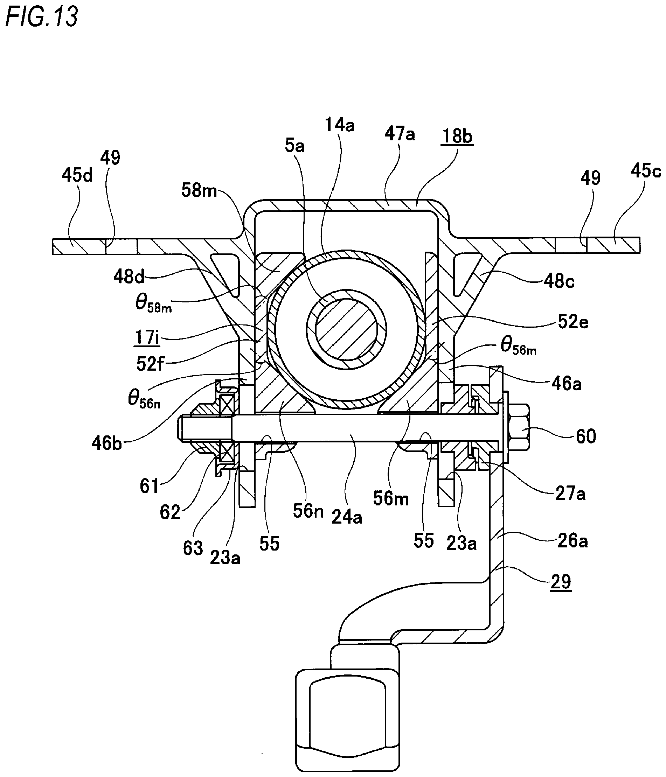

An eighth (embodiment) arrangement of the present invention is described with reference to FIG. 13. In the case of a steering device of the eighth (embodiment) arrangement, one (right, in FIG. 13) side plate part 52e in the width direction of the pair of side plate parts 52e, 52f configuring a distance bracket 17i is not provided with the widened part, and only the other (left, in FIG. 13) side plate part 52f in the width direction is provided with a widened part 58m. For this reason, the upper end portion of the side plate part 52e is configured to have a flat plate shape. Also, in the eighth (embodiment) arrangement, inclination angles θ₅₆ₘ, θ₅₆ₙ of inner surfaces of a pair of column-pressing parts 56m, 56n in the width direction are made to be different from each other (θ₅₆ₘ≠θ₅₆ₙ).

Specifically, the inclination angle θ₅₆ₘ of one column-pressing part 56m in the width direction is set to 45°, and the inclination angle θ₅₆ₙ of the other column-pressing part 56n in the width direction is set to 50°. In the meantime, the inclination angle θ₅₈ₘ of the other widened part 58m in the width direction is 40°.

In the eighth (embodiment) arrangement configured as described above, since one side plate part 52e in the width direction is not provided with the widened part, the force of pressing the side plate part 52e to one support plate part 46a in the width direction is lower, as compared to each embodiment. However, since the side plate part 52e is applied with a reactive force via the inner column 14a when the other widened part 58m in the width direction presses the other support plate part 46b in the width direction, it is possible to press the side plate part 52e to the support plate part 46a with large force to some extent. Therefore, also in the eighth (embodiment) arrangement, it is possible to improve the force of holding the distance bracket 17i by the support bracket 18b.

The other configurations and operational effects are similar to the first (reference) arrangement, fourth and seventh (embodiment) arrangements.

### [Ninth (embodiment) arrangement]

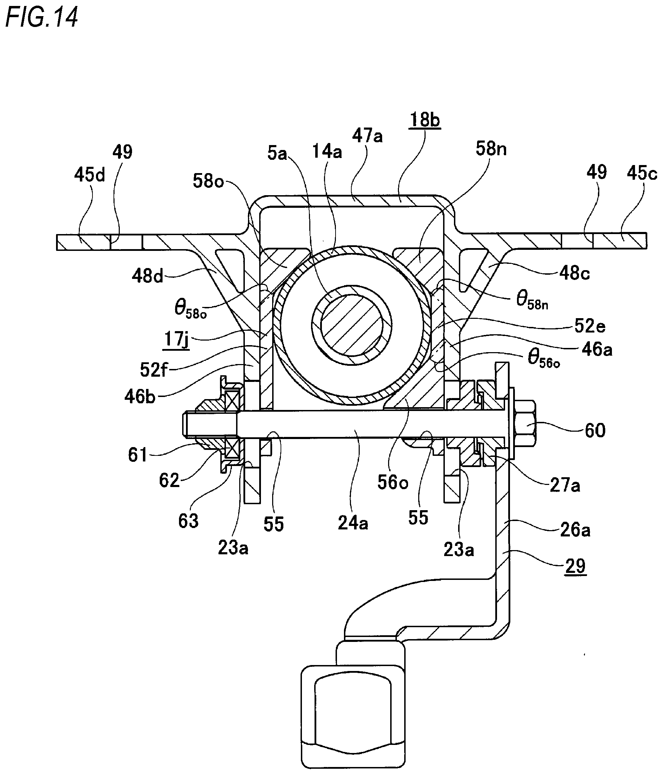

A ninth (embodiment) arrangement of the present invention is described with reference to FIG. 14. In the case of a steering device of the ninth (embodiment) arrangement, the other (left, in FIG. 14) side plate part 52f in the width direction of the pair of side plate parts 52e, 52f configuring a distance bracket 17j is not provided with the column-pressing part, and only one (right, in FIG. 14) side plate part 52e in the width direction is provided with a column-pressing part 56o. For this reason, a part near the lower end of the side plate part 52f is configured to have a flat plate shape. Also, in the ninth (embodiment) arrangement, inclination angles θ₅₈ₙ, θ₅₈ₒ of inner surfaces in the width direction of a pair of widened part 58n, 58o provided to the one and other side plate parts 52e, 52f in the width direction are made to be different from each other (θ₅₈ₙ≠θ₅₈ₒ).

Specifically, the inclination angle θ₅₈ₙ of one widened part 58n in the width direction is set to 40°, and the inclination angle θ₅₈ₒ of the other widened part 58o in the width direction is set to 45°. In the meantime, the inclination angle θ₅₆ₒ of one column-pressing part 56o in the width direction is 45°.

In the ninth (embodiment) arrangement configured as described above, since the other side plate part 52f in the width direction is not provided with the column-pressing part, the inner column 14a is pushed upward and toward the other side in the width direction by the pressing force of the column-pressing part 56o provided to one side plate part 52e in the width direction. By using the force, the pair of widened parts 58n, 58o is pushed and enlarged outward in the width direction.

The other configurations and operational effects are similar to the first (reference) arrangement.

### [Tenth (reference) arrangement]

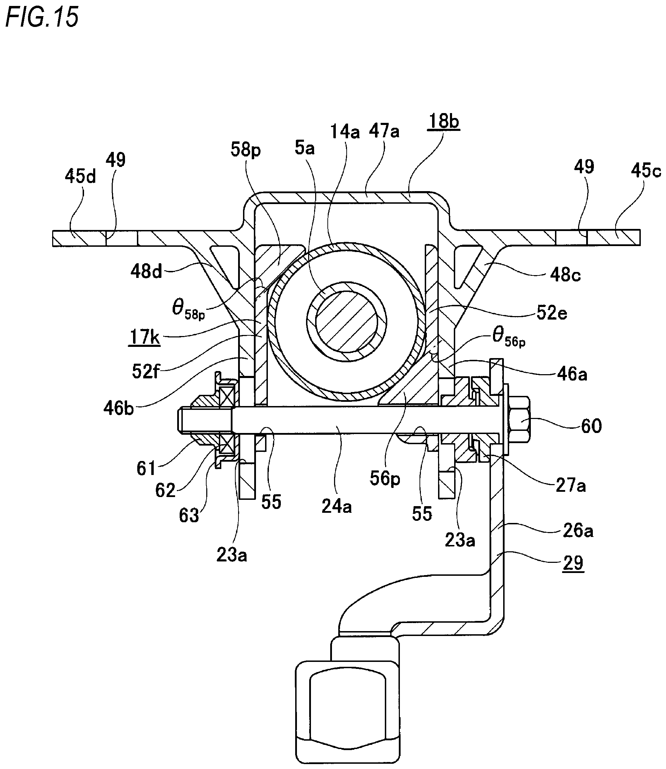

A tenth (reference) arrangement, outside the scope of the present invention is described with reference to FIG. 15. In the case of a steering device of the tenth (reference) arrangement, one (right, in FIG. 15) side plate part 52e in the width direction of the pair of side plate parts 52e, 52f configuring a distance bracket 17k is not provided with the widened part and is instead provided with only a column-pressing part 56p. In contrast, the other (left, in FIG. 15) side plate part 52f in the width direction is not provided with the column-pressing part, and is instead provided with only a widened part 58p. For this reason, the upper end portion of the side plate part 52e and the part near the lower end of the side plate part 52f are respectively configured to have a flat plate shape.

Also, an inclination angle θ₅₆ₚ of one column-pressing part 56p in the width direction is set to 45°, and an inclination angle θ₅₈ₚ of the other widened part 58p in the width direction is set to 45°, so that the inclination angles are made to be the same.

In the tenth (reference) arrangement configured as described above, like the ninth (embodiment) arrangement, the inner column 14a is pushed upward and toward the other side in the width direction by the pressing force of the column-pressing part 56k provided to one side plate part 52e in the width direction. By using the force, the widened part 58p provided to the other side plate part 52f in the width direction is pushed and enlarged outward in the width direction.

The other configurations and operational effects are similar to the first (reference) arrangement.

### [Eleventh (embodiment) arrangement]

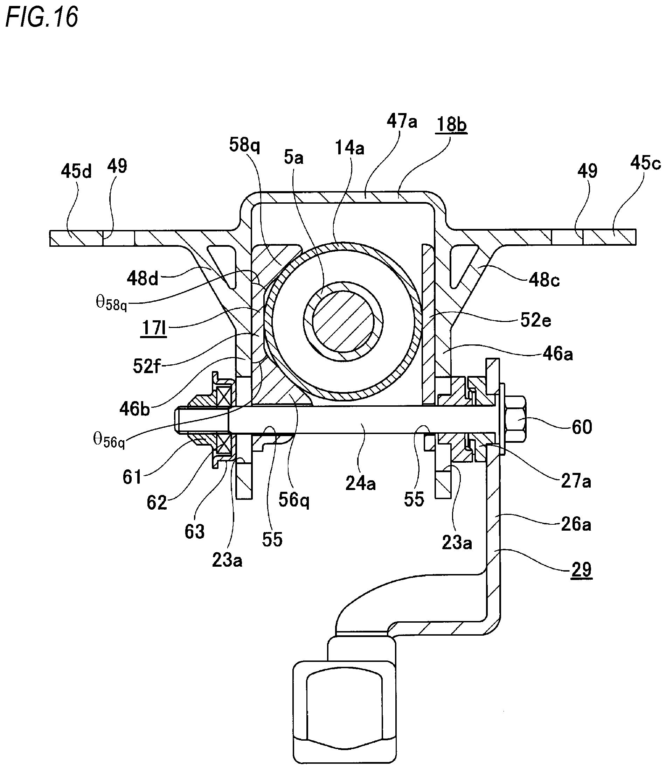

An eleventh (embodiment) arrangement, of the present invention is described with reference to FIG. 16. In the case of a steering device of the eleventh (embodiment) arrangement, one (right, in FIG. 16) side plate part 52e in the width direction of the pair of side plate parts 52e, 52f configuring a distance bracket 171 is not provided with the column-pressing part and the widened part, and the other (left, in FIG. 16) side plate part 52f in the width direction is provided with a column-pressing part 56q and a widened part 58q. For this reason, the side plate part 52e is configured to have a flat plate shape over an entire range from the upper end portion to the lower end portion.

Also, in the eleventh (embodiment) arrangement, an inclination angle θ_{56q} of the other column-pressing part 56q in the width direction is set to 40° and an inclination angle θ_{58q} of the other widened part 58q in the width direction is set to 45°, so that the inclination angles are made to be different from each other.

In the eleventh (embodiment) arrangement configured as described above, since one side plate part 52e in the width direction can be configured to have a flat plate shape as a whole, it is possible to save a weight of the distance bracket 171. Also, the inner column 14a is pushed upward and toward one side in the width direction by the pressing force of the column-pressing part 56q provided to the side plate part 52f. By using the force, a vertically intermediate part of one side plate part 52e in the width direction is pressed outward in the width direction, and the widened part 58q provided to the other side plate part 42f in the width direction is pushed and enlarged outward in the width direction.

The other configurations and operational effects are similar to the first (reference) arrangement.

### [Twelfth (embodiment) arrangement]

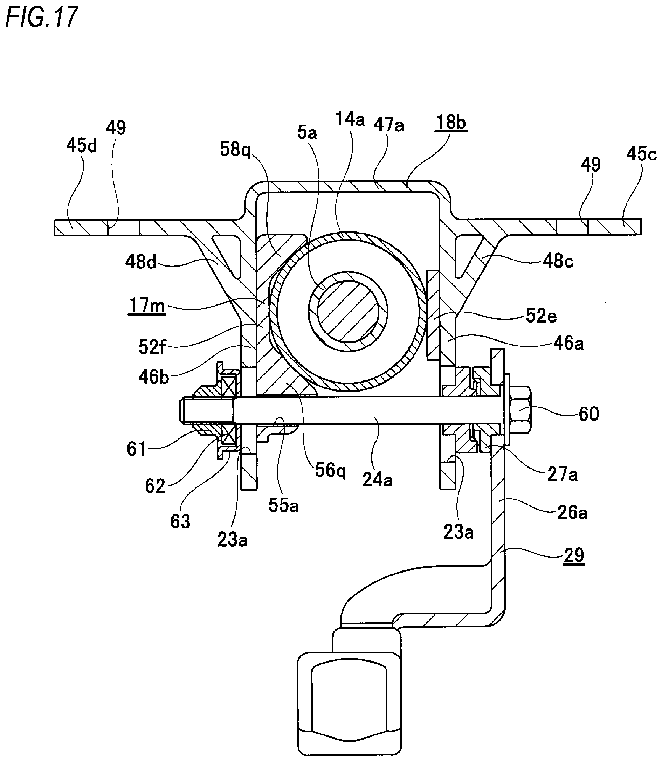

A twelfth (embodiment) arrangement of the present invention is described with reference to FIG. 17. In the case of a steering device of the twelfth (embodiment) arrangement, one (right, in FIG. 17) side plate part 52e in the width direction of the pair of side plate parts 52e, 52f configuring a distance bracket 17m is not provided with the widened part and the column-pressing part, like the eleventh (embodiment) arrangement, and is also not provided with the insertion hole for inserting therein the adjustment rod. That is, in the twelfth (embodiment) arrangement, the lower end portion of one side plate part 52e in the width direction is located at a position higher than the adjustment rod 24.

In the twelfth (embodiment) arrangement configured as described above, it is possible to further save the weight, as compared to the eleventh (embodiment) arrangement.

The other configurations and operational effects are similar to the first (reference) arrangement.

### [Thirteenth (embodiment) arrangement]

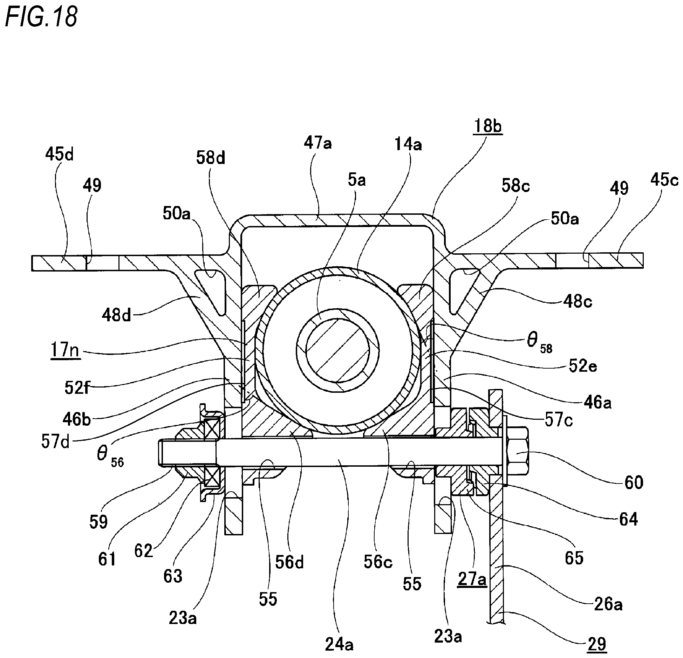

A thirteenth embodiment of the present invention is described with reference to FIG. 18. In the case of a steering device of the thirteenth (embodiment) arrangement, the pair of side plate parts 52e, 52f configuring a distance bracket 17n is provided on the outer surfaces in the width direction, which face the support plate parts 46a, 46b, with concave parts 57c, 57d along the axial direction. The respective concave parts 57c, 57d are provided with being concave inward in the width direction between the widened parts 58c, 58d and the column-pressing parts 56c, 56d in the vertical direction. Also, in the shown example, each of the concave parts 57a, 57b has a substantially oblong section of which a dimension in the vertical direction is larger than a dimension in the width direction, and is in non-contact with the inner surface of each of the support plate parts 46a, 46b.

Thereby, in the thirteenth (embodiment) arrangement, since the respective concave parts (thinned parts) 57c, 57d are provided at parts, which are adjacent to the lower sides of the widened parts 58a, 58b, of the side plate parts 52a, 52b, it is possible to push and enlarge the widened parts 58a, 58b with light force when keeping the steering wheel 1 at the adjusted position.

Also, since the column-pressing parts 56c, 56d and the widened parts 58a, 58b are positively contacted to the support plate parts 46a, 46b in the vertical direction by the respective concave parts (thinned parts) 57c, 57d, the load is securely transmitted between the side plate parts 52e, 52f of the distance bracket 17n and the support plate parts 46a, 46b upon the clamping.

The other configurations and operational effects are similar to the first (reference) arrangement and fourth (embodiment) arrangement.

### [Fourteenth (embodiment) arrangement]

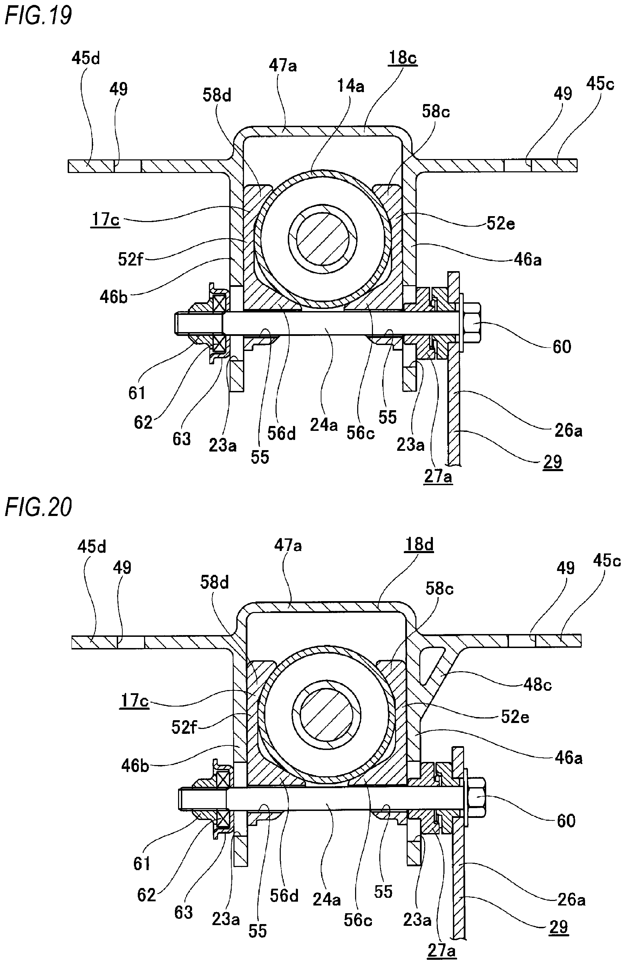

A fourteenth (embodiment) arrangement of the present invention is described with reference to FIG. 19. In the case of a steering device of the fourteenth (embodiment) arrangement, only a structure of a support bracket 18c is different from the fourth (embodiment) arrangement.

In the fourteenth (embodiment) arrangement, the reinforcement ribs 48c, 48d (refer to FIG. 9 and the like), which are provided in the fourth (embodiment) arrangement (and first (reference) arrangement), are not provided between the lower surfaces of the pair of attachment plate parts 45c, 45d configuring the support bracket 18c and the outer surfaces of the pair of support plate parts 46a, 46b in the width direction.

Also in the fourteenth (embodiment) arrangement configured as described above, since it is possible to press the pair of widened parts 58c, 58d toward the inner surfaces in the width direction of the parts near the upper ends, which are the coupling parts with the attachment plate parts 45c, 45d, of the pair of support plate parts 46a, 46b, it is possible to sufficiently secure the force of holding the distance bracket 17c by the support bracket 18c. Also, it is possible to save a weight of the support bracket 18c.

The other configurations and operational effects are similar to the first (reference) arrangement and fourth (embodiment) arrangement.

### [Fifteenth (embodiment) arrangement]

A fifteenth (embodiment) arrangement of the present invention is described with reference to FIG. 20. In the case of a steering device of the fifteenth (embodiment) arrangement, only a structure of a support bracket 18d is different from the fourth and fourteenth (embodiment) arrangements.

In the case of the support bracket 18d of the fifteenth (embodiment) arrangement, the reinforcement rib is omitted between the lower surface of the attachment plate part 45d arranged at the other side (left side, in FIG. 20) in the width direction and the outer surface in the width direction of the support plate part 46b arranged at the other side in the width direction. Like the fourth (embodiment) arrangement, the reinforcement rib 48c is provided between the lower surface of the attachment plate part 45c arranged at one side (right side, in FIG. 20) in the width direction and the outer surface in the width direction of the support plate part 46a arranged at one side in the width direction.

In the fifteenth (embodiment) arrangement configured as described above, the other support plate part 46b in the width direction is more likely to be bent in the width direction, as compared to the structure of the fourth (embodiment) arrangement. However, since the support plate part 46b is pressed inward in the width direction by the pressing plate 63, it is possible to sufficiently increase the surface pressure of the contact part even though the pair of widened parts 58c, 58d is pushed and enlarged outward in the width direction. Also, in the fifteenth (embodiment) arrangement, it is possible to save a weight of the support bracket 18d.

The other configurations and operational effects are similar to the first (reference) arrangement.

### [Sixteenth (embodiment) arrangement]

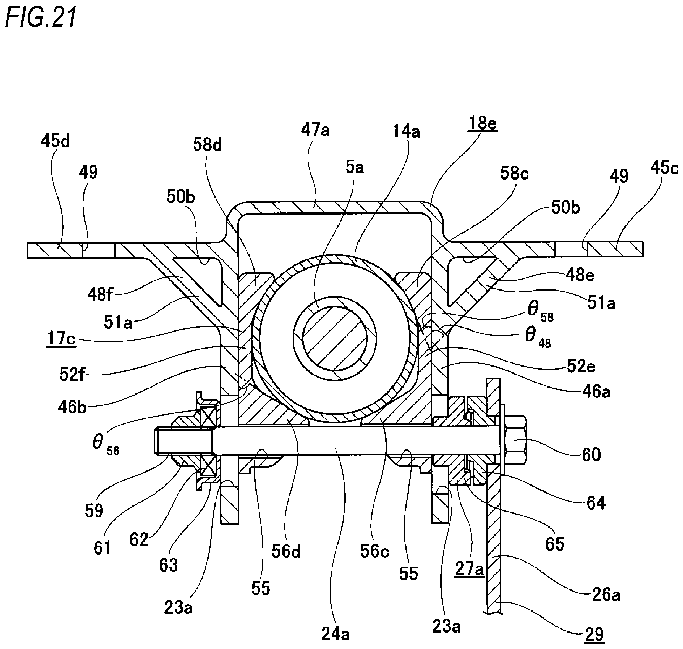

A sixteenth (embodiment) arrangement of the present invention is described with reference to FIG. 21. In the case of a steering device of the sixteenth (embodiment) arrangement, only a structure of a support bracket 18e is different from the fourth (embodiment) arrangement.

In the case of the support bracket 18e of the sixteenth (embodiment) arrangement, a pair of reinforcement ribs 48e, 48f is made to have a shape (sectional shape) different from the fourth (embodiment) arrangement. That is, in the sixteenth (embodiment) arrangement, as compared to the fourth (embodiment) arrangement, a ratio of a dimension in the width direction to a dimension in the vertical direction is increased, so that a right-angled isosceles triangular section is configured. For this reason, an inclination angle θ₄₈ of each of solid parts 51a, 51a configuring the respective reinforcement ribs 48e, 48f is larger than the fourth (embodiment) arrangement (in the shown example, the inclination angle θ₄₈ is set to 45°). Also, a volume of each of spaces 50b, 50b opening toward both sides of both the reinforcement ribs 48e, 48f in the front and rear direction is made greater than the fourth embodiment.

In the sixteenth (embodiment) arrangement configured as described above, it is possible to improve the stiffness of the pair of attachment plate parts 45c, 45d in the vertical direction.

The other configurations and operational effects are similar to the first (reference) arrangement and fourth (embodiment) arrangement.

### [Seventeenth (embodiment) arrangement]

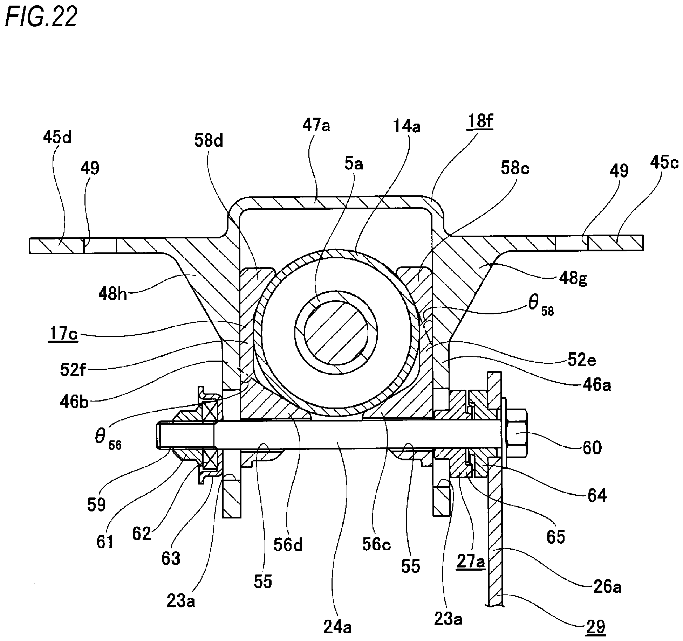

A seventeenth (embodiment) arrangement of the present invention is described with reference to FIG. 22. In the case of a steering device of the seventeenth (embodiment) arrangement, only a structure of a support bracket 18f is different from the fourth (embodiment) arrangement.

The support bracket 18f is integrally made by extruding (or drawing) a light alloy material such as aluminum alloy, and has solid reinforcement ribs 48g, 48h provided between (corner parts) the lower surfaces of the pair of attachment plate parts 45c, 45d and the outer surfaces of the pair of support plate parts 46a, 46b in the width direction. Also, the reinforcement ribs 48g, 48h are respectively made to have a right-angled triangular prism shape (right-angled triangular section).

In the seventeenth (embodiment) arrangement configured as described above, it is possible to further improve the stiffness of both the support plate parts 46a, 46b in the width direction, as compared to the fourth (embodiment) arrangement.

The other configurations and operational effects are similar to the first (reference) arrangement and fourth (embodiment) arrangement.

### [Eighteenth (embodiment) arrangement]

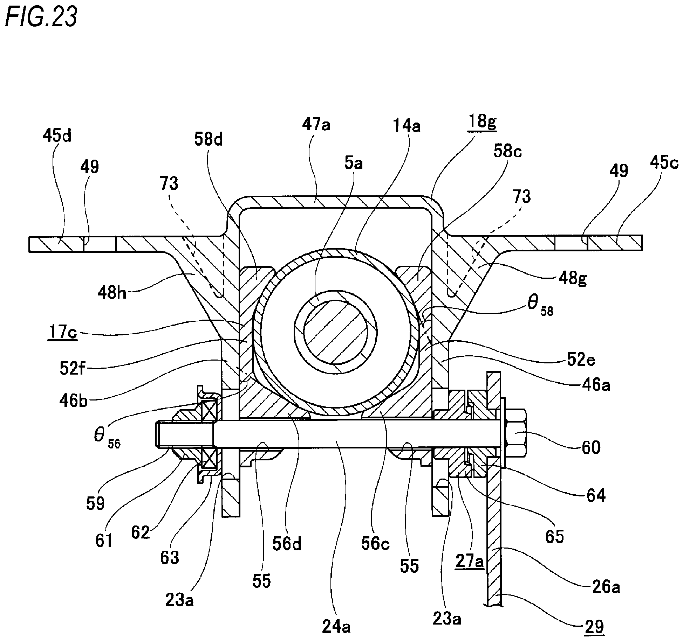

An eighteenth (embodiment) arrangement of the present invention is described with reference to FIG. 23. In the case of a steering device of the eighteenth (embodiment) arrangement, only a structure of a support bracket 18g is different from the seventeenth (embodiment) arrangement.

The support bracket 18g is integrally made by die-casting a light alloy material such as aluminum alloy, and has the solid reinforcement ribs 48g, 48h provided between (corner parts) the lower surfaces of the pair of attachment plate parts 45c, 45d and the outer surfaces of the pair of support plate parts 46a, 46b in the width direction. Also, the reinforcement ribs 48g, 48h are respectively made to have a right-angled triangular prism shape (right-angled triangular section). Particularly, in the eighteenth (embodiment) arrangement, a plurality of thinned parts 73, 73, which opens to the upper surfaces of the inner end portions in the width direction of both the attachment plate parts 45c, 45d, is formed at inner sides of both the reinforcement ribs 48g, 48h. The respective thinned parts 73, 73 are formed in plural with being spaced in the front and rear direction at the inner side of each of the reinforcement ribs 48g, 48h. Also, in the shown example, each of the thinned parts 73, 73 is made to have a triangular prism shape (right-angled triangular prism shape).

In the eighteenth (embodiment) arrangement configured as described above, it is possible to save a weight of the support bracket 18g, as compared to the structure of the sixteenth (embodiment) arrangement in which the thinned parts 73, 73 are not provided.

The other configurations and operational effects are similar to the first (reference) arrangement, and fourth and sixteenth (embodiment) arrangements.

### [Nineteenth (embodiment) arrangement]

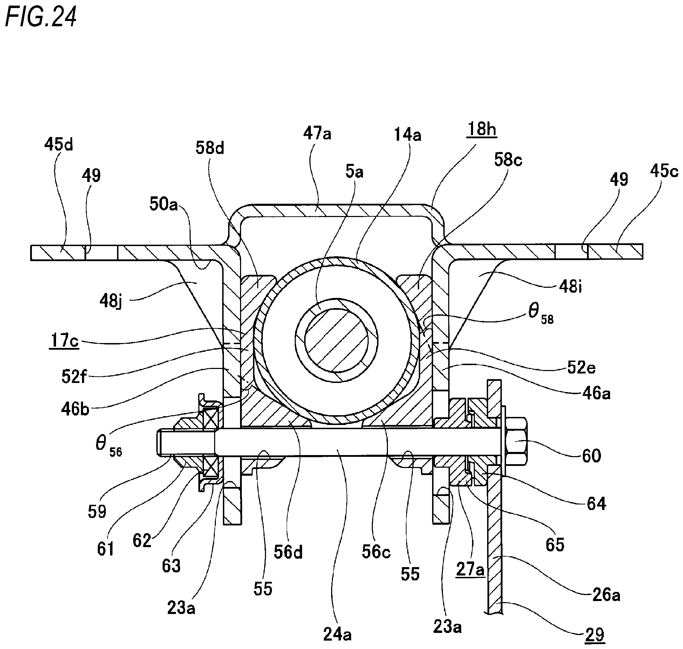

A nineteenth (embodiment) arrangement of the present invention is described with reference to FIG. 24. In the case of a steering device of the nineteenth (embodiment) arrangement, only a structure of a support bracket 18h is different from the fourth (embodiment) arrangement.

The support bracket 18h is made by punching or bending a metal plate such as a stainless steel plate through press working, and a pair of reinforcement ribs 48i, 48j is also formed at the same time as the support bracket 18h. The reinforcement ribs 48i, 48j are configured by bending downward at right angle element pieces, which are provided with protruding rearward at rear end edge portions of parts near inner ends in the width direction of the pair of attachment plate parts 45c, 45d and have a substantially right-angled triangular and flat plate shape, and fixing the element pieces to rear end edge portions of the pair of support plate parts 46a, 46b with welding or the like. Therefore, in the nineteenth (embodiment) arrangement, both the reinforcement ribs 48i, 48j have a flat plate shape, respectively, and are provided only at a rear end portion of the support bracket 18h.

In the nineteenth (embodiment) arrangement configured as described above, it is possible to improve the stiffness in the width direction of the support plate parts 46a, 46b of the inexpensive support bracket 18h made by press working the steel plate.

The other configurations and operational effects are similar to the first (reference) arrangement and fourth (embodiment) arrangement.

### [Twentieth (embodiment) arrangement]

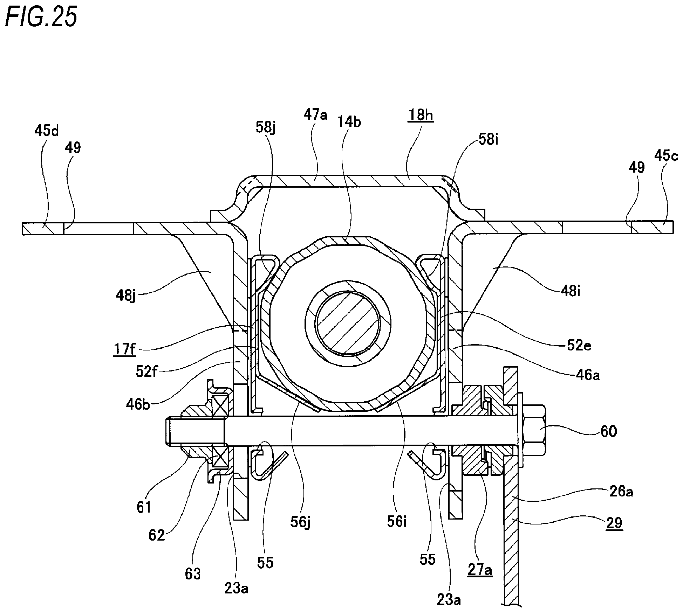

A twentieth (embodiment) arrangement of the present invention is described with reference to FIG. 25. In the case of a steering device of the twentieth (embodiment) arrangement, only structures of a distance bracket 17f (and the outer column) and an inner column 14b are different from the nineteenth (embodiment) arrangement.

In the twentieth (embodiment) arrangement, the distance bracket 17f is also made by punching or bending a metal plate such as a stainless steel plate through press working. Also, the inner column 14b is made to have a polygonal tube shape (in the shown example, a regular dodecagonal tube shape), not the simple circular tube shape.

In the twentieth (embodiment) arrangement configured as described above, it is possible to contact inner surfaces in the width direction of column-pressing parts 56i, 56j and widened parts 58i, 58j, which are provided to the distance bracket 17f and have a flat plate shape, respectively, and respective sides configuring an outer peripheral surface of the inner column 14b in a surface contact manner, and to hold both end parts of each side with sufficiently high force. For this reason, it is possible to improve the force of holding the inner column 14b.

The other configurations and operational effects are similar to the first (reference) arrangement and nineteenth (embodiment) arrangement.

### [Twenty First (embodiment) arrangement]

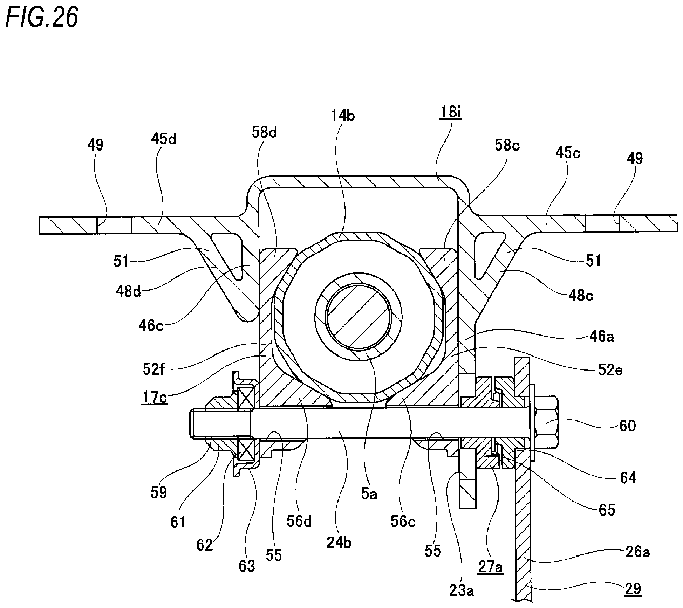

A twenty first (embodiment) arrangement of the present invention is described with reference to FIG. 26. In the case of a steering device of the twenty first (embodiment) arrangement, a structure of a support bracket 18i and a surrounding structure thereof are different from the fourth (embodiment) arrangement.

In the case of the support bracket 18i of the twenty first embodiment, a vertical dimension of the support plate part 46c, which is arranged at the other side in the width direction, of the pair of support plate parts 46a, 46c is made smaller than a vertical dimension of the support plate part 46a arranged at one side in the width direction, so that the lower end portion of the other support plate part 46c in the width direction is located at a position higher than the lower end portion of one support plate part 46a in the width direction. More specifically, in the twenty first (embodiment) arrangement, the position of the lower end portion of the other support plate part 46c in the width direction is made to coincide with the position of the lower end portion of the reinforcement rib 48d (the solid part 51). For this reason, the other support plate part 46c in the width direction is not provided with the long hole 23a for tilt adjustment provided in one support plate part 46a in the width direction.

For this reason, in the twenty first (embodiment) arrangement, an adjustment rod 24b shorter than the adjustment rod used in the fourth embodiment is used to directly contact the inner surface of the pressing plate 63 in the width direction provided around the adjustment rod 24b to the outer surface in the width direction of the other side plate part 52f in the width direction configuring the distance bracket 17c.

In the twenty first (embodiment) arrangement configured as described above, the other support plate part 46c in the width direction is not pressed inward in the width direction by the pressing plate 63 but the pair of widened parts 58c, 58d configuring the distance bracket 17c is strongly pressed to the inner surfaces of both the support plate parts 46a, 46c in the width direction. Accordingly, it is possible to hold the distance bracket 17c with the sufficiently high force by the support bracket 18i. Also, in the twenty first (embodiment) arrangement, since a key lock unit (not shown) provided around a rear end-side of the inner column 14b can be moved more forward than the support bracket 18i upon secondary collision and the like. Accordingly, it is possible to secure a large contraction stroke of the steering column 6a, so that it is possible to substantially protect a driver.

The other configurations and operational effects are similar to the first (reference) arrangement and fourth (embodiment) arrangement.

### [Twenty Second (embodiment) arrangement]

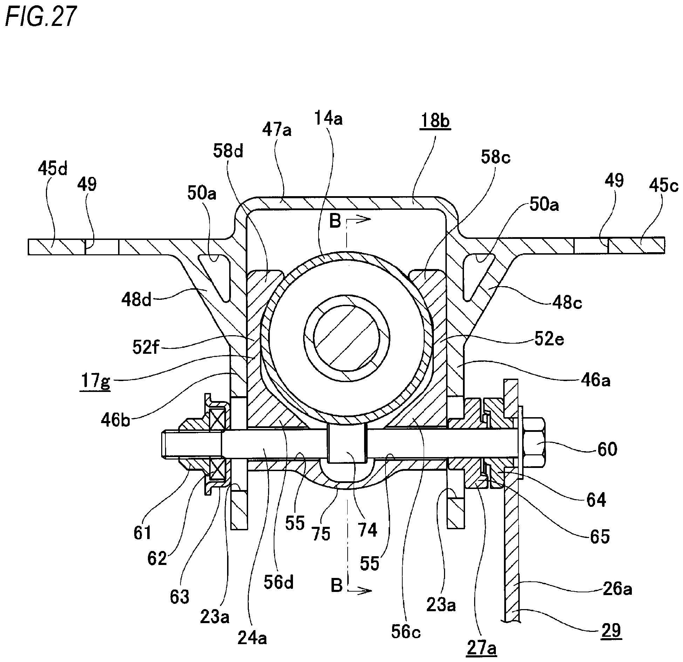

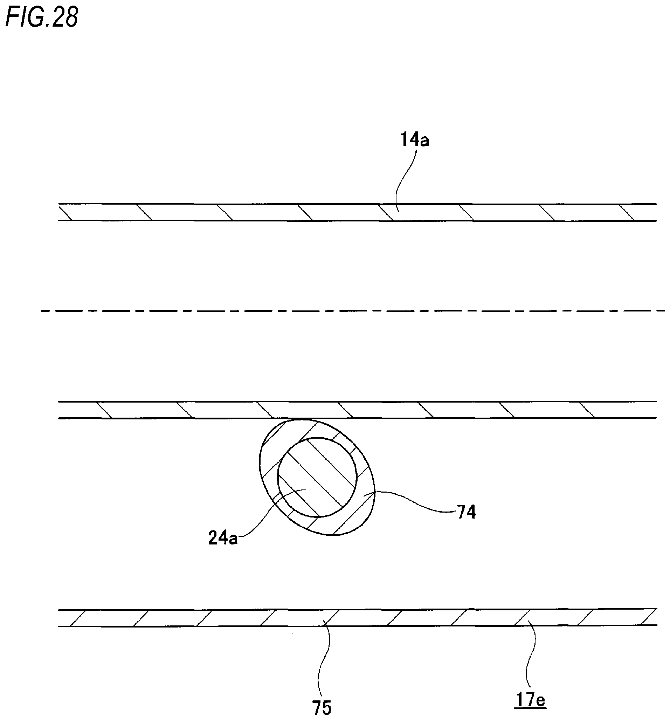

A twenty second (embodiment) arrangement of the present invention is described with reference to FIGS. 27 and 28. In the case of a steering device of the twenty second (embodiment) arrangement, the structure for pushing upward the inner column 14a is different from each embodiment.

In the twenty second (embodiment) arrangement, in order to push upward the inner column 14a, a distance bracket 17g is provided with the pair of column-pressing parts 56c, 56d and an eccentric cam 74, which corresponds to the column-pressing part defined in the claims, is fixed around an axially intermediate part of the adjustment rod 24a so as not to be relatively rotatable. The eccentric cam 74 has a non-true circular shape such as a substantially elliptical shape or oval shape, which is a sectional shape on the virtual plane perpendicular to the central axis of the adjustment rod 24a, and a distance thereof from a center to an outer peripheral surface changes in accordance with a circumferential position. Also, in the twenty second (embodiment) arrangement, the lower end portions of the pair of side plate parts 52e, 52f configuring the distance bracket 17g are coupled in the width direction by a lower coupling part 75.

In order to make the state in which the position of the steering wheel 1 (refer to FIG. 52) can be kept, the adjustment rod 24a is rotated in a predetermined direction by the adjustment lever 26a, thereby rotating the eccentric cam 74 in the predetermined direction together with the adjustment rod 24a. Thereby, the inner column 14a is pushed upward by the eccentric cam 74. At the same time, like each embodiment, the inner column 14a is pushed upward by the pair of column-pressing parts 56c, 56d being displaced inward in the width direction.

In contrast, in order to make the state in which the position of the steering wheel 1 can be adjusted, the adjustment rod 24a is rotated in an opposite direction to the predetermined direction by the adjustment lever 26a. Thereby, the eccentric cam 74 is rotated in the opposite direction to the predetermined direction together with the adjustment rod 24a. Then, the inner column 14a is retreated downward with being supported by the outer peripheral surface of the eccentric cam 74.

In the twenty second (embodiment) arrangement, when shifting to the state where the position of the steering wheel 1 can be kept, the inner column 14a is pushed upward by the eccentric cam 74 and can also be pushed upward by both the column-pressing parts 56c, 56d. For this reason, it is possible to increase the force of pressing upward the inner column 14a.

In the meantime, a configuration where the inner column 14a is pushed upward only by the eccentric cam 74 can also be adopted. That is, the pair of column-pressing parts 56c, 56d can be omitted, outside the scope of the invention.

The other configurations and operations/effects are similar to the first (reference) arrangement and fourth (embodiment) arrangement.

### [Twenty Third (reference) arrangement]

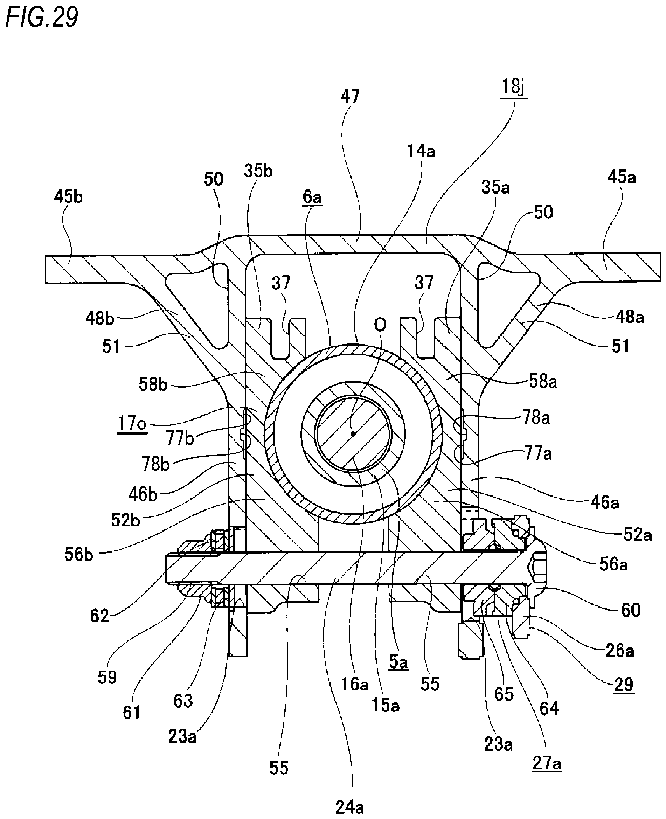

A twenty third (reference) arrangement, outside the scope of the present invention is described with reference to FIG. 29. In the case of a steering device of the twenty third embodiment, structures of a distance bracket 17o and a support bracket 18j are different from the first (reference) arrangement.

In the twenty third (reference) arrangement, respective concave parts 77a, 77b are axially provided at positions, which are located on the inner surfaces in the width direction of the pair of support plate parts 46a, 46b configuring the support bracket 18j and face the outer surfaces in the width direction between the widened parts 58a, 58b and the column-pressing parts 56a, 56b of the pair of side plate parts 52a, 52b.

In the shown example, each of the concave parts 77a, 77b has a substantially oblong section of which a dimension in the vertical direction is greater than a dimension in the width direction, and is in non-contact with the outer surface in the width direction of each of the pair of side plate parts 52a, 52b.

Also, the respective concave parts 77a, 77b are formed at vertically intermediate parts thereof with curved concave parts 78a, 78b having a circular arc shape along a further axial direction, so that the thickness of each of the support plate parts 46a, 46b is further reduced.

Thereby, in the twenty third (reference) arrangement, when keeping the steering wheel 1 at the adjusted position, the support plate parts 46a, 46b are likely to be bent at the positions of the concave parts 77a, 77b, and the parts, at which the concave parts 77a, 77b are not formed, of the inner surfaces of the support plate parts 46a, 46b in the width direction can be contacted to the column-pressing parts 56a, 56b and the widened parts 58a, 58b with high force.

Meanwhile, the distance bracket 17o of the twenty third (reference) arrangement is not provided with the concave parts 57a, 57b and the first and second friction plates 66, 67, 67.

The other configurations and operational effects are similar to the first (reference) arrangement.

### [Twenty Fourth (reference) arrangement]

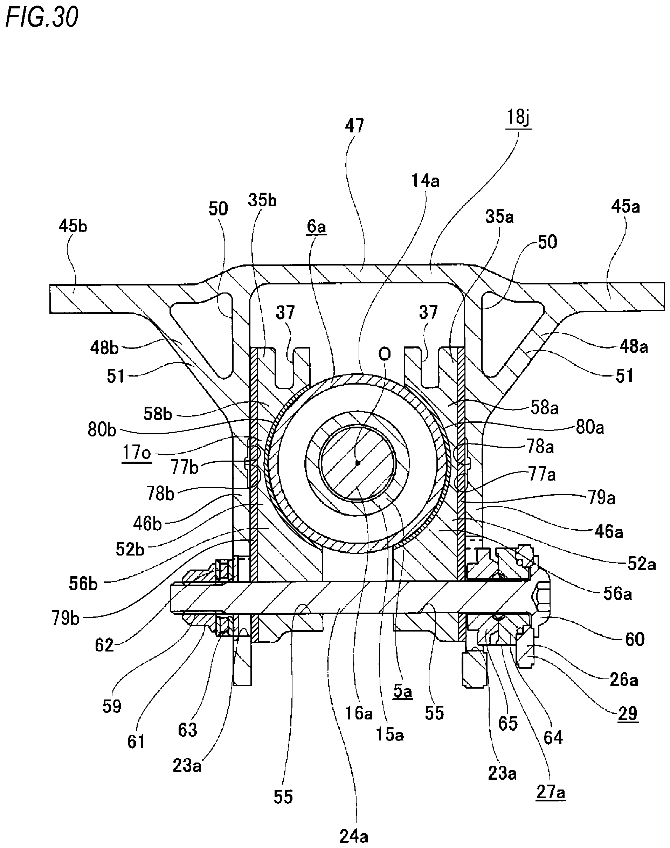

A twenty fourth (reference) arrangement, outside the scope of the present invention is described with reference to FIG. 30. A steering device of the twenty fourth (reference) arrangement is different from the first and twenty third (reference) arrangement, in that spacer members 79a, 79b are provided between facing surfaces of the pair of support plate parts 46a, 46b and the pair of side plate parts 52a, 52b of the distance bracket 17o and other spacer members 80a, 80b are arranged between facing surfaces of the inner column 14a of the steering column 6a and the pair of side plate parts 52a, 52b.

That is, as described in the steering device of the first (reference) arrangement, upon the clamping (i.e., when keeping the steering wheel 1 at the adjusted position), the pair of support plate parts 46a, 46b is elastically deformed inward in the width direction. Then, the distance bracket 17o is sandwiched between the inner surfaces of the support plate parts 46a, 46b in the width direction and the outer peripheral surface of the inner column 14a and is moved relative to the axis of the inner column 14a in the circumferential direction of the outer peripheral surface of the inner column 14a so as to exhibit the pressing action on the inner column 14a by the column-pressing parts 56a, 56b and the wedge action of the widened parts 58a, 58b. Then, the distance bracket 17o is smoothly relatively moved, so that it is possible to further improve the clamping force.

For this reason, in the twenty fourth (reference) arrangement, the spacer members 79a, 79b and the other spacer members 80a, 80b, which are made of a low friction material, are respectively arranged between the support bracket 18j and the distance bracket 17o and between the distance bracket 17o and the inner column 14a. The spacer members 79a, 79b have a substantially flat plate shape, respectively, and the other spacer members 80a, 80b are curved to follow the outer peripheral surface of the inner column 14a. Also, in the twenty fourth (reference) arrangement, the spacer members 79a, 79b are attached to any one of the support bracket 18j and the distance bracket 17o, and the other spacer members 80a, 80b are attached to any one of the distance bracket 17o and the inner column 14a.

Thereby, upon the clamping, the distance bracket 17o can be smoothly relatively moved on the contact surfaces with the pair of support plate parts 46a, 46b of the support bracket 18j and the contact surface with the inner column 14a. Therefore, the pressing force is applied in a balanced manner to the inner surfaces of the support plate parts 46a, 46b in the width direction and the outer peripheral surface of the inner column 14a at the column-pressing parts 56a, 56b and the widened parts 58a, 58b, so that the holding force of the steering wheel 1 is improved.

Also, in the twenty fourth (reference) arrangement, upon unclamping, when the adjustment rod 24a is displaced along the long hole 23a for tilt adjustment, it is also possible to smoothly perform a tilt adjustment operation by the spacer members 79a, 79b made of the low friction material. Also, upon the unclamping, when the inner column 14a is axially moved, it is also possible to smoothly perform a telescoping operation by the other spacer members 80a, 80b made of the low friction material.

Also, upon the clamping, when the distance bracket 17o is moved relative to the inner column 14a in the circumferential direction, the distance bracket 17o may be strongly contacted only at small portions of the support plate parts 46a, 46b. In this case, upon the unclamping, the adjustment lever 26a is likely to be rapidly moved.

For this reason, in the twenty fourth (reference) arrangement, the spacer members 79a, 79b and the other spacer members 80a, 80b are made of the material, which has hardness sufficiently lower than hardness of the support bracket 18j, the distance bracket 17o and the inner column 14a, so that it is possible to equalize the non-uniform contact, which is caused upon the relative movement of the distance bracket 17o. Thereby, it is also possible to prevent the rapid operation of the adjustment lever 26a upon the unclamping.

For the spacer members 79a, 79b and the other spacer members 80a, 80b, a resin material that is likely to be relatively bendable may be used. For example, polyacetal (POM), polyphenylene sulfide (PPS) and the like are adopted. Also, additives such as glass fibers and the like may be contained in the resin material.

In the meantime, for the spacer members 79a, 79b and the other spacer members 80a, 80b, a resin material enabling both the relative sliding and the uniform contact between the support bracket 18j and the distance bracket 17o and between the distance bracket 17o and the inner column 14a may also be used.

Also, the spacer members 79a, 79b, 80a, 80b may be arranged between facing surfaces of the pair of support plate parts 46a, 46b and the pair of side plate parts 52a, 52b of the distance bracket 17o and/or between facing surfaces of the inner column 14a of the steering column 6a and the pair of side plate parts 52a, 52b.

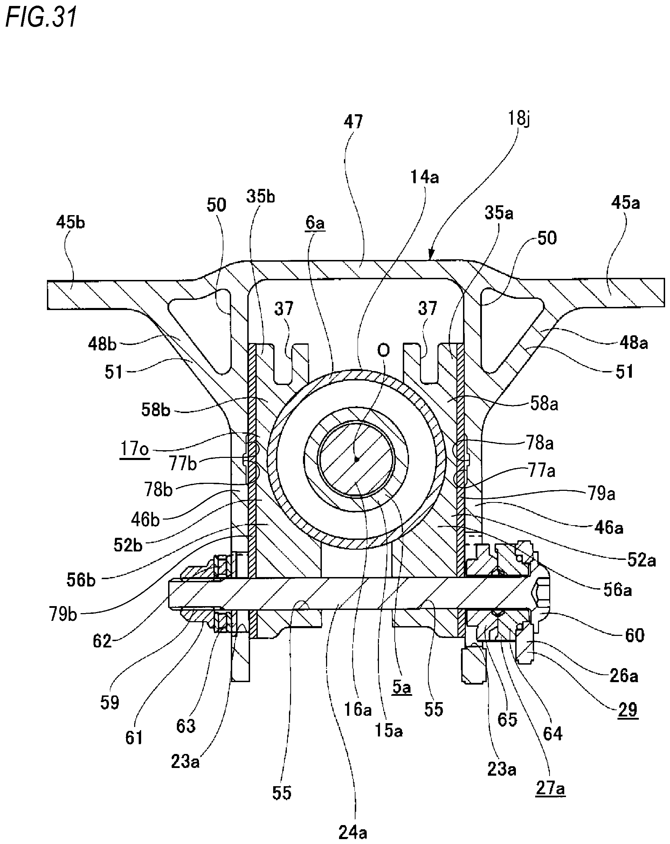

For example, in a modified (reference) arrangement of the twenty fourth (reference) arrangement, as shown in FIG. 31, the spacer members 79a, 79b may be arranged only between the facing surfaces of the pair of support plate parts 46a, 46b and the pair of side plate parts 52a, 52b of the distance bracket 17o.

The other configurations and operational effects are similar to the first and twenty third (reference) arrangements.

### [Twenty Fifth (reference) arrangement]

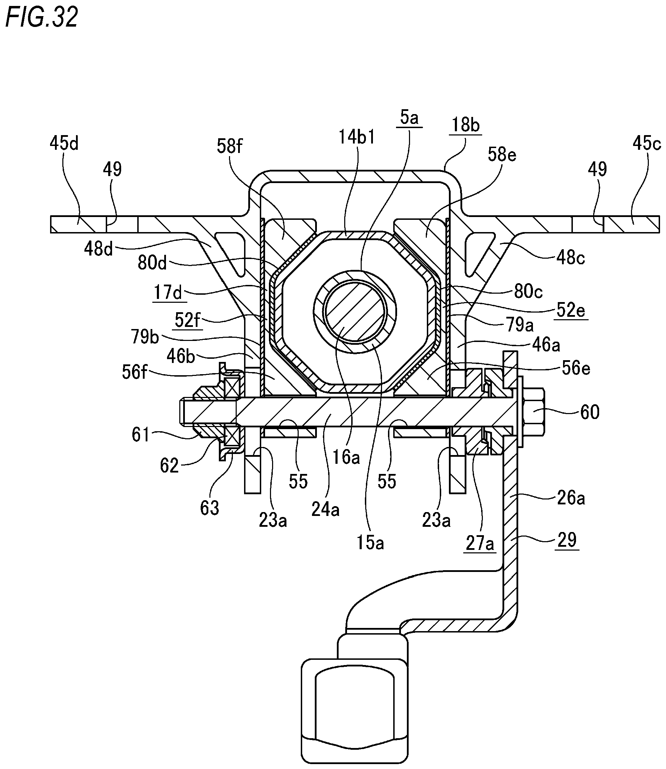

A twenty fifth (reference) arrangement, outside the scope of the present invention is described with reference to FIG. 32. In the case of a steering device of the twenty fifth (reference) arrangement, structures of a distance bracket 17d, an inner column 14b1 and the support bracket 18b are different from the twenty fourth (reference) arrangement.

In the twenty fifth (reference) arrangement, the inner column 14b1 has a polygonal tube shape (in the shown example, a regular octagonal tube shape).

For this reason, the column-pressing parts 56e, 56f and the widened parts 58e, 58f of the pair of side plate parts 52e, 52f configuring the distance bracket 17d are respectively formed so as to be inclined at substantially the same angles as angles of respective outer surfaces of the inner column 14b1 facing the same.

Like the twenty fourth (reference) arrangement, the spacer members 79a, 79b are arranged between the facing surfaces of the pair of support plate parts 46a, 46b and the pair of side plate parts 52e, 52f of the distance bracket 17d, and the other spacer members 80c, 80d are arranged between the facing surfaces of the inner column 14b1 of the steering column 6a and the pair of side plate parts 52e, 52f.

For this reason, also in the twenty fifth (reference) arrangement, the spacer members 79a, 79b and the other spacer member 80c, 80d are made of the low friction material, so that the distance bracket 17d can be relatively moved between the facing surfaces of the pair of support plate parts 46a, 46b and the pair of side plate parts 52e, 52f of the distance bracket 17d and between the facing surfaces of the inner column 14b1 of the steering column 6a and the pair of side plate parts 52e, 52f. Therefore, the pressing force can be applied in a balanced manner to the outer surfaces of the inner column 14b1, so that the holding force of the steering wheel 1 is improved.

Also, the spacer members 79a, 79b and the other spacer members 80c, 80d are made of the resin material that is likely to be relatively bendable. Therefore, the contacts, which are caused upon the relative movement of the distance bracket 17d, between the distance bracket 17d and the support brackets 46a, 46b and between the distance bracket 17d and the inner column 14b1 can be made uniform.

In the meantime, as the support bracket 18b, the support bracket, which is similar to the fourth (embodiment) arrangement, is applied.

The other configurations and operations are similar to the twenty fourth (reference) arrangement.

### [Twenty Sixth (reference) arrangement]

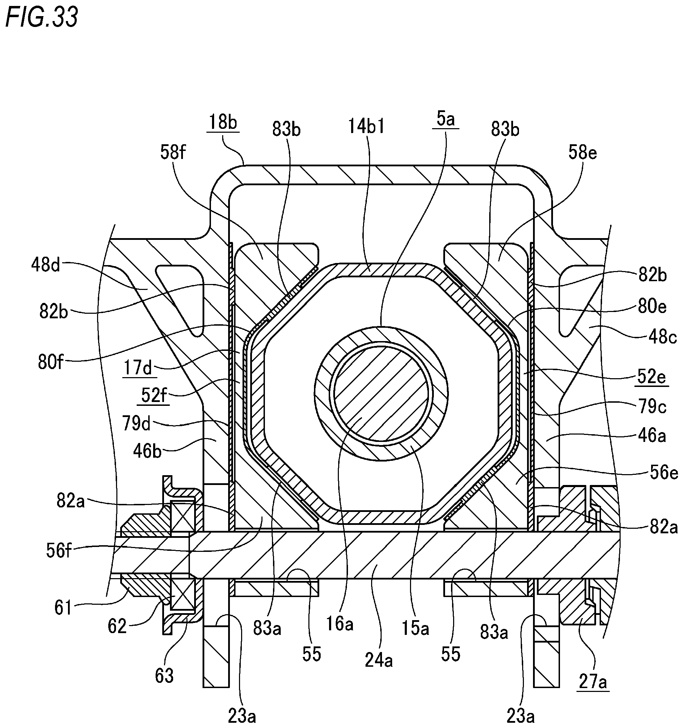

A twenty sixth (reference) arrangement outside the scope of the present invention is described with reference to FIG. 33. In the case of a steering device of the twenty sixth (reference) arrangement, only spacer members 79c, 79d and other spacer members 80e, 80f are different from the twenty fifth (reference) arrangement.

That is, in the twenty sixth (reference) arrangement, the spacer members 79c, 79d have convex surface parts 82a, 82b protruding toward the side plate parts 52e, 52f and formed at positions, which face the parts at which the column-pressing parts 56e, 56f and the widened parts 58e, 58f are located, of the side plate parts 52e, 52f of the distance bracket 17d.

Also, the other spacer members 80e, 80f have convex surface parts 83a, 83b protruding toward the inner column 14b1 and formed at positions, which face the parts at which the column-pressing parts 56e, 56f and the widened parts 58e, 58f are located, of the side plate parts 52e, 52f of the distance bracket 17d.

Thereby, during the relative movement of the distance bracket 17d, it is possible to implement the secure contacts between the distance bracket 17d and the support brackets 46a, 46b and between the distance bracket 17d and the inner column 14b1 by the spacer members 79c, 79d, and the other spacer members 80e, 80f.

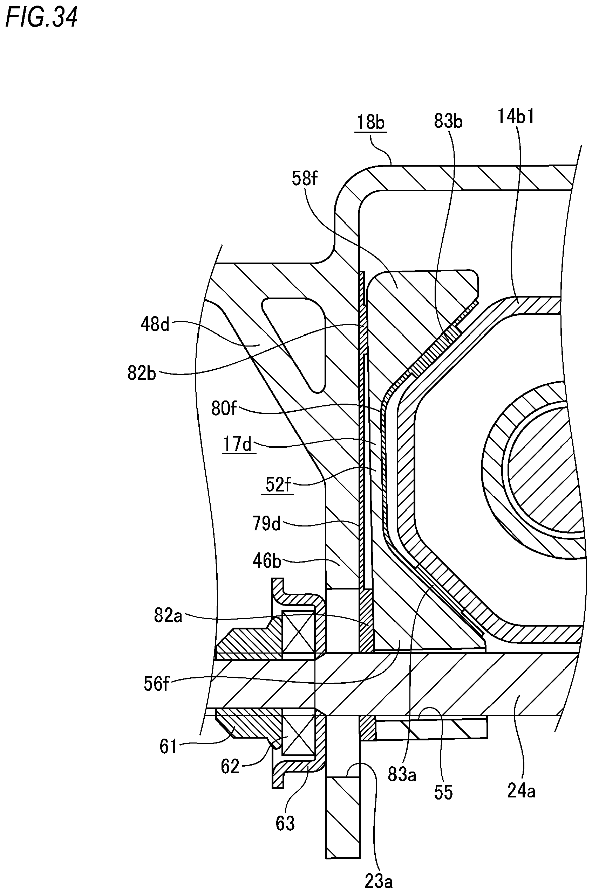

In particular, FIG. 34 depicts a case where the easily bendable material is used for the spacer members 79c, 79d and the other spacer members 80e, 80f (in the shown example, only the spacer members 79d, 80f are shown) and a state where the distance bracket 17d is relatively moved in the circumferential direction. In this case, the intervals between the distance bracket 17d and the support brackets 46a, 46b become non-uniform due to misalignment between the distance bracket 17d and the support brackets 46a, 46b. However, the non-uniform contacts between the distance bracket 17d and the support brackets 46a, 46b are prevented by the convex surface parts 82a, 82b of the spacer member 79d.

Also, the interval between the distance bracket 17d and the inner column 14b1 becomes non-uniform due to misalignment between the distance bracket 17d and the inner column 14b1. However, the non-uniform contacts between the distance bracket 17d and the support brackets 46a, 46b are prevented by the convex surface parts 83a, 83b of the spacer member 80d.

In the meantime, the convex surface parts 83a, 83b are provided at the central portions of the respective facing surfaces of the distance bracket 17d and the inner column 14b1. However, the present disclosure is not limited thereto. For example, the convex surface parts 83a, 83b may also be provided at portions near one ends of the respective facing surfaces.

In the meantime, also in the twenty sixth (reference) arrangement, the spacer members 79c, 79d, 80c, 80d may be arranged between the facing surfaces of the pair of support plate parts 46a, 46b and the pair of side plate parts 52e, 52f of the distance bracket 17d and/or between the facing surfaces of the inner column 14a of the steering column 6a and the pair of side plate parts 52e, 52f.

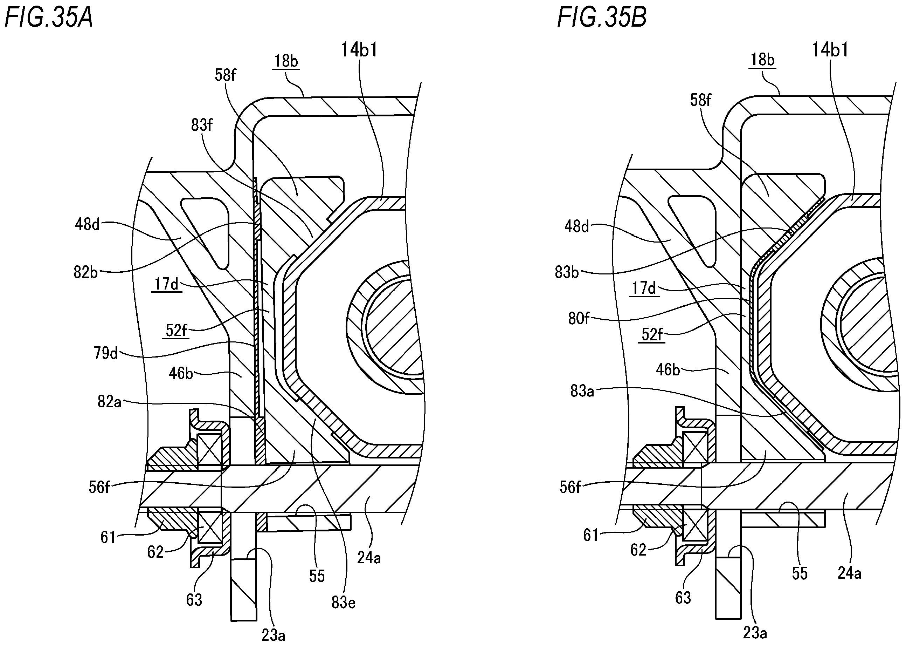

For example, in a modified (reference) arrangement of the twenty sixth (reference) arrangement, as shown in FIG. 35A, the spacer members 79c, 79d (only the spacer member 79d is shown) may be arranged only between the pair of support plate parts 46a, 46b and the distance bracket 17d. Alternatively, as shown in FIG. 35B, the other spacer members 80c, 80d may be arranged only between the distance bracket 17d and the inner column 14b1.

In the meantime, in the modified (reference) arrangement shown in FIG. 35A, the pair of side plate parts 52e, 52f (only the side plate part 52f is shown) may have convex surface parts 83e, 83f formed on the surfaces of the column-pressing part 56f and widened part 58f facing the inner column 14a so that the distance bracket 17d and the inner column 14b1 are to be positively contacted to each other.

### [Twenty Seventh (reference) arrangement]

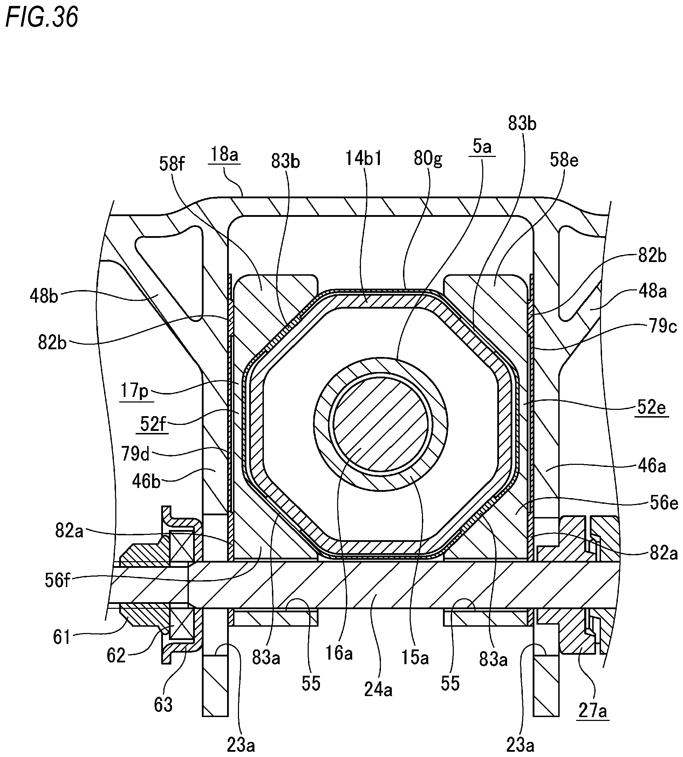

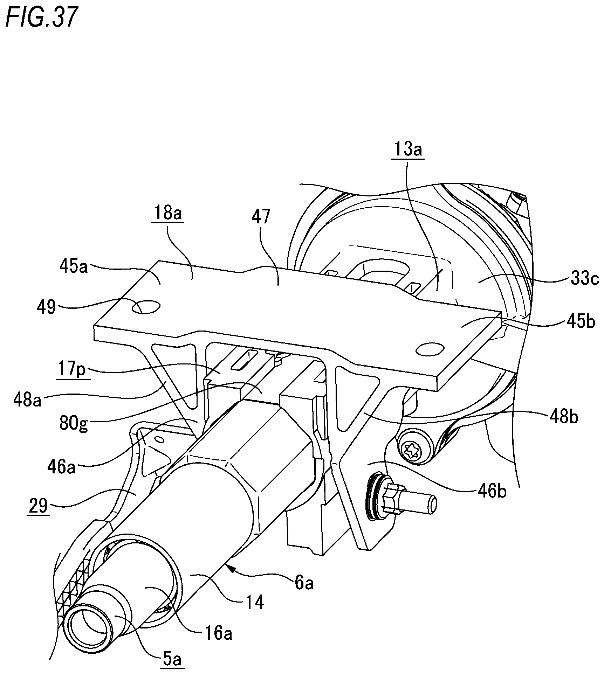

A twenty seventh (reference) arrangement outside the scope of the present invention is described with reference to FIGS. 36 to 38. Meanwhile, in the twenty seventh (reference) arrangement, a distance bracket 17p and other spacer member 80g are different from the twenty sixth (reference) arrangement.

That is, the other spacer member 80g of the twenty seventh embodiment has a polygonal tube shape (in the shown example, a regular octagonal tube shape) so as to cover an entire circumference of the polygonal tube-shaped inner column 14b1. In the meantime, like the twenty sixth embodiment, the convex surface parts 83a, 83b are formed between the column-pressing parts 56e, 56f of the distance bracket 17p and the inner column 14b1 and between the widened parts 58e, 58f of the distance bracket 17p and the inner column 14b1.

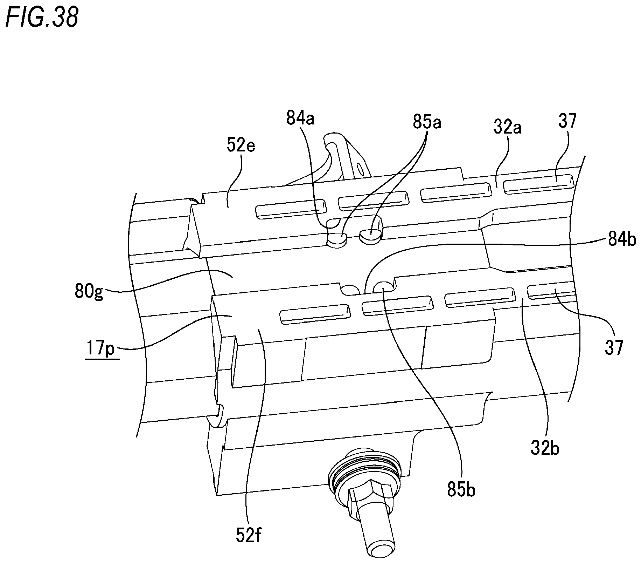

As shown in FIG. 38, engagement concave parts 84a, 84b that are concave outward in the width direction over the vertical direction are formed on facing surfaces of parts, which are located above the inner column 14b1, of the pair of side plate parts 52e, 52f of the distance bracket 17p. The engagement concave parts 84a, 84b are formed at intermediate parts of the pair of side plate parts 52e, 52f in a longitudinal direction.

Also, the outer surface of the other spacer member 80g is formed at positions facing toward the engagement concave parts 84a, 84b of the distance bracket 17p with a pair of engagement convex parts 85a, 85b configured to engage with the engagement concave parts 84a, 84b, respectively. The pair of engagement convex parts 85a, 85b is axially arranged in line on the outer surface of the other spacer member 80g, and is configured to engage with the engagement concave parts 84a, 84b, thereby axially positioning the distance bracket 17p and the other spacer members 80c, 80d.

Also, upon assembling, the distance bracket 17p and the other spacer members 80c, 80d can be positionally determined in a rotating direction by the engagement between the engagement concave parts 84a, 84b and the pair of engagement convex parts 85a, 85b.

The other configurations of the distance bracket 17p and the other spacer member 80g are the same as the distance bracket 17d and the other spacer members 80c, 80d of the twenty sixth (reference) arrangement.

Therefore, the other spacer member 80g is arranged between the pair of side plate parts 52e, 52f of the distance bracket 17p by engaging the engagement convex parts 85a, 85b of the other spacer member 80g to the engagement concave parts 84a, 84b of the distance bracket 17p and the inner column 14b1 is inserted into the other spacer member 80g, so that the mounting of the other spacer member 80g is completed. Thereby, it is possible to easily arrange the other spacer member 80g between the distance bracket 17a and the inner column 14b1.

The other configurations and operations are similar to the twenty sixth (reference) arrangement.

### [Twenty Eighth (reference) arrangement]

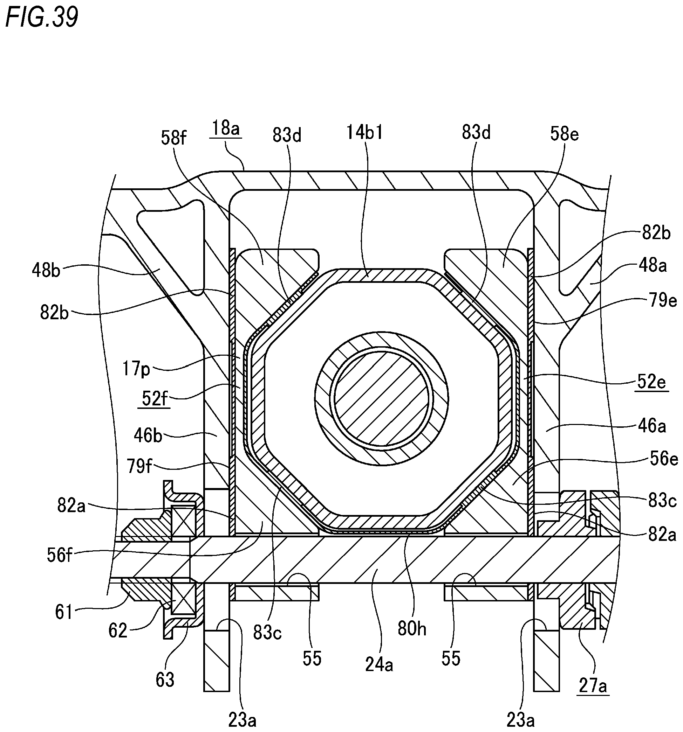

A twenty eighth (reference) arrangement outside the scope of the present invention is described with reference to FIGS. 39 to 41. Meanwhile, in the twenty eighth (reference) arrangement, spacer members 79e, 79f and other spacer member 80h are different from the twenty seventh (reference) arrangement.

In the twenty seventh (reference) arrangement, the other spacer member 80g has a polygonal tube shape. However, the other spacer member 80h of the twenty eighth (reference) arrangement has a substantially C-shaped section where a surface facing the upper surface part of the inner column 14b1 is not provided. That is, the other spacer member 80h is formed by bending a plate material having the engagement convex parts 85a, 85b formed at both end portions in the longitudinal direction into a polygonal shape. The other spacer member 80h may be formed of a resin material.

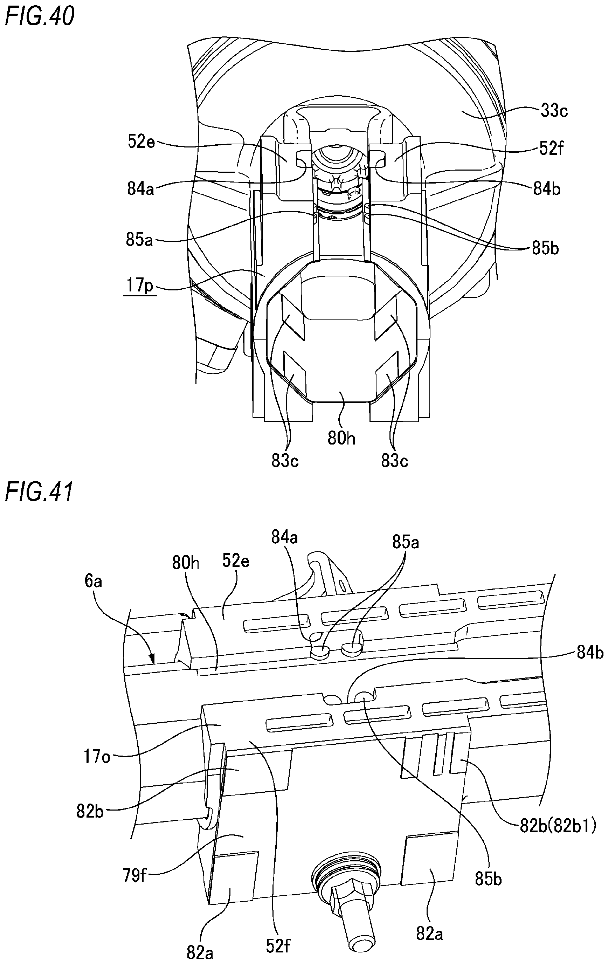

Also, as shown in FIG. 40, the other spacer member 80h is provided with a pair of convex surface parts 83c, 83c axially spaced and protruding toward the inner column 14b1 at parts, at which the column-pressing parts 56e, 56f are located.

In the meantime, although not specifically shown, a pair of convex surface parts 83d, 83d protruding toward the inner column 14b1 at parts, at which the widened parts 58e, 58f are located, is also provided with being axially spaced.

Thereby, places to which the outer surface of the inner column 14b1 is not contacted are provided between the pair of convex surface parts 83c, 83c; 83d, 83d in the axial direction, so that it is possible to cause the pair of side plate parts 52e, 52f of the distance bracket 17p and the inner column 14b1 to favorably contact each other via the pair of axially spaced convex surface parts 83c, 83c; 83d, 83d.

Also, as shown in FIG. 41, the spacer members 79e, 79f arranged between the pair of support brackets 46a, 46b and the pair of side plate parts 52e, 52f of the distance bracket 17p are also provided with a pair of convex surface parts 82a, 82a; 82b, 82b (82b1) axially spaced and protruding outward in the width direction at parts facing the column-pressing parts 56c, 56d and the widened parts 58c, 58d.

Thereby, places to which the pair of support brackets 46a, 46b is not contacted are provided between the pair of convex surface part 82a, 82a; 82b, 82b in the axial direction, so that it is possible to cause the pair of side plate parts 52e, 52f of the distance bracket 17p and the pair of support brackets 46a, 46b to favorably contact each other via the pair of axially spaced convex surface part 82a, 82a; 82b, 82b.

Also, the convex surface part 82b1 is further formed to have a concave-convex shape along the vertical direction. Therefore, it is possible to interpose grease in the concave-convex part, so that it is possible to keep lubricity of the grease upon sliding.

In the meantime, at least one of the other convex surface parts 82a, 82a, 82b may be formed to have a concave-convex shape, so that the two or more convex surface parts may be formed to have a concave-convex shape. Alternatively, all the convex surface parts 82a, 82a, 82b, 82b (82b1) may be formed to have a concave-convex shape.

The other configurations and operations are similar to the twenty seventh (reference) arrangement.

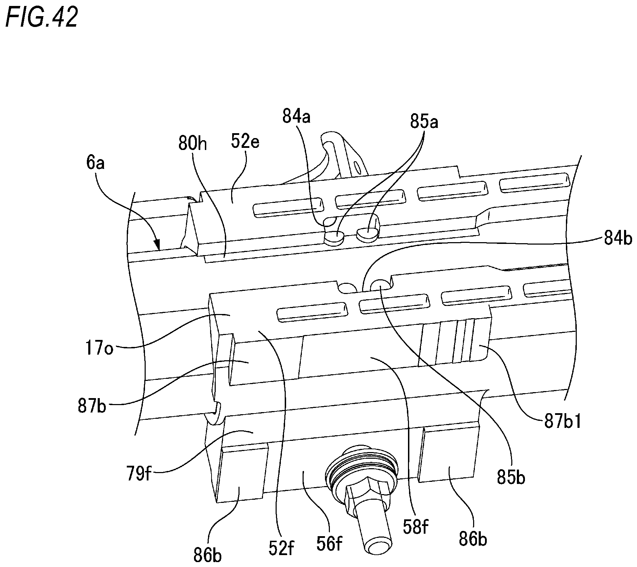

Meanwhile, in a modified (reference) arrangement of the twenty eighth (reference) arrangement, when the spacer members are not arranged between the pair of support brackets 46a, 46b and the pair of side plate parts 52e, 52f of the distance bracket 17p, the parts (in the shown example, only the column-pressing part 56f and the widened part 58f are shown), which configure the column-pressing part 56e, 56f and the widened parts 58e, 58f, of the outer surface of the distance bracket 17p in the width direction may be provided with a pair of convex surface parts 86b, 86b; 87b, 87b1 protruding outward in the width direction and axially spaced, as shown in FIG. 42. Also in this case, it is possible to cause the pair of side plate parts 52e, 52f of the distance bracket 17p and the pair of support brackets 46a, 46b to favorably contact each other.

Also in the modified (reference) arrangement, since the convex surface part 87b1 is further formed to have a concave-convex shape along the vertical direction, it is possible to interpose the grease in the concave-convex part, so that it is possible to keep lubricity of the grease upon sliding.

Meanwhile, also in the modified (reference) arrangement, at least one of the other convex surface parts 86b, 86b, 87b may be formed to have a concave-convex shape, so that the two or more convex surface parts may be formed to have a concave-convex shape. Alternatively, all the convex surface parts 86b, 86b, 87b, 87b1 may be formed to have a concave-convex shape.

### [Twenty Ninth (embodiment) arrangement]

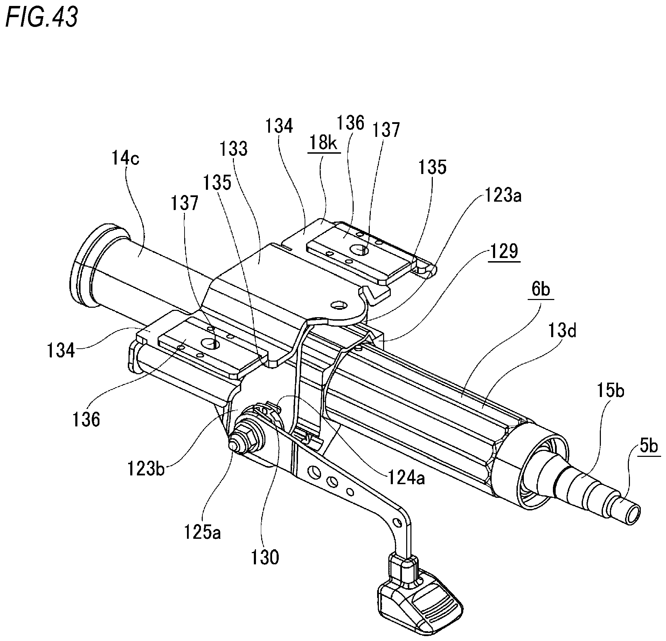

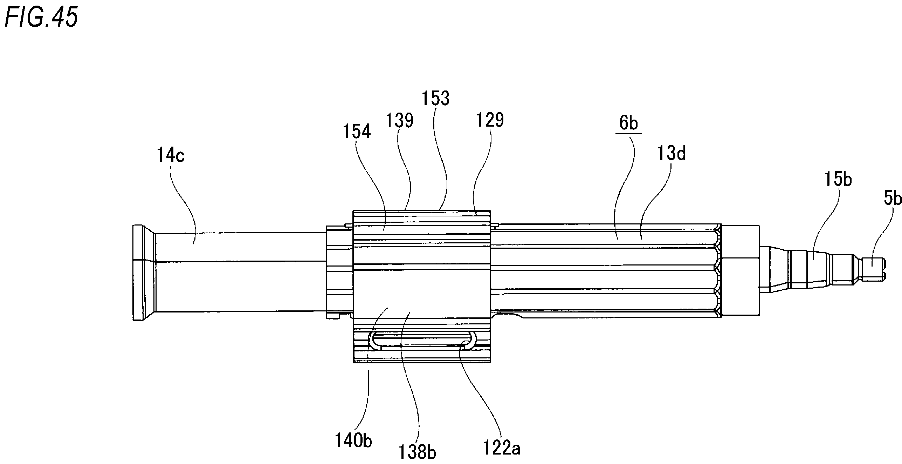

A twenty ninth (embodiment) arrangement of the present invention is described with reference to FIGS. 43 to 47. A steering device for automobile of the twenty ninth (embodiment) arrangement includes a steering column 6b, a steering shaft 5b, a support bracket 18k, a distance bracket 129, an adjustment rod 125a, and an expansion/contraction device 130. In the case of the structure of the twenty ninth (embodiment) arrangement , it is possible to adjust a position of the steering wheel 1 (refer to FIG. 52) supported to a rear end portion of the steering shaft 5b, in the front and rear direction and in the vertical direction (height).

The steering column 6b has such a structure that a rear part of an inner column 14c arranged at a front side and a front part of an outer column 13d arranged at a rear side are fitted. The inner column 14c is entirely formed to have a simple circular cylinder shape such as an electric resistance welded tube or a drawn tube by iron-based alloy or light alloy such as aluminum-based alloy and magnesium-based alloy. A front end portion of the inner column 14c is fixed to the rear end portion of the housing 31 (refer to FIG. 52) configuring the electric assistant device 30 (refer to FIG. 52). Also, the housing 31 is supported to the vehicle body 11 (refer to FIG. 52) to be only swingably displaced in the vertical direction by the pivot 12 such as a bolt inserted in a support pipe (not shown) provided at a front upper end portion. For this reason, the inner column 14c is supported to the vehicle body 11 with a position thereof in the front and rear direction being restrained.

The outer column 13d is a tube-shaped member integrally made by die-casting light alloy such as aluminum-based alloy and magnesium-based alloy, and a front part thereof is externally fitted to a rear part of the inner column 14c to be expandable and contactable. Also, slits 131, 131 that are long in the axial direction are formed at two circumferential positions of an upper half part of a part, which is a front end portion of the outer column 13d and the inner column 14c is fitted therein. The slits 131, 131 are provided between contact parts with column-pressing parts 143 and wedge parts 141 provided to clamped parts 138a, 138b of the distance bracket 129, which will be described later. In this way, an inner diameter of the front end portion of the outer column 13d can be elastically expanded and contracted. In the meantime, a sleeve made of a synthetic resin may be sandwiched between an outer peripheral surface of the front end portion of the outer column 13d and an outer peripheral surface of the rear end portion of the inner column 14c so as to reduce a sliding resistance between the outer column 13d and the inner column 14c.

Also, the steering shaft 5b has such a configuration that female spline teeth formed on an inner peripheral surface of a front half part of an outer tube 15b configuring a rear half part of the steering shaft and male spline teeth formed on an outer peripheral surface of a rear half part of an inner shaft 16b configuring a front half part of the steering shaft are spline-engaged to each other so as to expand and contract an entire length thereof and to transmit torque. The steering shaft 5b configured in this way is rotatably supported to an inner diameter-side of the steering column 6b. Specifically, a part near a rear end of an intermediate part of the outer tube 15b is supported to an inner diameter-side of a rear end portion of the outer column 13d so as to be only rotatable by a rolling bearing capable of bearing a radial load and an axial load, such as a ball bearing of a single-row deep groove ball type. Therefore, the outer tube 15b is configured to axially move in association with axial movement of the outer column 13d and the steering shaft 5b is accordingly expanded and contracted. In a state where the steering shaft 5b is rotatably supported to the inner diameter-side of the steering column 6b, a rear end portion of the steering shaft protrudes rearward beyond a rear end opening of the steering column 6b. The steering wheel 1 (refer to FIG. 52) is supported and fixed to the part protruding rearward.

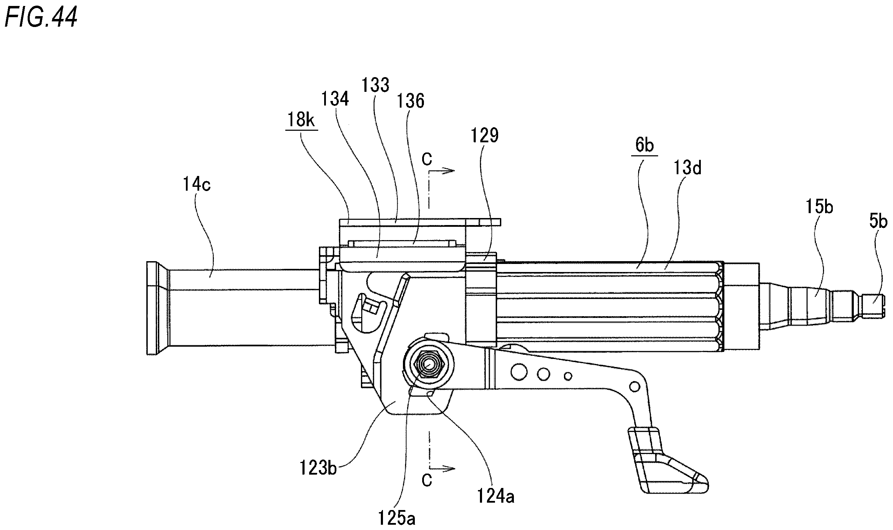

Also, as shown in FIGS. 43 and 44, the support bracket 18k has a pair of left and right support plate parts 123a, 123b, and an attachment plate part 133 configured to support the pair of support plate parts 123a, 123b to the vehicle body 11. The pair of support plate parts 123a, 123b and the attachment plate part 133 are made by punching and bending a metal plate having sufficient strength and stiffness such as steel plate through press working. The support bracket 18k is configured by fixing (for example, welding) the pair of support plate parts 123a, 123b and the attachment plate part 133. Also, long holes 124a, 124a for tilt adjustment, which are the first through-hole defined in the claims, are formed at portions of the pair of support plate parts 123a, 123b, which are aligned with each other. Each of the long holes 124a, 124a for tilt adjustment has a partially circular arc shape of which a center is the pivot 12.

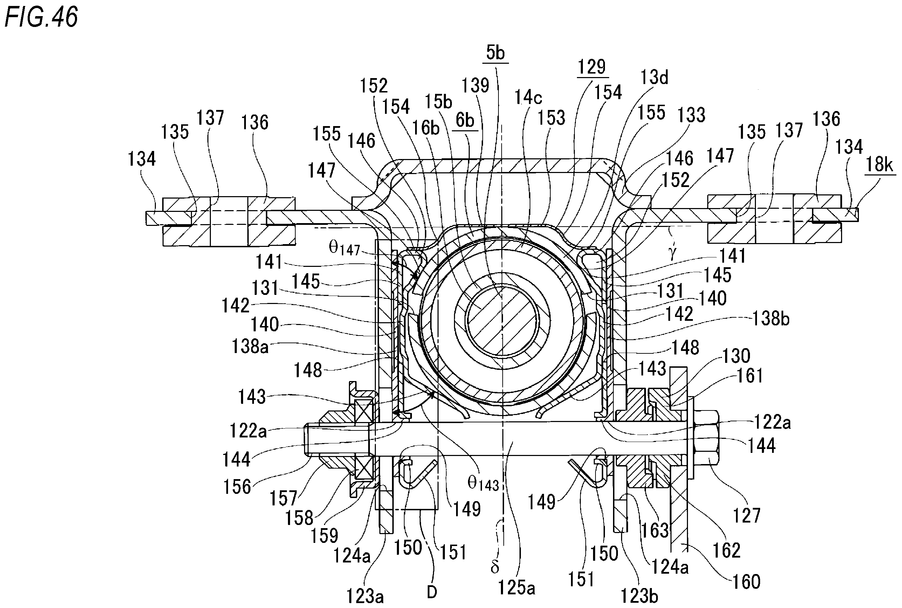

The support bracket 18k configured as described above is joined and supported to the vehicle body 11 (a vehicle body-side bracket supported and fixed to the vehicle body 11) so as to be displaced (separated) forward by an impact load based on the secondary collision. To this end, both end portions of the attachment plate part 133 in the width direction are configured as a pair of joining plate parts 134, 134 for joining and supporting the support bracket 18k to the vehicle body 11 (the vehicle body-side bracket). The pair of joining plate parts 134, 134 is formed at central portions thereof in the width direction with cutouts 135, 135 opening to rear end edges of the pair of joining plate parts 134, 134, and capsules 136, 136 are mounted to the cutouts 135, 135. In the meantime, in the case of the support bracket 18k shown in FIG. 46, the pair of joining plate parts 134, 134 extends with being bent outward in the width direction from upper end edges of the pair of support plate parts 123a, 123b. Like this, as the structure of the support bracket, a variety of structures can be adopted.

The capsules 136, 136 are made of a material that can easily slide relative to the metal plate configuring the attachment plate part 133 (the pair of joining plate parts 134, 134), such as a synthetic resin and soft metal such as aluminum-based alloy. In a normal state, the capsules 136, 136 are not separated from the cutouts 135, 135. However, for example, when the high forward impact load is applied to the support bracket 18k, such as upon the secondary collision, the capsules break engagement parts (for example, retaining pins spanning between the pair of joining plate parts 134, 134 and the capsules 136, 136) with the cutouts 13, 5135 and separate rearward from the cutouts 135, 135. The capsules 136, 136 are formed at central portions thereof with through-holes 137, 137 for inserting therein bolts or studs (not shown) for joining and supporting the support bracket 18k to the vehicle body 11 (the vehicle body-side bracket). In order to join and support the support bracket 18k to the vehicle body 11 (the vehicle body-side bracket), the bolts inserted in the through-holes 137, 137 of the capsule136, 136 upward from below are screwed and tightened to nuts (not shown) fixed (for example, welded) to the vehicle body 11 (the vehicle body-side bracket). Since the vehicle body-side bracket is fixed to the vehicle body in advance, the support bracket 18k is joined and supported to the vehicle body 11 as a result of the bolt tightening so that the support bracket can be separated forward only when the high forward impact load is applied thereto. On the other hand, the studs fixed to a lower surface of the vehicle body 11 (the vehicle body-side bracket) may be inserted in the through-holes 137, 137 of the capsules 136, 136 downward from above and the nuts may be screwed and tightened to lower end portions of the studs so that the support bracket 18k is joined and supported to the vehicle body 11 (the vehicle body-side bracket).

The distance bracket 129 has a pair of clamped parts 138a, 138b and an elasticity continuity part 139.

Each of the pair of clamped parts 138a, 138b is a member corresponding to the side plate part defined in the claims. The pair of clamped parts 138a, 138b has a main body plate part 140, a wedge part 141, a vertically continuous plate part 142, and a column-pressing part 143, respectively. The wedge part 141 of the twenty ninth embodiment configures the widened part defined in the claims.

The main body plate part 140 is a rectangular metallic plate-shaped member, which is long in the axial direction (the front and rear direction) of the outer column 13d, as seen from the width direction. A part near a lower end of the main body plate part 140 is formed with a long hole 122a for telescopic adjustment, which is formed to penetrate the main body plate part 140 in the width direction, extends in the axial direction (the front and rear direction) of the outer column 13d and corresponds to the second through-hole. Also, a peripheral edge portion of the long hole 122a for telescopic adjustment of an inner surface of the main body plate part 140 in the width direction is formed with a main body-side collar portion 144 formed to protrude inward in the width direction.

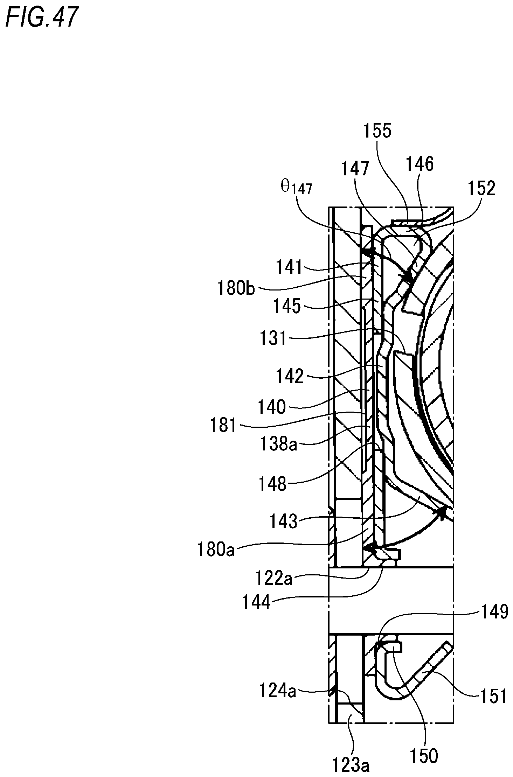

Also, as shown in FIG. 47, an outer surface of the main body plate part 140 in the width direction is provided with convex surface parts 180a, 180b protruding outward in the width direction along the axial direction at parts corresponding to the column-pressing part 143 and the wedge part 141 in the vertical direction. Thereby, the outer surface of the main body plate part 140 in the width direction is formed with a concave part 181 between the convex surface parts 180a, 180b. Therefore, the main body plate part 140 is configured to improve bendability of the distance bracket 129 by the part at which the concave part 181 is formed. Also, the convex surface parts 180a, 180b are positively contacted to the support plate parts 123a, 123b, so that the pressing force is transmitted between the distance bracket 129 and the support plate parts 123a, 123b.

The wedge part 141 has a substantially right-angled triangular shape (wedge shape) of which a dimension in the width direction increases toward the upper in FIG. 46, which is a sectional shape on a virtual plane (a sheet surface in FIG. 46) perpendicular to a central axis of the outer column 13d, and protrudes inward in the width direction from an upper end portion of the inner surface of the main body plate part 140 in the width direction.

Specifically, the wedge part 141 is configured by a fixed plate part 145, a width plate part 146, and a tilted pressing plate part 147.

The fixed plate part 145 is a rectangular plate-shaped member that is long in the axial direction (the front and rear direction) of the outer column 13d, as seen from the width direction. Also, the fixed plate part 145 is formed at a vertically intermediate portion with a fixed plate part through-hole 148 formed to penetrate the fixed plate part 145 in the width direction and extending in the axial direction of the outer column 13d. Also, a long hole 149 in the front and rear direction extending in the axial direction (the front and rear direction) of the outer column 13d is formed at a portion near a lower end of the fixed plate part 145. Also, an inner surface of the fixed plate part 145 in the width direction is formed at a peripheral edge portion of the long hole 149 in the front and rear direction with a fixed plate part-side collar portion 150 protruding inward in the width direction. Also, a lower end portion of the fixed plate part 145 continues to an outer end in the width direction of a tilted folding-back part 151 inclined upward toward the inner side in the width direction.

An outer surface of the fixed plate part 145 in the width direction is fixed (for example, welded) to the inner surface of the main body plate part 140 in the width direction. In this state, the fixed plate part-side collar portion 150 is externally fitted to an outer peripheral surface of the main body-side collar portion 144 without a gap over an entire circumference.

The width plate part 146 protrudes inward in the width direction from an upper end edge of the fixed plate part 145. In other words, the width plate part 146 is bent into a substantially right-angled shape inward in the width direction from the upper end edge of the fixed plate part 145.

The tilted pressing plate part 147 is tilted outward (in a direction of coming close to the fixed plate part 145) in the width direction toward the lower from an inner end edge of the width plate part 146 in the width direction. In other words, the tilted pressing plate part 147 is folded back by about 60° outward (in the direction of coming close to the fixed plate part 145) in the width direction toward the lower from the inner end edge of the width plate part 146 in the width direction. Therefore, in the twenty ninth embodiment, an inclination angle θ₁₄₇ of the tilted pressing plate part 147 relative to the inner surface of the support plate part 123a (123b) in the width direction (the inner surface of the fixed plate part 145 in the width direction) is set to 30°. A lower end portion of the tilted pressing plate part 147 is fixed (for example, welded) to a vertically intermediate portion of the inner surface of the fixed plate part 145 in the width direction. In the meantime, the inclination angle θ₁₄₇ is set within a range of 1°≤θ₁₄₇≤45°.

The vertically continuous plate part 142 extends downward from a lower end edge of the tilted pressing plate part 147. An outer surface in the width direction of a vertically intermediate portion of the vertically continuous plate part 142 protrudes more outward in the width direction than outer surfaces in the width direction of upper end and lower ends of the vertically continuous plate part 142. The protruding portion is inserted in the fixed plate part through-hole 148 of the fixed plate part 145 from an inner side in the width direction.

The column-pressing part 143 is inclined downward toward an inner side in the width direction from a lower end edge of the vertically continuous plate part 142, with respect to the support plate part 123a (123b). An inclination angle θ₁₄₃ of the column-pressing part 143 relative to the inner surface of the support plate part 123a (123b) (the inner surface of the fixed plate part 145 in the width direction) is set to 60°. Therefore, the inclination angle θ₁₄₃ of the column-pressing part 143 relative to the inner surface of the support plate part 123a (123b) in the width direction (the inner surface of the fixed plate part 145 in the width direction) is greater than the inclination angle θ₁₄₇ of the tilted pressing plate part 147 relative to the inner surface of the support plate part 123a (123b) in the width direction (the inner surface of the fixed plate part 145 in the width direction) (θ₁₄₃>θ₁₄₇). In the meantime, the inclination angle θ₁₄₃ is set within a range of 15°≤θ₁₄₃≤85°.

The wedge part 141, the vertically continuous plate part 142, and the column-pressing part 143 are made by performing press forming, bending forming and the like for a metallic plate, for example.

The pair of clamped parts 138a, 138b configured as described above is provided between the pair of support plate parts 123a, 123b and the outer peripheral surface of the outer column 13d in a state where the outer surfaces of the main body plate parts 140, 140 in the width direction face the inner surfaces in the width direction of the pair of support plate parts 123a, 123b in the width direction. In this state, the wedge parts 141, 141 are arranged in a pair of wedge-shaped spaces 152, 152 defined by portions near the upper ends of the inner surfaces of the pair of support plate parts 123a, 123b in the width direction, the upper half part of the outer peripheral surface of the outer column 13d located at inner sides of the portions in the width direction, and a virtual plane γ passing the upper end portions of the pair of support plate parts 123a, 123b and perpendicular to the pair of support plate parts 123a, 123b. Also, upper surfaces of the column-pressing parts 143, 143, which are the pressing surface defined in the claims, are in contact with an intermediate part in the width direction of the lower half part of the outer peripheral surface of the outer column 13d. Specifically, the upper surface of one (left, in FIG. 46) column-pressing part 143 of the column-pressing parts 143, 143 is in contact with a position, which is rotated in a clockwise direction of FIG. 46 by 30° based on a central angle from a virtual plane 8 passing the central axis of the outer column 13d and parallel in the vertical direction, of the lower half part of the outer peripheral surface of the outer column 13d. On the other hand, the upper surface of the other (right, in FIG. 46) column-pressing part 143 of the column-pressing parts 143, 143 is in contact with a position, which is rotated in a counterclockwise direction of FIG. 46 by 30° based on a central angle from the virtual plane δ, of the lower half part of the outer peripheral surface of the outer column 13d.

Also, the parts (parts between the wedge parts 141, 141 and the column-pressing parts 143, 143), which correspond to the vertically continuous plate parts 142, 142, of the pair of clamped parts 138a, 138b are arranged between the inner surfaces of the pair of support plate parts 123a, 123b in the width direction and both end portions in the width direction of the outer peripheral surface of the outer column 13d. In this state, gaps exist in the width direction between the inner surfaces of the vertically continuous plate parts 142, 142 in the width direction and the outer peripheral surface of the outer column 13d.

The elasticity continuity part 139 is a plate-shaped member having an open lower side and a substantially U-shaped section. The elasticity continuity part 139 is made by performing press forming, bending forming and the like for a plate-shaped member having a plate thickness smaller than the plate material configuring the pair of clamped parts 138a, 138b. In this way, the bending stiffness of the elasticity continuity part 139 in the width direction is made to be low.

Specifically, the elasticity continuity part 139 is provided separately from the pair of clamped parts 138a, 138b, and has a central plate part 153, a pair of tilted continuity parts 154, 154 tilted downward toward an outer side in the width direction from both end edges of the central plate part 153 in the width direction, and a pair of joining parts 155, 155 extending outward in the width direction from both end edges in the width direction of the pair of tilted continuity parts 154, 154.

Lower surfaces of the pair of joining parts 155, 155 of the elasticity continuity part 139 are fixed (for example, welded) to upper surfaces of the width plate parts 146, 146 configuring the wedge parts 141, 141. Also, a central portion in the width direction of a lower surface of the central plate part 153 configuring the elasticity continuity part 139 is fixed (for example, welded) to the upper end portion of the outer peripheral surface of the outer column 13d.

The elasticity continuity part 139 configured as described above is elastically deformed in the width direction (the pair of joining parts 155, 155 is moved relative to each other in the vertical direction and in the width direction (the right and left direction) based on a central portion in the width direction), thereby permitting the pair of clamped parts 138a, 138b to be displaced relative to the outer column 13d in the vertical direction and in the width direction.

The adjustment rod 125a is a rod-shaped member made of iron and is inserted in the width direction in the long hole 124a for tilt adjustment of one support plate part 123a of the pair of support plate parts 123a, 123b, the long hole 122a for telescopic adjustment of one clamped part 138a of the pair of clamped parts 138a, 138b, the long hole 122a for telescopic adjustment of the other clamped part 138b and the long hole 124a for tilt adjustment of the other support plate part 123b of the pair of support plate parts 123a, 123b, in corresponding order from one side in the width direction (from the left in FIG. 46). A base end portion of the adjustment rod 125a is formed with a male screw portion 156, and a leading end portion thereof is formed with a head part 127.

Also, a nut 157 is fixed to the male screw portion 156 of the adjustment rod 125a, and a thrust bearing 158 and a pressing plate 159 are provided in order from an outer side in the width direction between the outer surface of one support plate part 123a in the width direction and the nut 157. An inner surface of the pressing plate 159 is provided with an engaging piece (not shown), and the engaging piece is engaged with the long hole 124a for tilt adjustment formed in one support plate part 123a so as to be only displaceable along the long hole 124a for tilt adjustment (with rotation thereof being restrained).

Also, a base end portion of the adjustment lever 160 is joined and fixed to the base end portion of the adjustment rod 125a, which protrudes from the outer surface of the other support plate part 123b, and a cam device 61 is provided between the outer surface of the other support plate part 123b in the width direction and the adjustment lever 160. In the twenty ninth embodiment, the expansion/contraction device 130 is configured by the adjustment lever 160 and the cam device 161.

The cam device 161 is to expand and contract an axial dimension based on relative displacement of a drive-side cam 162 and a non-drive-side cam 163. The non-drive-side cam 163 of the cam device 161 is engaged with the long hole 124a for tilt adjustment formed in the other support plate part 123b so as to be only displaceable along the long hole 124a for tilt adjustment (with rotation thereof being restrained). On the other hand, the drive-side cam 163 is configured to be rotatable together with the adjustment rod 125a by the adjustment lever 160. Meanwhile, in the twenty ninth embodiment, the pressing plate 159 and the non-drive-side cam 163 correspond to the pair of pressing parts defined in the claims.

The expansion/contraction device 130 configured as described above can expand and contract an interval between the inner surface of the pressing plate 159 in the width direction and the inner surface of the non-drive-side cam 163 in the width direction by expanding and contracting the axial dimension of the cam device 161 based on an operation of the adjustment lever 160.

Subsequently, in the structure of the twenty ninth embodiment, an operation that is performed when keeping the positions of the steering wheel 1 in the front and rear direction and in the vertical position at the adjusted positions is described.

First, when the adjustment lever 160 is rotated upward (lock direction) from a state in which the positions of the steering wheel 1 in the front and rear direction and in the vertical position can be adjusted, a distance between the drive-side cam 162 and the non-drive-side cam 163 is expanded, so that the axial dimension of the cam device 161 increases and a distance in the width direction between the inner surface of the non-drive-side cam 163 in the width direction and the inner surface of the pressing plate 159 in the width direction decreases. Accompanied by this, the pair of support plate parts 123a, 123b is elastically deformed inward in the width direction so that the lower end portions of the pair of support plate parts 123a, 123b come close to each other. Also, the pair of clamped parts 138a, 138b configuring the distance bracket 129 is pressed inward in the width direction by the pair of support plate parts 123a, 123b and is elastically deformed inward in the width direction so that the lower end portions of the pair of clamped parts 138a, 138b come close to each other.

Accompanied by the elastic deformations, the column-pressing parts 143, 143 are displaced inward in the width direction, so that the inner surfaces of the column-pressing parts 143, 143 in the width direction press upward the outer column 13d. That is, since the column-pressing parts 143, 143 are inclined downward toward an inner side in the width direction with respect to the pair of support plate parts 123a, 123b, it is possible to convert the inward displacement (inward force in the width direction) of the column-pressing parts 143, 143 in the width direction into a force of pressing upward the outer column 13d. For example, the inner surfaces of the column-pressing parts 143, 143 in the width direction correspond to the pressing surface defined in the claims, respectively.

When the outer column 13d is displaced upward in this way, the wedge parts 141, 141 are pushed and enlarged (pressed) outward in the width direction. That is, since the inner surfaces of the wedge parts 141, 141 in the width direction are inclined inward in the width direction toward the upper, it is possible to convert the upward displacement (upward force) of the outer column 13d into a force of pushing and enlarging the wedge parts 141, 141 outward in the width direction. Also, when the column-pressing parts 143, 143 are pushed downward by a reactive force from the outer column 13d, the wedge parts 141, 141 are also pressed downward, so that the wedge parts 141, 141 are pushed into the inner parts (the lower in FIG. 46) of the pair of wedge-shaped spaces 152, 152. Thereby, the wedge parts 141, 141 are sandwiched between the outer peripheral surface of the outer column 13d and the pair of support plate parts 123a, 123b.

In this way, in the above state, the outer column 13d is kept at the pair of support plate parts 123a, 123b by the pressing force applied from the wedge parts 141, 141 to the outer column 13d and the pressing force applied from the column-pressing parts 143, 143 to the outer column 13d, so that the positions of the steering wheel 1 in the front and rear direction and in the vertical position are kept at the adjusted positions.

Also, at this time, an inner diameter of the part, to which the pressing force is applied from the wedge parts 141, 141 and the column-pressing parts 143, 143, of the outer column 13d is reduced, so that the inner peripheral surface of the outer column 13d holds the outer peripheral surface of the inner column 14c.

Also, when adjusting the positions of the steering wheel 1 in the front and rear direction and in the vertical position, the adjustment lever 160 is rotated downward (unlock direction) from the state in which the positions of the steering wheel 1 in the front and rear direction and in the vertical position can be kept. Then, the axial dimension of the cam device 161 is contracted, so that the distance in the width direction between the inner surface of the pressing plate 159 in the width direction and the inner surface of the non-drive-side cam 163 in the width direction is increased and the pair of support plate parts 123a, 123b and the pair of clamped parts 138a, 138b return to the free state from the elastically deformed state. Accompanied by this, when the column-pressing parts 143, 143 are respectively displaced outward in the width direction, the state in which the column-pressing parts 143, 143 press upward the outer column 13d is released. Then, when the outer column 13d is displaced downward, the force by which the wedge parts 141, 141 are pushed and enlarged outward in the width direction is also released. Thereby, the state in which the wedge parts 141, 141 are strongly sandwiched between the outer peripheral surface of the outer column 13d and the inner surfaces of the clamped parts 138a, 138b in the width direction is resolved. As a result, the pressing forces (the holding forces) applied from the wedge parts 141, 141 and the column-pressing parts 143, 143 to the outer column 13d are lost, so that the positions of the steering wheel 1 in the front and rear direction and in the vertical position can be adjusted.

According to the steering device of the twenty ninth embodiment configured as described above, in the state where the positions of the steering wheel 1 in the front and rear direction and in the vertical position can be kept at the adjusted positions, the outer peripheral surface of the outer column 13d is kept by the two positions of the wedge parts 141, 141 and the two positions of the column-pressing parts 143, 143 in the circumferential direction. For this reason, it is possible to increase the surface pressures of the contact parts between the outer peripheral surface of the outer column 13d and the wedge parts 141, 141 and column-pressing parts 143, 143. Also, the friction force of the contact parts between the outer peripheral surface of the outer column 13d and the wedge parts 141, 141 are increased based on the wedge effect. As a result, it is possible to improve the holding force of the outer column 13d to the pair of support plate parts 123a, 123b, thereby stably keeping the steering wheel 1 at the adjusted position.

### [Thirtieth (embodiment) arrangement]

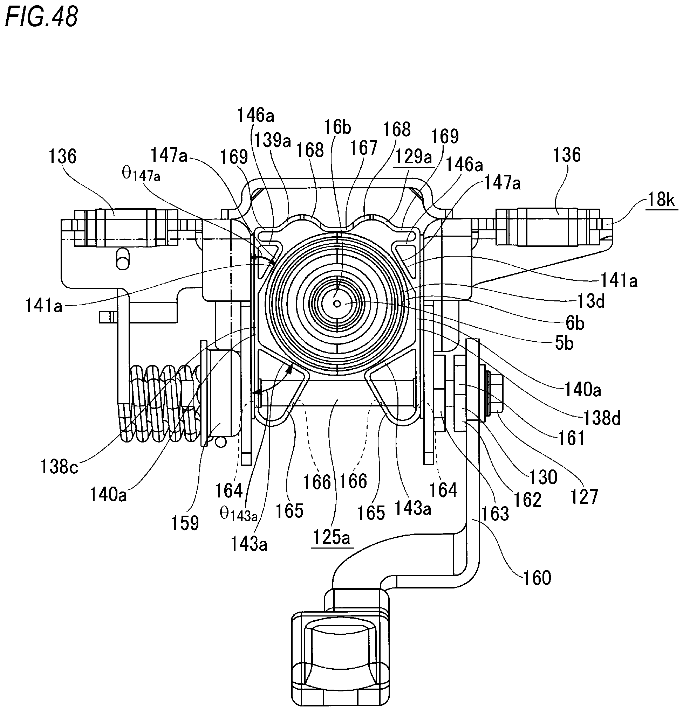

A thirtieth (embodiment) arrangement of the present invention is described with reference to FIG. 48. In a steering device of the thirtieth (embodiment) arrangement, a structure of a distance bracket 129a is different from the distance bracket 129 of the twenty ninth embodiment. Since the other structures of the steering device are similar to the twenty ninth (embodiment) arrangement, the structure of the distance bracket 129a is described in the below.

The distance bracket 129a is made by extruding a metal material, for example, iron-based alloy such as carbon steel, aluminum-based alloy, and the like. The metal plate of the distance bracket 129a is continuous as a whole.

Specifically, the distance bracket 129a has a pair of clamped parts 138c, 138d, and an elasticity continuity part 139a.

The pair of clamped parts 138c, 138d has a main body plate part 140a, a wedge part 141a, and a column-pressing part 143a, respectively.

The main body plate part 140a is a rectangular plate-shaped member that is long in the axial direction (the front and rear direction) of the outer column 13d, as seen from the width direction. The main body plate parts 140a are formed at positions in alignment with each other of portions near lower ends thereof with outer long holes 164 in the front and rear direction formed to penetrate the main body plate parts 140a in the width direction and extending in the axial direction (the front and rear direction) of the outer column 13d.

The wedge part 141a has a substantially right-angled triangular shape (wedge shape) of which a dimension in the width direction increases toward the upper in FIG. 48, which is a shape as seen from the axial direction (the front and rear direction) of the outer column 13d (a sectional shape on the virtual plane perpendicular to the central axis of the outer column 13d).

Specifically, the wedge part 141a is configured by a part near an upper end of the main body plate part 140a, a width plate part 146a, and a tilted pressing plate part 147a.

The width plate part 146a protrudes inward in the width direction from an upper end portion of the main body plate part 140a.

The tilted pressing plate part 147a is tilted outward (a direction of coming close to the main body plate part 140a) in the width direction toward the lower from an inner end edge of the width plate part 146a in the width direction. A lower end edge (an outer end edge in the width direction) of the tilted pressing plate part 147a is continuous to an inner surface of the main body plate part 140a in the width direction. Also in the thirtieth (embodiment) arrangement, an inclination angle θ₁₄₇ₐ of the tilted pressing plate part 147a relative to an inner surface (the inner surface of the main body plate part 140a in the width direction) in the width direction of the support plate part 123a (123b) configuring the support bracket 18k is set to 30°. In the meantime, the inclination angle θ₁₄₇ₐ is set within a range of 1°≤ θ₁₄₇ₐ≤45°.

The column-pressing part 143a is inclined downward toward an inner side in the width direction from a vertically intermediate part of the inner surface of the main body plate part 140a in the width direction, with respect to the main body plate part 140a (the support plate part 123a (123b)). Also, in the thirtieth (embodiment) arrangement, an inner end portion of the column-pressing part 143a in the width direction and a lower end portion of the main body plate part 140a are made to be continuous by a tilted plate part 165. Also, the tilted plate part 165 is formed at a position in alignment with the outer long hole 164 in the front and rear direction of the main body plate part 140a with an inner long hole 166 in the front and rear direction formed to penetrate the tilted plate part 165 in the width direction and extending in the axial direction (the front and rear direction) of the outer column 13d.

Also in the thirtieth (embodiment) arrangement, an inclination angle θ₁₄₃ₐ of the column-pressing part 143a relative to the inner surface of the support plate part 123a (123b) is set to 60°. Therefore, the inclination angle θ₁₄₃ₐ of the column-pressing part 143a relative to the inner surface of the support plate part 123a (123b) in the width direction is greater than the inclination angle θ₁₄₇ₐ of the tilted pressing plate part 147 relative to the inner surface (the inner surface of the main body plate part 140a in the width direction) of the support plate part 123a (123b) in the width direction (θ₁₄₃ₐ>θ₁₄₇ₐ). In the meantime, the inclination angle θ₁₄₃ₐ is set within a range of 15°≤θ₁₄₃ₐ≤85°.

The elasticity continuity part 139a is formed to have a waveform, which is a shape as seen from the axial direction (the front and rear direction) of the outer column 13d (a sectional shape on the virtual plane perpendicular to the central axis of the outer column 13d). Specifically, the elasticity continuity part 139a is configured by a valley part 167 convex downward and formed at a central portion in the width direction, a pair of mountain parts 168, 168 convex upward and provided at outer sides of the valley part 167 in the width direction, and a pair of flat plate parts 169, 169 provided at outer sides of the pair of mountain parts 168, 168 in the width direction. In this way, the bending stiffness of the elasticity continuity part 139 in the width direction is made to be low.

The elasticity continuity part 139 has such a structure that outer end edges of the pair of flat plate parts 169, 169 in the width direction are continuous to upper end edges of both the main body plate parts 140a. Also, the elasticity continuity part 139a has such a structure that a central portion in the width direction of a lower surface of the valley part 167 is fixed (for example, welded) to the upper end portion of the outer peripheral surface of the outer column 13d.

The elasticity continuity part 139 configured as described above is elastically deformed in the width direction (both end portions in the width direction (the pair of flat plate part 169, 169) are moved relative to each other in the vertical direction and in the width direction (the right and left direction) based on a central portion (the valley part 167) in the width direction, thereby permitting the pair of clamped parts 138a, 138b to be displaced relative to the outer column 13d in the vertical direction and in the width direction.

Also, in the case of the steering device of the thirtieth (embodiment) arrangement, the adjustment rod 125a is inserted in the width direction in the long hole 124a for tilt adjustment (refer to FIG. 46) of one support plate part 123a of the pair of support plate parts 123a, 123b, the outer long hole 164 in the front and rear direction of the main body plate part 140a configuring one clamped part 138c of the pair of clamped parts 138c, 138d, the inner long hole 166 in the front and rear direction of the tilted plate part 165 configuring one clamped part 138c, the inner long hole 166 in the front and rear direction of the tilted plate part 165 configuring the other clamped part 138d of the pair of clamped parts 138c, 138d, the outer long hole 164 in the front and rear direction of the main body plate part 140a configuring the other clamped part 138d, and the long hole 124a for tilt adjustment of the other support plate part 123a of the pair of support plate parts 123a, 123b, in corresponding order from one side (left, in FIG. 48) in the width direction.

According to the steering device of the thirtieth (embodiment) arrangement configured as described above, the inner end portions of the column-pressing parts 143a, 143a in the width direction and the lower end portions of the main body plate parts 140a, 140a are made to be continuous by the tilted plate parts 165, 165. For this reason, it is possible to improve the stiffness of the column-pressing parts 143a, 143a in the vertical direction. As a result, when keeping the positions of the steering wheel 1 in the front and rear direction and in the vertical position at the adjusted positions, it is possible to stably increase the upward pressing force to be applied from the column-pressing parts 143a, 143a to the outer column 13d.

The other structures and operations/effects are similar to the first embodiment. Meanwhile, in the thirtieth (embodiment) arrangement, the outer column 13d is not formed with the slit. For this reason, upon the clamping, the outer column 13d is deformed to tighten the inner column 14c. However, also in the thirtieth (embodiment) arrangement, like the twenty ninth (embodiment) arrangement, the outer column 13d may be formed with the slit between the contacts with the column-pressing part 143a and the wedge part 141a provided to the clamped parts 138c, 138d of the distance bracket 129a.

### [Thirty First (embodiment) arrangement]

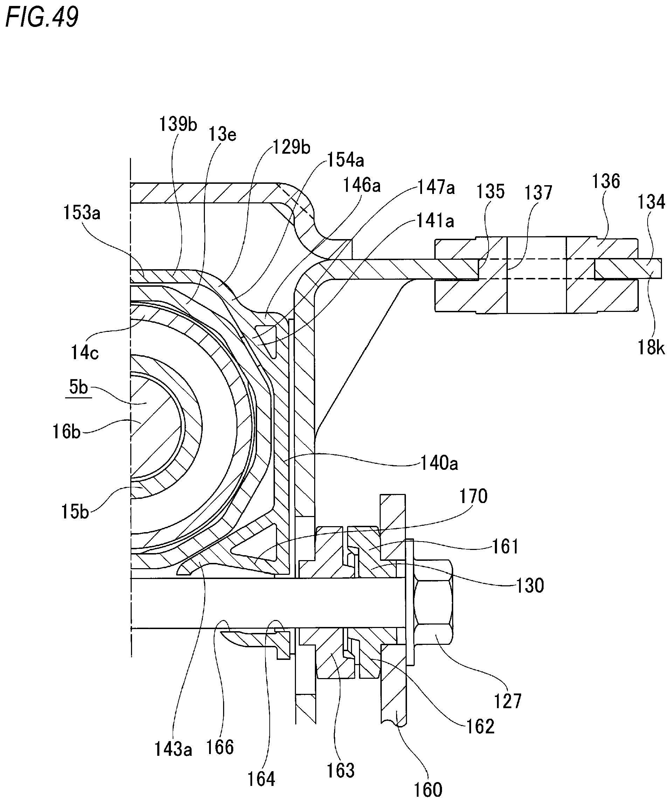

A thirty first (embodiment) arrangement of the present invention is described with reference to FIG. 49. In the case of a steering device of the thirty first (embodiment) arrangement, structures of an outer column 13e and a distance bracket 129b are different from the outer column 13d (refer to FIG. 46) and the distance brackets 129, 129a of the first and second (reference) arrangement. Since the other structures of the steering device are similar to the twenty ninth and thirtieth (embodiment) arrangement, the structures of the outer column 13e and the distance bracket 129b are described in the below.

An outer peripheral surface and an inner peripheral surface of the outer column 13e have a regular dodecagonal shape, which is a sectional shape on a virtual plane perpendicular to a central axis of the outer column 13e, respectively.

Also in the thirty first (embodiment) arrangement, the distance bracket 129b is made by extruding a metal material, for example, iron-based alloy such as carbon steel, aluminum-based alloy, and the like. The metal plate of the distance bracket 129b is continuous as a whole (integrally made as a whole). A basic structure of the distance bracket 129b is similar to the distance bracket 129a of the thirtieth (embodiment) arrangement.

In particular, the distance bracket 129b of the thirty first embodiment has an auxiliary tilted plate part 170 provided to bridge between an intermediate portion in the width direction of a lower surface of the column-pressing part 143a and a portion, which is adjacent to the upper of the outer long hole 164 in the front and rear direction, of the inner surface of the main body plate part 140a in the width direction.

Also, the elasticity continuity part 139b configuring the distance bracket 129b is a plate-shaped member having a substantially U-shaped section of which a lower side is opened. Specifically, the elasticity continuity part 139b is configured by a central plate part 153a and a pair of tilted continuity parts 154a inclined downward toward an outer side in the width direction from both end edges of the central plate part 153a in the width direction.

Particularly, in the thirty first (embodiment) arrangement, each of outer end edges of the pair of tilted continuity part 154a in the width direction is made to be continuous to the upper end edge of the tilted pressing plate part 147a configuring the wedge part 141a.

According to the thirty first (embodiment) arrangement configured as described above, the inner surface (the pressing surface) in the width direction of the tilted pressing plate part 147a configuring the wedge part 141a is made to face one flat surface of 12 flat surfaces configuring an outer peripheral surface of the outer column 13e. On the other hand, the upper surface (the pressing surface) of the column-pressing part 143a is made to face another flat surface of the 12 flat surfaces configuring the outer peripheral surface of the outer column 13e. For this reason, in the state where the positions of the steering wheel 1 (refer to FIG. 52) in the front and rear direction and in the vertical position can be kept at the adjusted positions, the inner surface (the pressing surface) of the tilted pressing plate part 147a in the width direction and the upper surface (the pressing surface) of the column-pressing part 143a are surface-contacted to the outer peripheral surface of the outer column 13e. As a result, it is possible to stop the rotation of the outer column 13e relative to the pair of support plate parts 123a, 123b.

Also, in the thirty first embodiment, the auxiliary tilted plate part 170 is provided between the intermediate portion in the width direction of the lower surface of the column-pressing part 143a and the portion, which is adjacent to the upper of the outer long hole 164 in the front and rear direction, of the inner surface of the main body plate part 140a in the width direction. For this reason, it is possible to increase the stiffness of the column-pressing part 143a in the vertical direction. As a result, when keeping the positions of the steering wheel 1 in the front and rear direction and in the vertical position at the adjusted positions, it is possible to stably increase the upward pressing force to be applied from the column-pressing part 143a to the outer column 13e.

The other structures and operations/effects are similar to the twenty ninth (embodiment) arrangement.

### [Thirty Second (embodiment) arrangement]

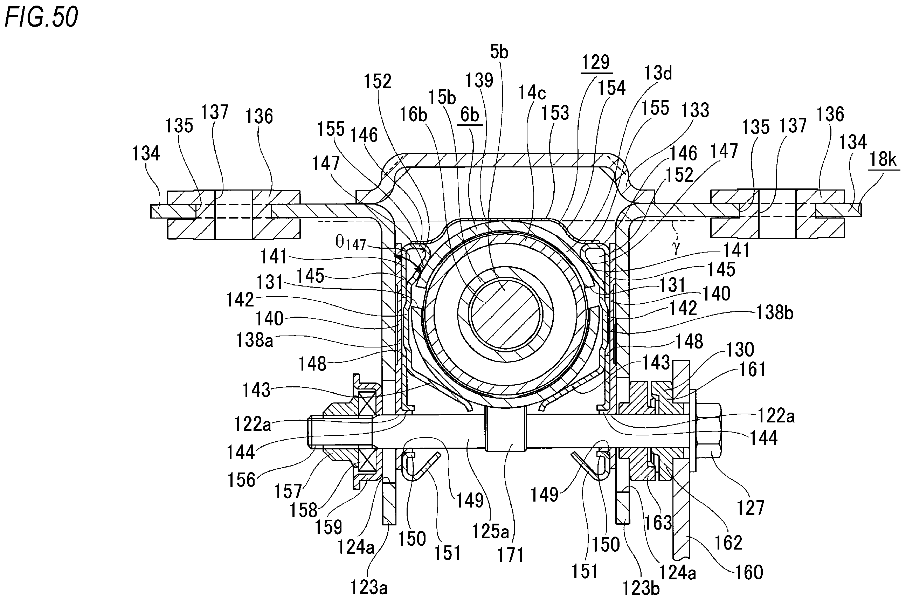

A thirty second (embodiment) arrangement of the present invention is described with reference to FIG. 50. In a steering device for automobile of the thirty second (embodiment) arrangement, the axially intermediate part of the adjustment rod 125a is provided with an eccentric cam 171, which is the column-pressing part, with being rotatable in synchronization with the adjustment rod 125a.

Specifically, the eccentric cam 171 has a non-true circular shape such as a substantially elliptical shape or oval shape, which is a sectional shape on the virtual plane perpendicular to the central axis of the adjustment rod 125a. The eccentric cam 171 is configured to rotate in a predetermined direction together with the adjustment rod 125a from the state in which the positions of the steering wheel 1 (refer to FIG. 52) in the front and rear direction and in the vertical position can be adjusted, thereby pushing (pressing) upward the outer column 13d.

In other words, upon the shifting from the state in which the positions of the steering wheel 1 in the front and rear direction and in the vertical position can be adjusted to the state where the positions can be kept, when the adjustment rod 125a and the eccentric cam 171 are rotated in the predetermined direction, a distance in the vertical direction between the contact part of the eccentric cam 171 and the outer column 13d and the central axis of the adjustment rod 125a increases in association with the rotation.

On the other hand, upon the shifting from the state where the positions of the steering wheel 1 in the front and rear direction and in the vertical position can be kept at the adjusted positions to the state where the positions can be adjusted, when the adjustment rod 125a and the eccentric cam 171 are rotated in an opposite direction to the predetermined direction, the distance in the vertical direction decreases in association with the rotation.

In the thirty second (embodiment) arrangement, when shifting from the state in which the positions of the steering wheel 1 in the front and rear direction and in the vertical position can be adjusted to the state where the positions can be kept, the column-pressing parts 143a, 143a configuring the pair of clamped parts 138c, 138d press upward the outer column 13d, together with the eccentric cam 171. However, the outer column 13d may be pressed upward only by the eccentric cam 171, and the pair of column-pressing parts 143a, 143a may be omitted.

In the meantime, a configuration where the outer column 13d is pressed upward only by the eccentric cam 171 may be adopted.

The other structures and operations/effects are similar to the twenty ninth (embodiment) arrangement.

### [Thirty Third (embodiment) arrangement]

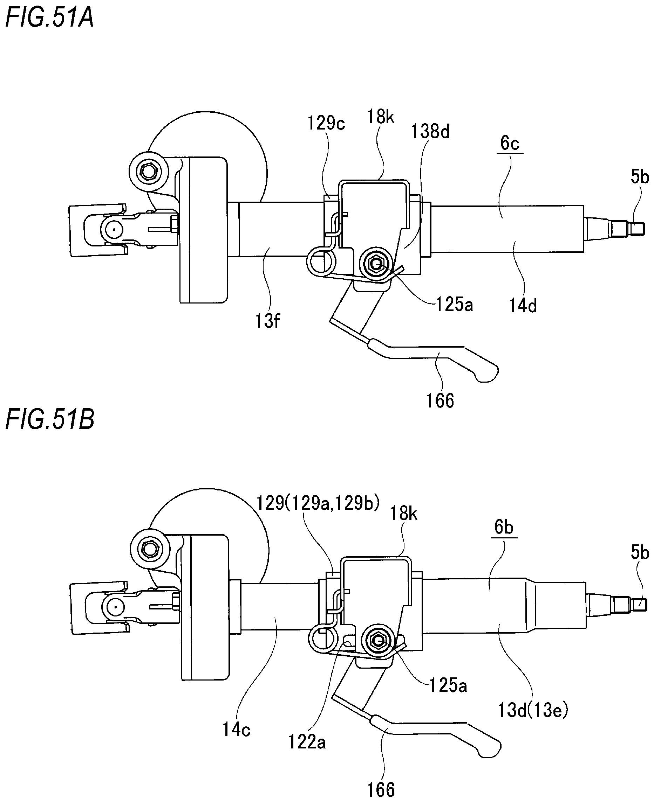

A thirty third (embodiment) arrangement of the present invention is described with reference to FIG. 51.

In the twenty ninth to thirty second (embodiment) arrangements, as the steering column 6b, a steering column as shown in FIG. 51B configured to expand and contract an entire length in a telescopic shape by internally fitting the rear part of the front inner column 14c to the front parts of the rear outer columns 13d, 13e so as to be relatively displaceable in the axial direction is adopted.

On the other hand, in the steering device of the thirty third (embodiment) arrangement, as a steering column 6c, as shown in FIG. 51A, a steering column configured to expand and contract an entire length in a telescopic shape by externally fitting a rear part of a front outer column 13f to a front part of a rear inner column 14d so as to be relatively displaceable in the axial direction is adopted.

In the structure of the thirty third (embodiment) arrangement, as a distance bracket 129c, when a distance bracket having a basic structure similar to the distance bracket 129 of the twenty ninth or thirty second (embodiment) arrangement is adopted, circular holes (not shown) are formed, instead of the long holes 122a, 122a for telescopic adjustment formed in the main body plate parts 140, 140 configuring the pair of clamped parts 138a, 138b (refer to FIG. 46).

Also, in the structure of the thirty third (embodiment) arrangement, as the distance bracket 129c, when a distance bracket having a basic structure similar to the distance brackets 129a, 129b of the thirty or thirty first embodiment is adopted, circular holes (not shown) are formed, instead of the outer long holes 164, 164 in the front and rear direction formed in the main body plate parts 140a, 140a configuring the pair of clamped parts 138c, 138d (refer to FIG. 48) and the inner long holes 166, 166 in the front and rear direction formed in the tilted plate parts 165, 165.

### Industrial Applicability

The present invention can be applied to steering devices having a structure in which only a telescopic mechanism capable of adjusting a position of the steering wheel in the front and rear direction is provided, a structure in which only a tilt mechanism capable of adjusting a position of the steering wheel in the vertical direction is provided, and a structure in which both the telescopic mechanism and the tilt mechanism are provided.

Also, when implementing the present invention, as the distance bracket, a distance bracket vertically symmetrical to the structure of each embodiment can be adopted. When this configuration is adopted, the description of the distance bracket is opposite to each embodiment, with respect to the vertical direction. Also, when implementing the present invention, the structures of the respective embodiments can be appropriately combined.

Also, in the embodiments, the electric assistant device is mounted to the housing provided to the front end portion of the steering column. However, the steering device of the present invention is not limited thereto. That is, the steering device of the present invention may not have the electric assistant device. Also, the steering device of the present invention may have a configuration in which the electric assistant device is mounted to the steering gear unit.

### Description of Reference Numerals

- 1:: steering wheel
- 2:: steering gear unit
- 3:: input shaft
- 4:: tie-rod
- 5, 5a, 5b:: steering shaft
- 6, 6a, 6b, 6c:: steering column
- 7:: universal joint
- 8:: intermediate shaft
- 9:: universal joint
- 10:: electric motor
- 11:: vehicle body
- 12:: pivot
- 13, 13a to 13f:: outer column
- 14, 14a to 14d:: inner column
- 15, 15a, 15b:: outer shaft (outer tube)
- 16, 16a, 16b:: inner shaft
- 17, 17a to 17p, 129, 129a to 129c:: distance bracket
- 18, 18a to 18k:: support bracket
- 19, 19a:: slit
- 20a, 20b:: side plate part
- 21, 21a, 122a:: long hole for telescopic adjust ment
- 22a, 22b, 123a, 123b:: support plate part
- 23, 23a, 124a:: long hole for tilt adjustment
- 24, 24a, 24b, 125a:: adjustment rod
- 25:: nut
- 26, 26a, 160:: adjustment lever
- 27, 27a, 161:: cam device
- 28:: eccentric cam
- 29:: clamp mechanism
- 30:: electric assistant device
- 31:: gear housing
- 32a, 32b:: column side plate
- 33a:: front housing element
- 33b:: intermediate housing element
- 33c:: rear housing element
- 34:: reinforcement part
- 35a, 35b:: upright wall part
- 36a, 36b:: partially cylindrical part
- 37:: thinned part
- 38:: holding concave part
- 39:: upper slit
- 40:: lower slit
- 41:: annular coupling part
- 42a, 42b:: arm part
- 43:: annular part
- 44:: guide part
- 45a to 45d:: attachment plate part
- 46a, 46b, 46c:: support plate part
- 47, 47a:: bridge part
- 48a to 48j:: reinforcement rib
- 49:: attachment hole
- 50, 50a, 50b:: space
- 51, 51a:: solid part
- 52a to 52f:: side plate part
- 53a, 53b:: thickened part
- 54a, 54b:: hanging down plate part
- 55:: insertion hole
- 56a to 56q, 143, 143a:: column-pressing part
- 57a, 57b, 57c, 57d:: concave part
- 58a to 58q:: widened part
- 59, 156:: male screw portion
- 60, 127:: head part
- 61, 157:: nut
- 62, 158:: thrust bearing
- 63, 159:: pressing plate (pressing part)
- 64, 162:: drive-side cam
- 65, 163:: non-drive-side cam (pressing part)
- 66:: first friction plate
- 67:: second friction plate
- 68:: bottom plate part
- 69:: friction plate main body
- 70:: support member
- 71:: long hole
- 72:: cylindrical part
- 73:: thinned part
- 74, 171:: eccentric cam
- 75:: lower coupling part
- 76:: support pipe
- 77a, 77b:: concave part
- 79a to 79f:: spacer member
- 80a to 80h:: other spacer member (spacer member)
- 130:: expansion/contraction device
- 131:: slit
- 133:: attachment plate part
- 134:: joining plate part
- 135:: cutout
- 136:: capsule
- 137:: through-hole
- 138a, 138b, 138c, 138d:: clamped part (side plate part)
- 139, 139a, 139b:: elasticity continuity part
- 140, 140a:: main body plate part
- 141, 141a:: wedge part (widened part)
- 142:: vertically continuous plate part
- 144:: main body-side collar portion
- 145:: fixed plate part
- 146, 146a:: width plate part
- 147, 147a:: tilted pressing plate part
- 148:: fixed plate part through-hole
- 149:: long hole in front and rear direction
- 150:: fixed plate part-side collar portion
- 151:: tilted folding-back part
- 152:: wedge-shaped space
- 153, 153a:: central plate part
- 154, 154a:: tilted continuity part
- 155:: joining part
- 164:: outer long hole in front and rear direction
- 165:: tilted plate part
- 166:: inner long hole in front and rear direction
- 167:: valley part
- 168:: mountain part
- 169:: flat plate part
- 170:: auxiliary tilted plate part

## Claims

1. A steering device comprising:
a steering column (6a, 6b, 6c) that rotatably supports a steering shaft (5a, 5b) therein;
a support bracket (18a-18k) that is supported and fixed to a vehicle body and that has a pair of support plate parts (123a, 123b, 46a, 46b, 46c) arranged at both sides of the steering column (6a, 6b, 6c) in a width direction;
a distance bracket (17a-17p, 129, 129a, 129b, 129c) that has a pair of side plate parts (20a, 20b, 52a-52f) arranged between an outer peripheral surface of the steering column (6a, 6b, 6c) and inner surfaces of the pair of support plate parts (123a, 123b, 46a, 46b, 46c) in the width direction;
an adjustment rod (24a, 24b, 125a) that is provided with being inserted in a first through-hole provided in at least one of the pair of support plate parts and that is provided with being inserted in a second through-hole (55) provided in at least one of the pair of side plate parts (20a, 20b, 52a-52f), respectively in the width direction;
a pair of pressing parts (63, 159) that is provided at both end portions of the adjustment rod (24a, 24b, 125a) and that protrudes from outer surfaces of the pair of support plate parts (123a, 123b, 46a, 46b, 46c);
an expansion/contraction device (27a, 161) that expands and contracts an interval between the pair of pressing parts (63, 159); and
a column-pressing part (56a-56q, 143, 143a) that presses the steering column (6a, 6b, 6c) in a direction of getting away from the adjustment rod (24a, 24b, 125a) with respect to a vertical direction, in association with rotation of the adjustment rod (24a, 24b, 125a),
wherein at least one of the pair of side plate parts (20a, 20b, 52a-52f) is provided with a widened part (58a-58q, 141, 141a) which protrudes inward in the width direction and which is at an opposite side to the adjustment rod (20a, 20b, 52a-52f) in the vertical direction with a central axis (O) of the steering column (6a, 6b, 6c) being interposed between the widened part (58a-58q, 141, 141a) and the adjustment rod (24a, 24b, 125a), and an inner surface of the widened part (58a-58q, 141, 141a) in the width direction is inclined linearly or curvedly inward in the width direction as being farther from the adjustment rod (24a, 24b, 125a) in the vertical direction,
wherein at least one of the pair of side plate parts (20a, 20b, 52a-52f) is provided with the column-pressing part (56a-56q, 143, 143a) which protrudes inward in the width direction at a part between the central axis (O) of the steering column (6a, 6b, 6c) and the second through-hole (55) in the vertical direction,
wherein an inner surface of the column-pressing part (56a-56q, 143, 143a) in the width direction is inclined outward in the width direction as being farther from the adjustment rod (24a, 24b, 125a) in the vertical direction,
**characterized in that**
an inclination angle of the inner surface of the widened part (58a-58q, 141, 141a) in the width direction is different from an inclination angle of the inner surface of the column-pressing part (56a-56q, 143, 143a) in the width direction, based on a virtual plane perpendicular to a central axis of the adjustment rod (24a, 24b, 125a).

2. The steering device according to claim 1, wherein the steering column (6a, 6b, 6c) comprises an outer column (13a-13f) and an inner column (14a-14d) fitted to an inner diameter-side of the outer column (13a-13f) to be axially displaceable, and
wherein the distance bracket (17a-17p, 129, 129a, 129b, 129c) is provided integrally with a part of the outer column (13a-13f), and the inner column (14a-14d) is sandwiched between the pair of side plate parts (20a, 20b, 52a-52f) in the width direction.

3. The steering device according to claim 2, wherein the distance bracket (17a-17p, 129, 129a, 129b, 129c) is provided with an upper slit (39) and a lower slit (40) between the pair of side plate parts (20a, 20b, 52a-52f), the upper and lower slits opening with respect to upper and lower parts of the inner column (14a-14d).

4. The steering device according to claim 3, wherein axial lengths of the upper (39) and lower (40) slits are longer than axial lengths of the pair of support plate parts (123a, 123b, 46a, 46b, 46c) of the support bracket (18a-18k).

5. The steering device according to claim 1 or 2, wherein an elasticity continuity part (139, 139a, 139b) is formed to be elastically deformable in the width direction and to connect end portions of the pair of side plate parts (20a, 20b, 52a-52f) with being displaceable in the vertical direction and in the width direction, the end portions being opposite to the adjustment rod (24a, 24b, 125a) in the vertical direction with respect to the central axis (O) of the steering column (6a, 6b, 6c).

6. The steering device according to any one of claims 1 to 5, wherein the pair of side plate parts (20a, 20b, 52a-52f) is provided with the widened part (58a-58q, 141, 141a), respectively, and an interval between inner surfaces of the widened parts (58a-58q, 141, 141a) in the width direction is smaller as being farther from the adjustment rod (24a, 24b, 125a).

7. The steering device according to claim 6, wherein inclination angles of the inner surfaces of the widened parts (58a-58q, 141, 141a) are different from each other in the width direction based on a virtual plane perpendicular to a central axis of the adjustment rod (24a, 24b, 125a).

8. The steering device according to any one of claims 1 to 7, wherein the column-pressing part (56a-56q, 143, 143a) is provided below the central axis (O) of the steering column (6a, 6b, 6c) with respect to the vertical direction, and the widened part is provided above the central axis (O) of the steering column (6a, 6b, 6c) with respect to the vertical direction.

9. The steering device according to any one of claims 1 to 8, wherein inclination angles of the inner surfaces of the widened parts (58a-58q, 141, 141a) are different from each other in the width direction based on a virtual plane perpendicular to a central axis of the adjustment rod (24a, 24b, 125a).

10. The steering device according to any one of claims 1 to 8, wherein the column-pressing part is an eccentric cam (74, 171) which is provided around the adjustment rod (24a, 24b, 125a).

11. The steering device according to claim 2, wherein the inner column (14a-14d) is formed to have a polygonal tube shape.

12. The steering device according to claim 2, wherein the outer column (13a-13f) is formed integrally with a gear housing (31) configuring an electric assistant device (30) arranged in front of the outer column (13a-13f).

13. The steering device according to any one of claims 1 to 12, wherein the support bracket (18a-18k) is provided with a pair of attachment plate parts (45a-45d) bent outward in the width direction from upper end portions of the pair of support plate parts (123a, 123b, 46a, 46b, 46c), and
a reinforcement rib (48a-48j) is provided between at least one of the pair of attachment plate parts (45a-45d) and the corresponding support plate part (54a, 54b) hanging down from an inner end portion of the at least one attachment plate part (45a-45d) in the width direction.

14. The steering device according to any one of claims 1 to 13, wherein a spacer member (79a-79f) is arranged in at least one place of a place between facing surfaces of the pair of support plate parts (123a, 123b, 46a, 46b, 46c) and the pair of side plate parts (20a, 20b, 52a-52f) of the distance bracket (17a-17p, 129, 129a, 129b, 129c) and a place between facing surfaces of the steering column (6a, 6b, 6c) and the pair of side plate parts (20a, 20b, 52a-52f).

## Patentansprüche

1. Lenkvorrichtung, die Folgendes umfasst:
eine Lenksäule (6a, 6b, 6c), die eine Lenkwelle (5a, 5b) in dieser drehbar aufgenommen aufweist;
einen Haltebügel (18a-18k), der von einem Fahrzeugkörper gehalten ist und an diesem befestigt ist und der ein Paar Halteplattenelemente (123a, 123b, 46a, 46b, 46c) aufweist, die an beiden Seiten der Lenksäule (6a, 6b, 6c) in Breitenrichtung angeordnet sind;
einen Abstandsbügel (17a-17p, 129, 129a, 129b, 129c), der ein Paar von Seitenplattenelementen (20a, 20b, 52a-52f) aufweist, die zwischen einer Außenumfangsfläche der Lenksäule (6a, 6b, 6c) und Innenflächen des Paars von Halteplattenelementen (123a, 123b, 46a, 46b, 46c) in Breitenrichtung angeordnet sind;
eine Stellstange (24a, 24b, 125a), die jeweils in Breitenrichtung in ein erstes Durchgangsloch eingebracht ist, das in zumindest einem von dem Paar von Halteplattenelementen bereitgestellt ist, und in ein zweites Durchgangsloch (55) eingebracht ist, das in zumindest einem von dem Paar von Seitenplattenelementen (20a, 20b, 52a-52f) bereitgestellt ist;
ein Paar von Druckstücken (63, 159), das an beiden Endabschnitten der Stellstange (24a, 24b, 125a) bereitgestellt ist und das von Außenflächen des Paars von Halteplattenelementen (123a, 123b, 46a, 46b, 46c) vorsteht;
eine Expansions-/Kontraktionsvorrichtung (27a, 161), die einen Abstand zwischen dem Paar von Druckstücken (63, 159) erweitert und verkleinert; und
ein Säulendruckstück (56a-56q, 143, 143a), das die Lenksäule (6a, 6b, 6c) zusammenwirkend mit der Drehung der Stellstange (24a, 24b, 125a) bezogen auf eine vertikale Richtung in eine Richtung von der Stellstange (24a, 24b, 125a) weg drückt,
wobei zumindest eines von dem Paar von Seitenplattenelementen (20a, 20b, 52a-52f) mit einem erweiterten Teil (58a-58q, 141, 141a) bereitgestellt ist, der in Breitenrichtung nach innen vorsteht und der an einer der Stellstange (20a, 20b, 52a-52f) in vertikaler Richtung entgegengesetzten Seite angeordnet ist, wobei eine Mittelachse (O) der Lenksäule (6a, 6b, 6c) zwischen dem erweiterten Teil (58a-58q, 141, 141a) und der Stellstange (24a, 24b, 125a) angeordnet ist, und eine Innenfläche des erweiterten Teils (58a-58q, 141, 141a) in Breitenrichtung linear oder gekrümmt nach innen geneigt ist, um in vertikaler Richtung weiter von der Stellstange (24a, 24b, 125a) weg zu sein,
wobei zumindest eines von dem Paar von Seitenplattenelementen (20a, 20b, 52a-52f) mit dem Säulendruckstück (56a-56q, 143, 143a) bereitgestellt ist, das in Breitenrichtung an einem Teil zwischen der Mittelachse (O) der Lenksäule (6a, 6b, 6c) und dem zweiten Durchgangsloch (55) in vertikaler Richtung nach innen vorsteht,
wobei eine Innenfläche des Säulendruckstücks (56a-56q, 143, 143a) in Breitenrichtung nach außen in Breitenrichtung geneigt ist, um in vertikaler Richtung weiter von der Stellstange (24a, 24b, 125a) weg zu sein,
**dadurch gekennzeichnet, dass**:
sich ein Neigungswinkel der Innenfläche des erweiterten Teils (58a-58q, 141, 141a) in Breitenrichtung von einem Neigungswinkel der Innenfläche des Säulendruckstücks (56a-56q, 143, 143a) in Breitenrichtung, bezogen auf eine virtuelle Ebene, die normal auf eine Mittelachse der Stellstange (24a, 24b, 125a) steht, unterscheidet.

2. Lenkvorrichtung nach Anspruch 1, wobei die Lenksäule (6a, 6b, 6c) eine Außensäule (13a-13f) und eine Innensäule (14a-14d) umfasst, die an einer Innendurchmesserseite der Außensäule (13a-13f) angebracht ist, um axial verschiebbar zu sein, und
wobei der Abstandsbügel (17a-17p, 129, 129a, 129b, 129c) einstückig mit einem Teil der Außensäule (13a-13f) bereitgestellt ist und die Innensäule (14a-14d) zwischen dem Paar von Seitenplattenelementen (20a, 20b, 52-52f) in Breitenrichtung sandwichartig angeordnet ist.

3. Lenkvorrichtung nach Anspruch 2, wobei der Abstandsbügel (17a-17p, 129, 129a, 129b, 129c) mit einem oberen Schlitz (39) und einem unteren Schlitz (40) zwischen dem Paar von Seitenplattenelementen (20a, 20b, 52a-52f) bereitgestellt ist, wobei sich der obere und der untere Schlitz in Bezug auf einen oberen und einen unteren Teil der Innensäule (14a-14d) öffnen.

4. Lenkvorrichtung nach Anspruch 3, wobei Achsenlängen des oberen (39) und des unteren (40) Schlitzes länger sind als Achsenlängen des Paars von Trägerplattenelementen (123a, 123b, 46a, 46b, 46c) des Haltebügels (18-18k).

5. Lenkvorrichtung nach Anspruch 1 oder Anspruch 2, wobei ein Elastizitätskontinuitätsteil (139, 139a, 139b) ausgebildet ist, um in Breitenrichtung elastisch verformbar zu sein und um Endabschnitte des Paars von Seitenplattenelementen (20a, 20b, 52a-52f) zu verbinden, während diese in vertikaler Richtung und in Breitenrichtung verschiebbar sind, wobei die Endabschnitte der Stellstange (24a, 24b, 125a) in vertikale Richtung, bezogen auf die Mittelachse (O) der Lenksäule (6a, 6b, 6c), gegenüberliegen.

6. Lenkvorrichtung nach einem der Ansprüche 1 bis 5, wobei das Paar von Seitenplattenelementen (20a, 20b, 52a-52f) jeweils mit dem erweiterten Teil (58a-58q, 141, 141a) bereitgestellt ist, und ein Abstand zwischen Innenflächen der erweiterten Teile (58a-58q, 141, 141a) in Breitenrichtung kleiner ist, je weiter er von der Stellstange (24a, 24b, 125a) entfernt liegt.

7. Lenkvorrichtung nach Anspruch 6, wobei sich Neigungswinkel der Innenflächen der erweiterten Teile (58a-58q, 141, 141a) in Breitenrichtung, bezogen auf eine virtuelle Ebene, die normal auf eine Mittelachse der Stellstange (24a, 24b, 125a) steht, voneinander unterscheiden.

8. Lenkvorrichtung nach einem der Ansprüche 1 bis 7, wobei das Säulendruckstück (56a-56q, 143, 143a) bezogen auf die vertikale Richtung unterhalb der Mittelachse (O) der Lenksäule (6a, 6b, 6c) bereitgestellt ist und der erweiterte Teil bezogen auf die vertikale Richtung oberhalb der Mittelachse (O) der Lenksäule (6a, 6b, 6c) bereitgestellt ist.

9. Lenkvorrichtung nach einem der Ansprüche 1 bis 8, wobei sich Neigungswinkel der Innenflächen der erweiterten Teile (58a-58q, 141, 141a) in Breitenrichtung, bezogen auf eine virtuelle Ebene, die normal auf eine Mittelachse der Stellstange (24a, 24b, 125a) steht, voneinander unterscheiden.

10. Lenkvorrichtung nach einem der Ansprüche 1 bis 8, wobei das Säulendruckstück eine Exzenternocke (74, 171) ist, die rund um die Stellstange (24a, 24b, 125a) bereitgestellt ist.

11. Lenkvorrichtung nach Anspruch 2, wobei die Innensäule (14a-14d) in einer polygonalen Rohrform ausgebildet ist.

12. Lenkvorrichtung nach Anspruch 2, wobei die Außensäule (13a-13f) einstückig mit einem Getriebegehäuse (31) ausgebildet ist, das eine elektrische Assistenzvorrichtung (30) konfiguriert, die vor der Außensäule (13a-13f) angeordnet ist.

13. Lenkvorrichtung nach einem der Ansprüche 1 bis 12, wobei der Haltebügel (18a-18k) mit einem Paar von Befestigungsplattenelementen (45a-45d) bereitgestellt ist, die in Breitenrichtung von oberen Endabschnitten des Paars von Trägerplattenelementen (123a, 123b, 46a, 46b, 46c) ausgehend nach außen gebogen sind, und
wobei eine Verstärkungsrippe (48a-48j) zwischen zumindest einem von dem Paar von Befestigungsplattenlementen (45a-45d) und dem entsprechenden Trägerplattenelement (54a, 54b) bereitgestellt ist, der von einem Innenendabschnitt des zumindest einen Befestigungsplattenelements (45a-45d) in Breitenrichtung herabhängt.

14. Lenkvorrichtung nach einem der Ansprüche 1 bis 13, wobei ein Abstandselement (79a-79f) an zumindest einer Stelle aus einer Stelle zwischen einander zugewandten Oberflächen des Paars von Trägerplattenelementen (123a, 123b, 46a, 46b, 46c) und des Paars von Seitenplattenelementen (20a, 20b, 52a-52f) des Abstandsbügels (17a-17p, 129, 129a, 129b, 129c) und einer Stelle zwischen einander zugewandten Oberflächen der Lenksäule (6a, 6b, 6c) und des Paars von Seitenplattenelementen (20a, 20b, 52a-52f) angeordnet ist.

## Revendications

1. Dispositif de direction comprenant :
une colonne de direction (6a, 6b, 6c) qui supporte, en rotation, un arbre de direction (5a, 5b) dans cette dernière ;
une patte de support (18a-18k) qui est supportée et fixée à un corps de véhicule et qui a une paire de parties de plaque de support (123a, 123b, 46a, 46b, 46c) agencées des deux côtés de la colonne de direction (6a, 6b, 6c) dans une direction de largeur ;
une patte d'éloignement (17a-17p, 129, 129a, 129b, 129c) qui a une paire de parties de plaque latérales (20a, 20b, 52a-52f) agencées entre une surface périphérique externe de la colonne de direction (6a, 6b, 6c) et des surfaces internes de la paire de parties de plaque de support (123a, 123b, 46a, 46b, 46c) dans la direction de largeur ;
une tige d'ajustement (24a, 24b, 125a) qui est prévue en étant insérée dans un premier trou débouchant prévu dans au moins l'une de la paire de parties de plaque de support et qui est prévue en étant insérée dans un second trou débouchant (55) prévu dans au moins l'une de la paire de parties de plaque latérales (20a, 20b, 52a-52f) respectivement dans la direction de largeur ;
une paire de parties de pression (63, 159) qui est prévue au niveau de deux parties d'extrémité de la tige d'ajustement (24a, 24b, 125a) et qui fait saillie des surfaces externes de la paire de parties de plaque de support (123a, 123b, 46a, 46b, 46c) ;
un dispositif d'expansion/contraction (27a, 161) qui fait subir une expansion à et contracte un intervalle entre la paire de parties de pression (63, 159) ; et
une partie de pression de colonne (56a-56q, 143, 143a) qui comprime la colonne de direction (6a, 6b, 6c) dans une direction s'éloignant de la tige d'ajustement (24a, 24b, 125a) par rapport à une direction verticale, en association avec la rotation de la tige d'ajustement (24a, 24b, 125a),
dans lequel au moins l'une de la paire de parties de plaque latérales (20a, 20b, 52a-52f) est prévue avec une partie élargie (58a-58q, 141, 141a) qui fait saillie vers l'intérieur dans la direction de largeur et qui est, au niveau d'un côté opposé à la tige d'ajustement (20a, 20b, 52a-52f) dans la direction verticale avec un axe central (O) de la colonne de direction (6a, 6b, 6c), intercalée entre la partie élargie (58a-58q, 141, 141a) et la tige d'ajustement (24a, 24b, 125a), et une surface interne de la partie élargie (58a-58q, 141, 141a) dans la direction de largeur est inclinée de manière linéaire ou incurvée vers l'intérieur dans la direction de largeur comme étant plus éloignée de la tige d'ajustement (24a, 24b, 125a) dans la direction verticale,
dans lequel au moins l'une de la paire de parties de plaque latérales (20a, 20b, 52a-52f) est prévue avec la partie de pression de colonne (56a-56q, 143, 143a) qui fait saillie vers l'intérieur dans la direction de largeur au niveau d'une partie entre l'axe central (O) de la colonne de direction (6a, 6b, 6c) et le second trou débouchant (55) dans la direction verticale,
dans lequel une surface interne de la partie de pression de colonne (56a-56q, 143, 143a) dans la direction de largeur est inclinée vers l'extérieur dans la direction de largeur comme étant plus éloignée de la tige d'ajustement (24a, 24b, 125a) dans la direction verticale,
**caractérisé en ce que** :
un angle d'inclinaison de la surface interne de la partie élargie (58a-58q, 141, 141a) dans la direction de largeur est différent d'un angle d'inclinaison de la surface interne de la partie de pression de colonne (56a-56q, 143, 143a) dans la direction de largeur, sur la base d'un plan virtuel perpendiculaire à un axe central de la tige d'ajustement (24a, 24b, 125a).

2. Dispositif de direction selon la revendication 1, dans lequel la colonne de direction (6a, 6b, 6c) comprend une colonne externe (13a-13f) et une colonne interne (14a-14d) montée sur un côté de diamètre interne de la colonne externe (13a-13f) pour être axialement déplaçable, et
dans lequel la patte d'éloignement (17a-17p, 129, 129a, 129b, 129c) est prévue de manière solidaire avec une partie de la colonne externe (13a-13f) et la colonne interne (14a-14d) est prise en sandwich entre la paire de parties de plaques latérales (20a, 20b, 52a-52f) dans la direction de largeur.

3. Dispositif de direction selon la revendication 2, dans lequel la patte d'éloignement (17a-17p, 129, 129a, 129b, 129c) est prévue avec une fente supérieure (39) et une fente inférieure (40) entre la paire de parties de plaque latérales (20a, 20b, 52a-52f), les fentes supérieure et inférieure s'ouvrant par rapport aux parties supérieure et inférieure de la colonne interne (14a-14d).

4. Dispositif de direction selon la revendication 3, dans lequel les longueurs axiales des fentes supérieure (39) et inférieure (40) sont plus longues que les longueurs axiales de la paire de parties de plaque de support (123a, 123b, 46a, 46b, 46c) de la patte de support (18a-18k).

5. Dispositif de direction selon la revendication 1 ou 2, dans lequel une partie de continuité d'élasticité (139, 139a, 139b) est formée pour être élastiquement déformable dans la direction de largeur et pour raccorder les parties d'extrémité de la paire de parties de plaque latérales (20a, 20b, 52a-52f) en étant déplaçable dans la direction verticale et dans la direction de largeur, les parties d'extrémité étant opposées à la tige d'ajustement (24a, 24b, 125a) dans la direction verticale par rapport à l'axe central (O) de la colonne de direction (6a, 6b, 6c).

6. Dispositif de direction selon l'une quelconque des revendications 1 à 5, dans lequel la paire de parties de plaque latérales (20a, 20b, 52a-52f) est prévue avec la partie élargie (58a-58q, 141, 141a) respectivement, et un intervalle entre des surfaces internes des parties élargies (58a-58q, 141, 141a) dans la direction de largeur est inférieur lorsqu'il est éloigné de la tige d'ajustement (24a, 24b, 125a).

7. Dispositif de direction selon la revendication 6, dans lequel les angles d'inclinaison des surfaces internes des parties élargies (58a-58q, 141, 141a) sont différents les uns des autres dans la direction de largeur sur la base d'un plan virtuel perpendiculaire à un axe central de la tige d'ajustement (24a, 24b, 125a).

8. Dispositif de direction selon l'une quelconque des revendications 1 à 7, dans lequel la partie de pression de colonne (56a-56q, 143, 143a) est prévue au-dessous de l'axe central (O) de la colonne de direction (6a, 6b, 6c) par rapport à la direction verticale, et la partie élargie est prévue au-dessus de l'axe central (O) de la colonne de direction (6a, 6b, 6c) par rapport à la direction verticale.

9. Dispositif de direction selon l'une quelconque des revendications 1 à 8, dans lequel les angles d'inclinaison des surfaces internes des parties élargies (58a-58q, 141, 141a) sont différents les uns des autres dans la direction de largeur sur la base d'un plan virtuel perpendiculaire à un axe central de la tige d'ajustement (24a, 24b, 125a).

10. Dispositif de direction selon l'une quelconque des revendications 1 à 8, dans lequel la partie de pression de colonne est une came excentrique (74, 171) qui est prévue autour de la tige d'ajustement (24a, 24b, 125a).

11. Dispositif de direction selon la revendication 2, dans lequel la colonne interne (14a-14d) est formée pour avoir une forme de tube polygonale.

12. Dispositif de direction selon la revendication 2, dans lequel la colonne externe (13a-13f) est formée de manière solidaire avec un boîtier d'engrenage (31) configurant un dispositif d'assistance électrique (30) agencé en face de la colonne externe (13a-13f).

13. Dispositif de direction selon l'une quelconque des revendications 1 à 12, dans lequel la patte de support (18a-18k) est prévue avec une paire de parties de plaque de fixation (45a-45d) pliées vers l'extérieur dans la direction de largeur à partir des parties d'extrémité supérieure de la paire de parties de plaque de support (123a, 123b, 46a, 46b, 46c), et
une nervure de renforcement (48a-48j) est prévue entre au moins l'une de la paire de parties de plaque de fixation (45a-45d) et la partie de plaque de support (54a-54b) correspondante en suspension sur une partie d'extrémité interne de la au moins une partie de plaque de fixation (45a-45d) dans la direction de largeur.

14. Dispositif de direction selon l'une quelconque des revendications 1 à 13, dans lequel un élément d'espacement (79a-79f) est agencé dans au moins un endroit d'un endroit entre les surfaces en vis-à-vis de la paire de parties de plaque de support (123a, 123b, 46a, 46b, 46c) et de la paire de parties de plaque latérales (20a, 20b, 52a-52f) de la patte d'éloignement (17a-17p, 129, 129a, 129b, 129c) et un endroit entre des surfaces en vis-à-vis de la colonne de direction (6a, 6b, 6c) et de la paire de parties de plaque latérales (20a, 20b, 52a-52f).
